(19) Europäisches Patentamt
European Patent Office
Office européen des brevets

(11) **EP 4 761 372 A1**

(12) **EUROPEAN PATENT APPLICATION**
published in accordance with Art. 153(4) EPC

(43) Date of publication:
**17.06.2026 Bulletin 2026/25**

(21) Application number: **24852322.7**

(22) Date of filing: **07.08.2024**

(51) International Patent Classification (IPC):
***H04W 48/14*** *(2009.01)* ***H04W 48/10*** *(2009.01)*
***H04W 72/0453*** *(2023.01)* ***H04W 52/02*** *(2009.01)*
***H04W 24/08*** *(2009.01)* ***H04B 17/318*** *(2015.01)*
***H04W 8/22*** *(2009.01)* ***H04W 72/02*** *(2009.01)*
***H04B 17/373*** *(2015.01)*

(52) Cooperative Patent Classification (CPC):
**H04B 17/318; H04B 17/373; H04W 8/22; H04W 24/08; H04W 48/10; H04W 48/14; H04W 52/02; H04W 72/02; H04W 72/0453**

(86) International application number:
**PCT/KR2024/011666**

(87) International publication number:
**WO 2025/033968 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.08.2023 KR 20230104445**

(71) Applicant: **LG Electronics Inc.**
**Yeongdeungpo-gu**
**Seoul 07336 (KR)**

(72) Inventors:
- **KIM, Seonwook**
  **Seoul 06772 (KR)**
- **LEE, Youngdae**
  **Seoul 06772 (KR)**
- **YANG, Suckchel**
  **Seoul 06772 (KR)**
- **MYUNG, Sechang**
  **Seoul 06772 (KR)**

(74) Representative: **Plasseraud IP**
**104 Rue de Richelieu**
**CS92104**
**75080 Paris Cedex 02 (FR)**

# (54) APPARATUS AND METHOD FOR OPERATING SYNCHRONIZATION SIGNAL AND PHYSICAL BROADCAST CHANNEL BLOCK, AND SYSTEM INFORMATION IN ON-DEMAND MANNER IN WIRELESS COMMUNICATION SYSTEM

(57) A method and an apparatus for receiving system information in a wireless communication system are provided. A method performed by a UE comprises: receiving configuration information related to a system information block 1 (SIB1) request on a first cell; and monitoring a control channel to detect control information related to the SIB1 on a second cell based on the configuration information. The configuration information comprises window duration information related to a number of slots in which the UE monitors the control channel to detect the control information.

FIG. 24

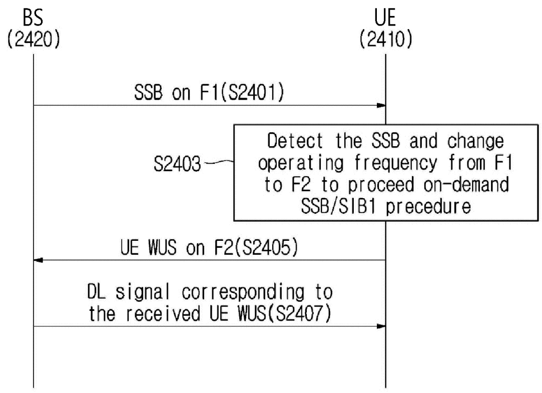


EP 4 761 372 A1

## Description

### TECHNICAL FIELD

The following description relates to a wireless communication system, and more particularly, to an apparatus and method for operating an SSB (synchronization signal/physical broadcast channel block) and system information in an on-demand manner in a wireless communication system.

### BACKGROUND ART

The 5G mobile communications system, the successor to long-term evolution (LTE), is a new, clean-slate mobile communications system characterized by high performance, low latency, and high availability. 5G NR may utilize all available spectrum resources, from low-frequency bands below 1 GHz, to mid-frequency bands between 1 GHz and 10 GHz, and to high-frequency bands (e.g., millimeter wave) above 24 GHz. 6G systems are being developed based on the underlying technologies of 5G mobile communications.

The 6G system aims to achieve (i) extremely high data rates per device, (ii) a very large number of connected devices, (iii) global connectivity, (iv) ultra-low latency, (v) reduced energy consumption for battery-free Internet of Things (IoT) devices, (vi) ultra-reliable connectivity, and (vii) connected intelligence with machine learning capability. The vision of the 6G system may include four aspects: intelligent connectivity, deep connectivity, holographic connectivity, and ubiquitous connectivity.

### DISCLOSURE

### TECHNICAL PROBLEM

The present disclosure is directed to an apparatus and method for effectively operating an SSB (synchronization signal/physical broadcast channel block) and system information in an on-demand manner in a wireless communication system.

The present disclosure relates to a device and a method for effectively supporting a network energy saving (NES) operation of a base station in a wireless communication system.

The present disclosure is directed to an apparatus and method for providing configuration information related to a signal for requesting transmission of an SSB or system information in a wireless communication system.

The present disclosure is directed to an apparatus and method for providing configuration information related to a signal provided corresponding to a signal for requesting transmission of an SSB or system information in a wireless communication system.

The present disclosure is directed to an apparatus and method for selecting a frequency band for transmitting a signal for requesting transmission of an SSB or system information in a wireless communication system.

The present disclosure is directed to an apparatus and method for providing information on a criterion for selecting a frequency band for transmitting a signal for requesting transmission of an SSB or system information in a wireless communication system.

The present disclosure is directed to an apparatus and method for requesting transmission of an SSB or system information in an SSB-less cell in a wireless communication system.

The present disclosure is directed to an apparatus and method for indicating a target of the request between an SSB and system information in a wireless communication system.

The present disclosure is directed to an apparatus and method for requesting transmission of an SSB or system information through stepwise signaling in a wireless communication system.

The present disclosure is directed to an apparatus and method for determining a time duration in which reception of an SSB or system information transmitted in response to a request is expected in a wireless communication system.

The technical objectives to be achieved in the present disclosure are not limited to the matters mentioned above, and other technical tasks not mentioned may be considered by those skilled in the art in the technical field to which the technical configuration of the present disclosure is applied, from the embodiments of the present disclosure to be described below.

### TECHNICAL SOLUTION

In one example of the present disclosure, a method performed by a UE in a wireless communication system may comprise: receiving a first synchronization signal in a first frequency band, receiving second system information in the first frequency band, receiving configuration information related to a second frequency band based on the first synchronization signal and the first system information, transmitting a first signal requesting a second synchronization signal or second system information in the second frequency band, and receiving a second signal comprising the second synchronization signal or the second system information in the second frequency band. The configuration information comprises at least one of information related to a resource for transmitting the first signal or information related to the second signal.

In one example of the present disclosure, a method performed by a base station in a wireless communication system may comprise:: transmitting a first synchronization signal in a first frequency band, transmitting second system information in the first frequency band, transmitting configuration information related to a second frequency band based on the first synchronization signal and the first system information, receiving a first signal requesting a second synchronization signal or second system information in the second frequency band, and transmitting a second signal comprising the second synchronization signal or the second system information in the second frequency band. The configuration information comprises at least one of information related to a resource for transmitting the first signal or information related to the second signal.

In one example of the present disclosure, a user equipment (UE) in a wireless communication system comprise a transceiver and a processor connected to the transceiver, wherein the processor may be configured to: receive a first synchronization signal in a first frequency band, receive second system information in the first frequency band, receive configuration information related to a second frequency band based on the first synchronization signal and the first system information, transmit a first signal requesting a second synchronization signal or second system information in the second frequency band and receive a second signal comprising the second synchronization signal or the second system information in the second frequency band. The configuration information comprises at least one of information related to a resource for transmitting the first signal or information related to the second signal.

In one example of the present disclosure, a base station in a wireless communication system comprise a transceiver and a processor connected to the transceiver, wherein the processor may be configured to: transmit a first synchronization signal in a first frequency band, transmit second system information in the first frequency band, transmit configuration information related to a second frequency band based on the first synchronization signal and the first system information, receive a first signal requesting a second synchronization signal or second system information in the second frequency band, and transmit a second signal comprising the second synchronization signal or the second system information in the second frequency band. The configuration information comprises at least one of information related to a resource for transmitting the first signal or information related to the second signal.

In one example of the present disclosure, a communication device may comprise at least one processor, and at least one computer memory connected to the at least one processor and storing instructions that direct operations when executed by the at least one processor, the operations comprising: receiving a first synchronization signal in a first frequency band, receiving second system information in the first frequency band, receiving configuration information related to a second frequency band based on the first synchronization signal and the first system information, transmitting a first signal requesting a second synchronization signal or second system information in the second frequency band, and receiving a second signal comprising the second synchronization signal or the second system information in the second frequency band. The configuration information comprises at least one of information related to a resource for transmitting the first signal or information related to the second signal.

In one example of the present disclosure, a non-transitory computer-readable medium storing at least one instruction includes the at least one instruction executable by a processor, wherein the at least one instruction directs a device to: receive a first synchronization signal in a first frequency band, receive second system information in the first frequency band, receive configuration information related to a second frequency band based on the first synchronization signal and the first system information, transmit a first signal requesting a second synchronization signal or second system information in the second frequency band and receive a second signal comprising the second synchronization signal or the second system information in the second frequency band. The configuration information comprises at least one of information related to a resource for transmitting the first signal or information related to the second signal.

The aspects described above of the present disclosure are merely some of the preferred embodiments of the present disclosure, and various embodiments reflecting the technical features of the present disclosure may be derived and understood by those skilled in the art based on the detailed description of the present disclosure described below.

## ADVANTAGEOUS EFFECTS

According to embodiments based on the present disclosure, the following effects may be obtained.

According to the present disclosure, the SSB (synchronization signal/physical broadcast channel block) and system information may be operated effectively.

The effects obtainable from the embodiments of the present disclosure are not limited to those mentioned above, and other effects not explicitly described may be clearly derived and understood by those skilled in the art to which the technical features of the present disclosure are applied, based on the description of the embodiments of the present disclosure below. That is, unintended effects resulting from implementing the configurations described in the present disclosure may also be derived by those skilled in the art from the embodiments of the present disclosure.

## BRIEF DESCRIPTION OF THE DRAWINGS

FIG. 1 illustrates an example of a flexible network topology applicable to the present disclosure.
FIG. 2 illustrates an example of a structure of a wireless communication system applicable to the present disclosure.
FIG. 3 illustrates an example of a wireless device applicable to the present disclosure.
FIG. 4 illustrates an example of a communication procedure between a first node and a second node applicable to the present disclosure.
FIG. 5 illustrates an example of a general functional architecture related to both functionality-based life cycle management (LCM) and model-based LCM.
FIG. 6 illustrates an example of an operation procedure based on an artificial intelligence (AI)/machine learning (ML) model applicable to the present disclosure.
FIG. 7 illustrates an example of an electromagnetic spectrum applicable to the present disclosure.
FIG. 8 illustrates an example of a procedure for transmitting system information for THz communication applicable to the present disclosure.
FIG. 9 illustrates an example of a beam management procedure applicable to the present disclosure.
FIG. 10a illustrates an example of a general NTN(non-terrestrial network) scenario based on a transparent payload applicable to the present disclosure.
FIG. 10b illustrates an example of a general NTN scenario based on a regenerative payload applicable to the present disclosure.
FIG. 11a illustrates examples of components of an orbital parameter ephemeris (OPE) format.
FIG. 11b illustrates examples of offsets in a link related to a satellite.
FIG. 11e illustrates examples of timing advance (TA) values in a link related to a satellite.
FIG. 12a and FIG. 12b illustrate examples of sensing operations applicable to the present disclosure.
FIG. 13 illustrates an example of time/frequency resources for sensing operation applicable to the present disclosure.
FIG. 14 illustrates an example of a procedure related to sensing operation applicable to the present disclosure.
FIG. 15 illustrates an example of an operation procedure of a base station supporting a network energy saving (NES) technology applicable to the present disclosure.
FIG. 16 illustrates an example of a procedure for a carrier aggregation (CA) operation using a synchronization signal/physical broadcast channel block (SSB)-less SCell (secondary cell) applicable to the present disclosure.
FIGS. 17a to 17c illustrate examples of on-demand system information transmission methods applicable to the present disclosure.
FIG. 18 illustrates examples of frequency bands operated by a base station according to one embodiment of the present disclosure.
FIG. 19 illustrates an example of a procedure for providing a communication service based on multiple frequency bands according to one embodiment of the present disclosure.
FIG. 20 illustrates an example of a procedure for performing communication based on multiple frequency bands according to an embodiment of the present disclosure.
FIG. 21 illustrates an example of a procedure for performing an on-demand SSB/SIB1 (system information block 1) procedure according to an embodiment of the present disclosure.
FIG. 22 illustrates an example of a procedure for receiving an SSB or SIB (system information block) based on an on-demand scheme according to an embodiment of the present disclosure.
FIG. 23 illustrates an example of a procedure for transmitting an SSB or SIB based on an on-demand scheme according to an embodiment of the present disclosure.
FIG. 24 illustrates an example of a procedure for performing an on-demand SSB/SIB1 procedure using multiple frequency bands according to an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".
A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".
In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, parentheses used in the present disclosure may indicate "for example". Specifically, when expressed as "control information (ABC)", "ABC" may be described as an example of the "control information". For example, "control information" may also include DEF as another example. In other words, the "control information" of the present disclosure is not limited to "ABC", and "ABC" may be described merely as an example of the "control information". In addition, even when expressed as "control information (i.e., ABC)" "ABC" may be described as an example of the "control information".

In addition, the terms "first", "second", and the like used in the present disclosure are only for the purpose of distinguishing one component from another and are not used to limit the components, and unless otherwise specified, do not limit the order, importance, or the like among the components. Therefore, the first component in one embodiment of the present disclosure may be referred to as the second component in another embodiment, and likewise, the second component in one embodiment may be referred to as the first component in another embodiment.

In the following description, 'when, if, or in case of may be replaced with 'based on'.

A technical feature described individually in one figure in the present disclosure may be individually implemented, or may be simultaneously implemented.

In the present disclosure, a terminal refers to a user-side device (user equipment, UE) or a consumer-side device, and may also be referred to as a first node that receives or transmits a signal from or to a base station/a second node/an integrated access and backhaul (IAB) node, or a transmission-reception point (TRP). The terminal may correspond to a physical node or a logical node. The terminal may correspond to a user-side endpoint or to an intermediate point between other endpoints. In communication between two points that are not limited to endpoints (including one-to-one, many-to-one, one-to-many, and many-to-many communication), the terminal may correspond to a served node. The terminal may be a node with a fixed location or a node whose location is not fixed (i.e., a mobile node).

In the present disclosure, a base station (BS) refers to a network-side device and may also be referred to as a second node, an IAB node, an x-nodeB (x-NodeB, where x may be an abbreviation related to a radio access technology (RAT)), or a transmission-reception point (TRP). The base station may correspond to a physical node or a logical node. The base station may correspond to a network-side endpoint or to an intermediate point between other endpoints. In communication between two points that are not limited to endpoints (including one-to-one, many-to-one, one-to-many, and many-to-many communication), the base station may correspond to a serving node. The base station may be a node with a fixed location or a node whose location is not fixed.

In the present disclosure, a higher layer parameter may be configured for, pre-configured for, or predefined for a UE. For example, a base station may transmit a higher layer parameter to the UE. For example, the UE may transmit a parameter such as capability to the base station as a higher layer parameter. For example, the higher layer parameter may be transmitted through radio resource control (RRC) signaling or medium access control (MAC) signaling.

In the present disclosure, when information/state/parameter is "configured or pre-configured", it may be interpreted as information/state/parameter being provided or pre-provided to the UE through predefined signaling (e.g., SIB, MAC, RRC) from the base station. In the present disclosure, when information/state/parameter is "defined or pre-defined", it may be interpreted as information/state/parameter being already known or stored in advance at both the base station and the UE without signaling between the base station and the UE.

The technology described in the present disclosure may be used in various wireless communication systems such as code division multiple access (CDMA), frequency division multiple access (FDMA), time division multiple access (TDMA), orthogonal frequency division multiple access (OFDMA), and single carrier frequency division multiple access (SC-FDMA), and so on. The CDMA may be implemented with a radio technology such as universal terrestrial radio access (UTRA) or CDMA2000. The TDMA may be implemented with a radio technology such as global system for mobile communications (GSM)/general packet radio service (GPRS)/enhanced data rates for GSM evolution (EDGE). The OFDMA may be implemented with a radio technology such as Institute of Electrical and Electronics Engineers (IEEE) 802.11 (Wi-Fi), IEEE 802.16 (WiMAX), IEEE 802.20, evolved UTRA (E-UTRA), long term evolution (LTE), or 5G new radio (NR).

The technology described in the present disclosure may be implemented as 6G wireless technology and may be applied to various 6G systems. For example, a 6G system may have key factors such as enhanced mobile broadband (eMBB), ultra-reliable low latency communications (URLLC), massive machine-type communication (mMTC), artificial intelligence (AI) integrated communication, tactile internet, high throughput, high network capacity, high energy efficiency, low backhaul and access network congestion, and enhanced data security.

A. 6G network architecture

FIG. 1 illustrates an example of a flexible network topology applicable to the present disclosure.

To compensate for incomplete areas of network coverage, a split radio access network (RAN) topology that is more flexible and resilient may be considered. For this purpose, various nodes such as IAB nodes, relays, and RF repeaters as illustrated in FIG. 1 may be applied, and NTN (non-terrestrial network) may also be integrated. For example, an IAB node may correspond to a node providing a wireless backhaul. For example, a relay may refer to any intermediate point, and in the case of a sidelink relay in which a UE functions as a relay, it may collectively refer to a UE-to-network (U2N) relay and a UE-to-UE (U2U) relay. For example, an RF repeater may correspond to a node that performs simple signal amplification and forwarding, and in the case of a network-controlled repeater, it may not only perform signal amplification and forwarding but also adjust transmission and reception configuration based on information provided from the network. For example, an NTN node may correspond to a satellite or aerial vehicle that provides NTN coverage difficult to be provided by a terrestrial network. In addition to these examples, various other intermediate points may be introduced to improve the network topology.

Referring to FIG. 1, the split RAN may support division of a base station into one centralized unit (CU) and one or more distributed units (DUs). The CU and DU may correspond to logical units. The CU may be further divided into a control plane (CP) part and one or more user plane (UP) parts. A failure in the CU-CP may affect not only the CU-UP but also the DU, and therefore, various intermediate points may be introduced to compensate for this.

An intermediate point may correspond to a UE or a base station depending on its relative relationship with other nodes. For example, an IAB node may include a mobile termination (MT) part and a DU. The MT may connect the IAB node to a donor node. The DU of the IAB node may serve other UEs or connect to another IAB node to provide multi-hop wireless backhaul to UEs. That is, the IAB node may correspond to a base station in relation to a user-side node, and may correspond to a UE in relation to a network-side node.

In some examples of the present disclosure, the description of a UE may be equally applied not only to a user-side endpoint but also to an intermediate point that corresponds to a UE in relation to a network-side endpoint. Similarly, in some examples of the present disclosure, the description of a base station may be equally applied not only to a network-side endpoint but also to an intermediate point that corresponds to a base station in relation to a user-side endpoint. However, in most cases where no additional explanation is provided for operations among three or more entities, the communication entities in the present disclosure are briefly described by the terms UE and/or base station (or first node and/or second node), where the terms UE and/or base station (or first node and/or second node) are interpreted as including or substituting any endpoint or intermediate point depending on the relationship with other nodes.

That is, in some examples of the present disclosure, for the sake of simplicity of description, the subject of an operation may be referred to as a base station and/or a UE (or a first node and/or a second node). In addition, the terms base station and/or UE (or first node and/or second node) may be interpreted or substituted as follows: for example, the base station (or first node) and the UE (or second node) may respectively correspond to a first endpoint and a second endpoint; may respectively correspond to an endpoint and an intermediate point; may respectively correspond to an intermediate point and an endpoint; or may respectively correspond to a first intermediate point and a second intermediate point.

In the present disclosure, there may be no intermediate point or one or more intermediate points between the base station and the UE. When an intermediate point exists, the intermediate point may correspond to an IAB node, a relay, an RF repeater, a non-terrestrial network (NTN) node, or a node supporting other functions. The intermediate point may be a node with a fixed location or a node whose location is not fixed.

Systems applicable to this disclosure

FIG. 2 illustrates an example of a structure of a wireless communication system applicable to the present disclosure. The communication system 100 of FIG. 2, to which the present disclosure is applied, includes a wireless device 110, a network device 120, and a network 130. Here, the wireless device 110 refers to a device that performs communication using a radio access technology (e.g., LTE, LTE-A, LTE-A Pro, NR, 5G, 5G-A, 6G) and may be referred to as a communication/radio/5G/6G device. Without being limited thereto, the wireless device 110 may include a robot 110a, vehicles 110b-1 and 110b-2, an extended reality (XR) device 110c, a hand-held device 110d, a home appliance 110e, an Internet of Things (IoT) device 110f, and an artificial intelligence (AI) device/server 110g. For example, the vehicles may include vehicles equipped with wireless communication capability, autonomous vehicles, or vehicles capable of performing vehicle-to-vehicle communication, and the vehicles 110b-1 and 110b-2 may include unmanned aerial vehicles (UAVs) such as drones. The XR device 110c may include augmented reality (AR), virtual reality (VR), or mixed reality (MR) devices and may be implemented in the form of a head-mounted device (HMD), a head-up display (HUD) mounted in a vehicle, a television, a smartphone, a computer, a wearable device, a home appliance, digital signage, a vehicle, or a robot. The hand-held device 110d may include a smartphone, a smart pad, a wearable device (e.g., smart watch, smart glasses), or a computer (e.g., laptop, etc.). The home appliance 110e may include a TV, refrigerator, or washing machine. The IoT device 110f may include sensors or smart meters. The wireless device 110 may correspond to a UE (or a first node) or an intermediate point. The network device 120 may correspond to a base station (or a second node) or another intermediate point. For example, the network device 120 may also be implemented as a wireless device 110, and a specific wireless device 120a may operate as the network device 120 for another wireless device 110.

The wireless devices 110a to 110f may be connected to the network 130 through the network device 120. AI technology may be applied to the wireless devices 110a to 110f, and the wireless devices 110a to 110f may be connected to an AI server 110g through the network 130. The network 130 may be configured using a 3G network, a 4G (e.g., LTE) network, a 5G (e.g., NR) network, or a 6G network. The wireless devices 110a to 110f may communicate with each other through the network device 120/the network 130, but may also communicate directly (e.g., through sidelink communication) without passing through the network device 120/the network 130. For example, the vehicles 110b-1 and 110b-2 may perform direct communication (e.g., vehicle-to-vehicle (V2V) or vehicle-to-everything (V2X) communication). In addition, the IoT device 110f (e.g., a sensor) may perform direct communication with another IoT device (e.g., another sensor) or with another wireless device 110a to 110f.

Wireless communication/connection 150a, 150b, 150c may be established between wireless devices 110a to 110f and a network device 120, and between network devices 120. Here, the wireless communication/connection may be established through various wireless access technologies such as uplink/downlink communication 150a, sidelink communication 150b (or D2D communication), and communication between network devices 150c (e.g., relay, integrated access backhaul (IAB)). Through the wireless communication/connection 150a, 150b, 150c, the wireless device and the network device/wireless device, and the network device and the network device may transmit and receive wireless signals with each other. For example, the wireless communication/connection 150a, 150b, 150c may transmit and receive signals through various physical channels. To this end, based on various descriptions of the present disclosure, at least a part of various configuration information configuring processes for transmitting/receiving wireless signals, various signal processing processes (e.g., channel encoding/decoding, modulation/demodulation, resource mapping/demapping, etc.), and resource allocation processes may be performed.

Device applicable to the present disclosure

FIG. 3 illustrates an example of a wireless device applicable to the present disclosure.

Referring to FIG. 3, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information associated with an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 3, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device described with reference to FIG. 3 may be understood as at least a part of the structure of various devices. For example, the structure of the wireless device illustrated in FIG. 3 may correspond to at least a part of the various devices described with reference to FIG. 2 (e.g., a robot 110a, vehicles 110b-1 and 110b-2, an XR device 110c, a portable device 110d, a home appliance 110e, an IoT device 110f, and an AI device/server 110g). Furthermore, depending on various embodiments, the device may further include other components in addition to those illustrated in FIG. 3.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output apparatus for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be an AI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs associated with sight, hearing, or touch, a sensor unit that senses state information of the device or surrounding the device, environment information and user information, and a training unit that uses learning data to learn a model consisting of artificial neural networks.

The structure of the wireless device illustrated in FIG. 3 may be understood as being a part of a UE (or a first node), a part of an intermediate point, or a part of a base station (or a second node). When the device illustrated in FIG. 3 is the base station (or the second node), the device may further include a wired transceiver for front haul and/or back haul communication. However, when the front haul and/or back haul communication is based on wireless communication, at least one transceiver 206 illustrated in FIG. 3 may be used for the front haul and/or back haul communication, and the wired transceiver may not be included.

B. Communication Procedures

FIG. 4 illustrates an example of a communication procedure between a first node (e.g., a UE) and a second node (e.g., a base station) applicable to the present disclosure. The second node of FIG. 1 may support dynamic spectrum sharing (DSS) and may provide connection not only to nodes where 6G technology is implemented but also to nodes where pre-6G wireless communication (e.g., 5G, 4G) technology is implemented. That is, the first node of FIG. 1 may implement 6G technology or may implement pre-6G wireless communication (e.g., 5G, 4G) technology. In addition, the first node and/or the second node may support not only a non-overlapping full duplex mode but also a full duplex mode.

In FIG. 4, for simplicity of description, the first node and the second node are assumed to be a UE and a base station, respectively, and operations in which the UE 440 and the base station 420 transmit and/or receive data and operations performed prior thereto are illustrated. However, the operation of FIG. 1 is not limited to the operation between the UE and the base station, and may be interpreted as the operation between the first node and the second node. In addition, although FIG. 1 illustrates a direct wireless signal transmission/reception operation between the UE 440 and the base station 420, one or more intermediate points may exist between the UE 440 and the base station 420, and the wireless signal may be transmitted and received through one or more intermediate points.

Referring to FIG. 4, in step 401, the UE 440 and the base station 420 perform synchronization. For example, the UE 440 may perform an initial cell search operation. Specifically, the UE 440 may detect at least one synchronization signal for base station connection, which is transmitted from the base station 420 according to a predefined rule. Here, the synchronization signal may include a plurality of synchronization signals (e.g., a first synchronization signal (for example, a primary synchronization signal), a second synchronization signal (for example, a secondary synchronization signal), etc.) classified according to structure or purpose. Through this, the UE 440 may identify a boundary of a unit (e.g., a frame, subframe, slot, and/or symbol) configuring wireless signal transmission of the base station 420, and may obtain information related to the base station 420 (e.g., a cell identifier).

In step 403, the UE 440 obtains system information transmitted from the base station 420. The system information is information related to attributes, characteristics, and/or capabilities of the base station 420, which are required for the UE to access the base station 420 and use services, and may be classified according to content (e.g., whether it is essential for access), transmission structure (e.g., which channel is used, whether it is provided on-demand), and the like, for example, the system information may be classified into first system information (e.g., a master information block (MIB), primary system information) and second system information (e.g., a system information block (SIB), secondary system information). If necessary, the UE 440 may transmit a signal requesting the system information before receiving the system information. However, the request and provision of the system information may be performed after a random access procedure described below.

In step 405, the UE 440 and the base station 420 perform a random access procedure. The UE 440 may transmit and/or receive at least one message (e.g., a random access preamble, a random access response (RAR) message, etc.) for the random access procedure based on information related to a channel (e.g., channel location, channel structure, structure of supported preambles, etc.) for the random access procedure of the base station 420 obtained through the system information. For example, the UE 440 may transmit a first message (e.g., a preamble, MSG1) through a channel for the random access procedure, receive a second message (e.g., an RAR message, MSG2), transmit a third message (e.g., MSG3) including information related to the UE 440 (e.g., identification information) to the base station 420 by using scheduling information included in the second message, and receive a fourth message (e.g., MSG4) for contention resolution and/or connection establishment. In another example, the first message and the third message may be transmitted and received as a single message, or the second message and the fourth message may be transmitted and received as a single message.

In step 407, the UE 440 and the base station 420 perform signaling of control information. Here, the control information may be defined in various layers such as a layer for controlling connection (e.g., a radio resource control (RRC) layer), a layer for processing mapping between logical channels and transport channels (e.g., a media access control (MAC) layer), and a layer for processing physical channels (e.g., a physical (PHY) layer). For example, the UE 440 and the base station 420 may perform at least one of signaling for establishing a connection, signaling for determining configurations related to communication, and signaling for indicating allocated resources.

In step 409, the UE 440 and the base station 420 transmit and/or receive data. In other words, the UE 440 and the base station 420 may process and transmit and/or receive data based on the signaling of control information. For example, when transmitting data, the UE 440 or the base station 420 may perform at least one of channel encoding, rate matching, scrambling, constellation mapping, layer mapping, waveform modulation, antenna mapping, and resource mapping on information bits. Conversely, when receiving data, the UE 440 or the base station 420 may perform at least one of signal extraction from a resource, waveform demodulation per antenna, signal arrangement considering layer mapping, constellation demapping, descrambling, and channel decoding.

## C. 6G System Core Technologies

As core implementation technologies of a 6G system, technologies such as artificial intelligence (AI), terahertz (THz) communication, optical wireless technology, free-space optical (FSO) backhaul network, massive MIMO technology, blockchain, 3D networking, quantum communication, unmanned aerial vehicles, cell-free communication, wireless information and energy transfer (WIET), integration of sensing and communication, integration of access and backhaul networks, holographic beamforming, big data analytics, and large intelligent surface (LIS) may be adopted.

### C-1. Artificial intelligence

Introducing artificial intelligence (AI) into communication may simplify and enhance real-time data transmission. AI may determine how complex target tasks are performed by using numerous analyses. That is, AI may improve efficiency and reduce processing delay. Time-consuming tasks such as handover, network selection, and resource scheduling may be performed instantly by using AI. AI may also play an important role in M2M, machine-to-human, and human-to-machine communications. In addition, AI may enable rapid communication in a brain-computer interface (BCI). An AI-based communication system may be supported by meta-materials, intelligent structures, intelligent networks, intelligent devices, intelligent cognitive radios, self-sustaining wireless networks, and machine learning.

[Functional Framework]

The following describes a functional framework for AI/ML operations.

Hereinafter, for a more specific description of AI (or AI/ML), terms may be defined as follows.

- Data collection: Data collected from network nodes, management entities, or UEs, serving as the basis for AI model training, data analysis, and inference
- AI model: A data-driven algorithm applying AI techniques that generates a set of outputs including prediction information and/or decision parameters based on a set of inputs
- AI/ML training: An online or offline process of training an AI model by learning functions and patterns that best represent data and enable inference, to obtain a trained AI/ML model
- AI/ML inference: A process of predicting or inducing decisions based on collected data and an AI model by using the trained AI model

The Life Cycle Management (LCM) procedure for an AI/ML model (i.e., model training, model deployment, model inference, model monitoring, model update, etc.) may be classified into functionality-based LCM and model-based LCM. In functionality-based LCM, the AI/ML model may not be identifiable in the network, and the network may indicate activation/deactivation/fallback/switching of the AI/ML functionality. In model-identifier (ID)-based LCM, the AI/ML model may be identifiable in the network, and the network/UE may activate/deactivate/select/switch the AI/ML model through the model ID.

FIG. 5 illustrates an example of a general functional architecture related to both functionality-based LCM and model-based LCM. Some functions or some data/information/command flows (i.e., arrows) illustrated in FIG. 5 may be omitted.

Referring to FIG. 5, a general functional framework may be configured to include a data collection function 510, a model training function 520, a management function 530, an inference function 540, and a model storage function 550.

The data collection function 510 provides input data to the model training function 520, the management function 530, and the inference function 540. The data collection function 510 may perform data preparation based on raw data and may provide processed input data through the data preparation. Examples of raw data may include received data or measurement data from UEs or other network entities, and inference or output of an AI/ML model. The data collection function 510 may be performed by a single entity (e.g., a UE, a network node, etc.) or may be performed by a plurality of entities.

Here, training data 511 refers to data required as input for the AI/ML model training function 520. Monitoring data 512 refers to data required as input for the management 530 of the AI/ML model or the AI/ML functionality. Inference data 513 refers to data required as input for the AI/ML inference function 530.

The model training function 520 performs AI/ML model training, validation, and testing capable of generating model performance metrics that may be used as part of an AI/ML model testing procedure. The model training function 520 may perform data preparation (e.g., data pre-processing and cleaning, forming, and transformation) based on training data 511 transferred from the data collection function 510, if necessary.

Trained/Updated Model 521: If there is a model storage function 550, it is used to transfer a trained, validated and tested AI/ML model to the model storage function 550 or to transfer an updated version of the model to the model storage function 550.

The management function 530 supervises the operation of the AI/ML model or the AI/ML functionality. In addition, the management function 530 may make decisions to ensure appropriate inference operations based on data received from the data collection function 510 (i.e., monitoring data 512) and/or data received from the inference function 540 (i.e., inference output 541).

The management instruction 532 refers to information required as input to manage the inference function 540. The related information may include selection/(de)activation/switching of an AI/ML model or an AI/ML-based functionality, and may also include fallback to non-AI/ML operation (i.e., not relying on an inference process).

The model transfer/delivery request 533 may be used to request one or more models from the model storage 550.

The performance feedback/retraining request 531 refers to information required as input to the model training function 520 (e.g., for the purpose of model retraining or model updating).

The inference function 540 provides an output from a process of applying an AI/ML model or an AI/ML functionality by using data (i.e., inference data 513) provided by the data collection 510 as input. The inference function 540 may perform data preparation (e.g., data pre-processing and cleaning, formatting, and transformation) based on the inference data 513 transferred by the data collection 510. If necessary, the inference function 540 may also perform data preparation (e.g., data pre-processing and cleaning, forming, and transformation) based on the inference data 513 provided by the data collection function 510.

The inference output 541 is data used by the management function 530 to monitor the performance of an AI/ML model or an AI/ML functionality. The inference output 541 may include an inference output of the AI/ML model generated by the inference function 540, and details of the inference output may vary depending on the use case.

The model storage function 550 stores trained/updated models that may be used to perform the inference function 540. The model storage function 550 illustrated in FIG. 5 may serve as a reference point, if applicable, for protocol termination, model transmission/transfer, and related processes. In addition, the model storage function 550 is merely an example and is not intended to limit the actual storage location of the AI/ML model, and it may be omitted.

The model transfer/delivery 551 is used to deliver an AI/ML model to the inference function.

Depending on the capabilities of AI/ML functions between a plurality of nodes, levels of cooperation may be defined as follows, and modifications may be possible through a combination of a plurality of levels or separation of any one level.

Cat 0a) No collaboration framework: The AI/ML algorithm is purely implementation-based and does not require any modification of the wireless interface.

Cat 0b) This level corresponds to a framework without collaboration but involves a modified wireless interface adapted to efficiently implemented AI/ML algorithms.

Cat 1) Node-to-node assistance is involved to improve the AI/ML algorithm of each node. For example, this applies when a specific node receives assistance (for training, adaptation, etc.) from another node, and vice versa. At this level, model exchange between network nodes is not required.

Cat 2) Joint AI/ML operations among a plurality of nodes may be performed. This level requires AI/ML model commands or exchanges between network nodes.

FIG. 5 is a diagram illustrating an overall functional framework for an AI/ML model, and not all functions and/or all data/information/command signals illustrated in FIG. 5 may be performed within a specific node, but only some of them may be performed.

The AI/ML model may be classified into a one-side model or a two-side model depending on whether training and/or inference is performed within a single node or jointly/sequentially among a plurality of nodes.

The one-side model may refer to an AI/ML model in which inference is entirely performed by a single node (e.g., a UE or a network). Here, training of the AI/ML model may also be entirely performed by a single node. The training and inference of the AI/ML model may be performed by the same node, or the training and inference of the AI/ML model may be performed by different nodes, respectively.

The two-side model may refer to an AI/ML model in which joint inference is performed across a plurality of nodes (e.g., a UE and a network). The joint inference means that inference is jointly performed across a plurality of nodes, for example, a first part of the inference may be performed by a first node, and the remaining part of the inference may be performed by a second node. The two-side model may be classified into several types according to the training method of the AI/ML model.

- First type: The AI/ML model may be trained at a single node. In this case, joint training may be performed. Afterward, the trained model may be distributed to other nodes or entities.
- Second type: Joint training of the AI/ML model may be performed respectively at a plurality of nodes or entities (e.g., a network and a UE). The joint training may mean that model generation (e.g., a CSI generation part) and model reconstruction (CSI compression for sub-use cases) are trained within the same loop for forward activation and backward gradient. In this type, the joint training may include both simultaneous training (i.e., model generation training and model reconstruction training are performed simultaneously) and sequential training (i.e., model reconstruction training is performed after model generation training).
- Third type: Separate training of the AI/ML model may be performed respectively at a plurality of nodes (e.g., a network and a UE). The separate training may mean that training is sequentially started at one node and then continued at another node. In this case, when a first node first performs the AI/ML model and shares training data with a second node, the second node may perform the AI/ML model by using the shared training data. For example, training for a CSI generation part may be performed by the UE, and CSI reconstruction may be performed by the network.

In the present disclosure described below, even without a specific mention (i.e., without an explicit reference such as by/based on/for an AI/ML model), the operation proposed in the present disclosure may be described or interpreted as being based on an AI/ML model, as illustrated in FIG. 6. FIG. 6 illustrates an example of an operation procedure based on an AI/ML model applicable to the present disclosure.

In addition, unless otherwise specifically limited in the description of the present disclosure, the AI/ML model may correspond to a one-side model in which inference is entirely performed by a single node, or a two-side model in which joint inference is performed across a plurality of nodes.

Step 1: In the description of the present disclosure provided below, signaling (e.g., information/data/channel/-signal, etc.) or a set of signaling between a specific node (e.g., a UE, a network, etc.) and another node may be interpreted, even without explicit mention, as signaling or a set of signaling in step 1 used to perform operations based on an AI/ML model. For example, such signaling may correspond to training data used for AI/ML model training (i.e., generation and/or reconstruction) as illustrated in FIG. 2, or to inference data used for AI/ML model inference, or to feedback for an AI/ML model. If signaling between nodes is not required prior to the AI/ML model-based operation in the present disclosure, step 1 may be omitted. When a one-side model is used in the present disclosure, unidirectional/bidirectional signaling (set) in the present disclosure may correspond to the signaling in step 1. In addition, when a two-side model is used in the present disclosure, unidirectional/bidirectional signaling in the present disclosure may also correspond to the signaling in step 1, and repetitive signaling operations may also correspond to the signaling in step 1.

For example, in AI/ML model-based beam management (BM), when beam(s) with good quality are predicted (i.e., inferred) by the base station based on the AI/ML model, the base station may receive quality/strength information for multiple beams from the UE. Also, beam(s)with good quality are predicted (i.e., inferred) by the UE based on the AI/ML model, the UE may receive a plurality of beams from the base station.

Step 2: In the description of the present disclosure provided below, an operation (e.g., computation, selection, prediction, etc.) performed at a specific node (e.g., a UE, a network, etc.) or a joint operation (e.g., computation, selection, prediction, etc.) performed at a plurality of nodes (e.g., a UE, a network, etc.) may correspond to the operation of step 2, which is based on one or more functions within the functional framework of an AI/ML model, even without explicit mention. For example, this may correspond to training (i.e., generation and/or reconstruction) or inference of the AI/ML model illustrated in FIG. 2. When a one-side model is used, an operation performed by a single node in the present disclosure may correspond to the operation of step 2, in addition, when a two-side model is used, a joint operation performed by a plurality of nodes in the present disclosure may correspond to the operation of step 2.

For example, in AI/ML model-based BM, the base station may use quality/strength information for a plurality of beams received from the UE as inference data and may predict (i.e., infer) beam(s) with good quality based on the AI/ML model. Also, the UE may measure a plurality of beams received from the base station, use the measurement results as inference data, and predict (i.e., infer) beam(s) of good quality based on the AI/ML model.

Step 3: In the description of the present disclosure provided below, signaling (e.g., information/data/channel/-signal, etc.) or a set of signaling between a specific node (e.g., a UE, a network, etc.) and another node may be interpreted, even without explicit mention, as signaling or a set of signaling in step 3 that is generated as a result of an operation based on an AI/ML model. For example, this may correspond to an output resulting from inference of the AI/ML model illustrated in FIG. 2. If signaling between nodes is not required as a result of an operation based on the AI/ML model in the present disclosure, step 3 may be omitted. When a one-side model is used in the present disclosure, unidirectional/bidirectional signaling (set) in the present disclosure may correspond to the signaling in step 3. In addition, when a two-side model is used in the present disclosure, unidirectional/bidirectional signaling in the present disclosure may also correspond to the signaling in step 3, and in addition, repetitive signaling operations may also correspond to the signaling in step 3.

For example, in AI/ML model-based BM, the base station may transmit to the UE one or more beams predicted based on the AI/ML model as candidates to allow the UE to determine an optimal beam. In addition, the UE may report, to the base station, beam(s) predicted based on the AI/ML model as candidates in order to request transmission of candidate beams from the base station for determining an optimal beam.

C-2. THz communication

The data transmission rate may be increased by expanding the bandwidth. This may be achieved by using sub-THz communication with a wide bandwidth and applying advanced massive MIMO technology. THz waves, also known as sub-millimeter radiation, generally refer to a frequency band between 0.1 THz and 10 THz with a corresponding wavelength range of 0.03 mm to 3 mm. The 100 GHz-300 GHz frequency range (sub-THz band) is considered the main portion of the THz band for cellular communication. Adding the sub-THz band to the mmWave band increases the capacity of 6G cellular communication. Among the defined THz bands, the 300 GHz-3 THz range belongs to the far-infrared (IR) frequency region. The 300 GHz 3 THz range is part of the optical band but lies at its boundary, immediately following the RF band. Therefore, this 300 GHz-3 THz range exhibits similarity to the RF band. FIG. 7 illustrates an example of an electromagnetic spectrum applicable to the present disclosure. The embodiment of FIG. 7 may be combined with various other embodiments. Key characteristics of THz communication include (i) widely available bandwidth that supports extremely high data transmission rates, and (ii) high path loss occurring at high frequencies (high-directionality antennas are indispensable). The narrow beamwidth generated by high-directionality antennas reduces interference. The short wavelength of THz signals allows a much larger number of antenna elements to be integrated into devices and base stations operating in this band. This enables the use of advanced adaptive array techniques that can overcome range limitations.

In the THz frequency band, transmitting system information (i.e., information related to attributes, characteristics, and/or capabilities of a base station necessary for service use, such as MIB and SIB) may be inefficient because, in high-frequency bands, the beamwidth becomes narrower, requiring more frequent beam sweeping to cover the entire area of the cell. In particular, when there are few users within the cell, transmitting system information through such a method becomes even more inefficient. Accordingly, a system information transmission procedure such as that illustrated in FIG. 8 may be used.

(System information reception method)

FIG. 8 illustrates an example of a procedure for transmitting system information for THz communication applicable to the present disclosure. Although this example is described in consideration of a THz scenario, it may also be applied to a 6G communication environment where THz is not used. In addition, the procedure illustrated in FIG. 8 may be combined with various embodiments of the present disclosure described below. For example, the embodiments described below may be performed based on the system information obtained through the procedure illustrated in FIG. 8.

Referring to FIG. 8, in step 801, the base station 820 transmits system information of cell #1 through cell #2. That is, the base station 820 provides at least two cells, where cell #1 uses a THz frequency band, and cell #2 uses a frequency band other than the THz frequency band. Here, the system information may include at least one piece of information/-state/parameter/configuration generated at each of the higher layer and the physical layer. For example, at least one piece of information/state/parameter/configuration generated at the higher layer may include at least one of an SFN, control information configuration for SIB1 (e.g., PDCCH configuration for SIB1), information related to cell selection/entry (e.g., cell barring, cell reselection, etc.), and subcarrier spacing, and at least one piece of information/state/parameter/configuration generated at the physical layer may include at least one of an SFN, a half-frame indicator, and an SSB index. However, this is merely an example, and the system information may include information/state/parameter/configuration related to cell #1 and/or cell #2, generated at various types of physical and higher layers. For this purpose, in one example, cell #1 and cell #2 may have a relationship of a secondary cell and a primary cell.

In step 803, the UE 810 obtains synchronization for cell #1. The synchronization may be obtained by detecting a synchronization signal. Generally, synchronization is obtained before receiving system information, however, since the system information of cell #1 is received through cell #2, synchronization acquisition for cell #1 may be performed after the reception of system information. For example, the UE 810 may obtain synchronization based on the system information. However, unlike FIG. 8, in another example, the synchronization acquisition may be performed before step 801.

In step 805, the UE 810 transmits a signal for accessing cell #1. For example, the signal may include information for accessing cell #1 (e.g., a random access preamble). The structure of the signal and the resource (e.g., a channel) for transmitting the signal may be identified through the system information. Subsequently, in step 807, the UE 810 and the base station 820 perform an access procedure for cell #1 and perform communication. In this step, operations according to various embodiments described below may be performed.

The procedure described with reference to FIG. 8 may be performed when the UE 801 initially accesses cell #1 of the base station 820. Alternatively, a similar procedure may be performed when the UE 801 performs a handover to cell #1 of the base station 820. However, in the case of handover, the system information of cell #1 may be received from a cell of another base station rather than from cell #2 of the base station 820.

Communication in the THz band is expected to experience extremely severe path loss, and to overcome this, the UE and the base station must use very sharp beams. The use of sharp beams means that the UE and the base station must perform beam control along with beamforming, and that the number of beams used becomes very large. Accordingly, a considerable amount of time is required to align transmission and reception beams between the base station and the UE. Furthermore, when the beam alignment between the base station and the UE is disturbed due to UE movement or mobility, time for re-aligning the beams is frequently required, which may cause instability of the link. Therefore, a beam management procedure such as that illustrated in FIG. 9 may be used.

(Beam search procedure in a THz communication environment)

FIG. 9 illustrates an example of a beam management procedure applicable to the present disclosure. FIG. 9 shows an example of a procedure for searching for and/or selecting beams for THz communication, but it is not limited to the THz environment, and the present disclosure may also be applied to a 6G communication environment. In addition, the procedure illustrated in FIG. 9 may be combined with various embodiments of the present disclosure described below. Here, the term beam may be interpreted as 'spatial (configuration) information', 'spatial domain filter', 'spatial domain transmission filter', 'spatial domain reception filter', or other terms (e.g., reference signal, synchronization signal block (SSB) index, transmission reception point (TRP), panel, cell, transmission point (TP), base station, or control resource-related information such as control resource set (CORESET)-related information) having an equivalent technical meaning capable of distinguishing beams.

Referring to FIG. 9, in step 901, the base station 920 configures resources for beam management. Here, the resources may include at least one of time-frequency resources, channels, and spatial resources (e.g., antenna ports). For example, the base station 920 may utilize a beam search signal (BSS) that is transmitted spatially separated from existing downlink signals/channels for beam search. Here, the BSS may be transmitted based on dedicated ports for beam search. The dedicated ports may be different from ports used for transmission of existing downlink signals/channels (e.g., synchronization signals such as SSBs, or data channels such as PDSCH). The term BSS is defined for convenience of explanation, and the technical idea according to this embodiment is not limited to the term BSS itself. That is, a signal transmitted based on dedicated ports defined/configured for beam search may be included in the technical idea of this embodiment.

In step 903, the base station 920 transmits measurement signals by using a plurality of transmission beams. For example, the measurement signals may include at least one of reference signals and synchronization signals. In this case, the measurement signals may be transmitted for as many beams as those requiring measurement and may be transmitted using a multi-beam transmission method that forms multiple beams simultaneously to reduce sweeping time. Here, the multi-beam transmission may be performed based on at least one of a multi-panel, a sub-array, and a true time delay (TTD).

In step 905, the UE 910 transmits a feedback signal to the base station 920. The feedback signal indicates at least one beam selected by the UE 910. The UE 910 may select at least one preferred beams based on the measurement signals received in step 903. In step 907, the UE 910 and the base station 920 perform communication. At this time, the UE 910 and the base station 920 may perform communication by using the beam selected in step 905. When channel reciprocity is established, the transmission beam of the UE 910 may also be determined through steps 903 and 905, and therefore, the transmission operation of the UE 910 may be performed by using the beam selected in step 905. If channel reciprocity is not established, a procedure including transmission of measurement signals by the UE 910 and transmission of a feedback signal by the base station 920 may be performed in advance to determine the transmission beam of the UE 910. In step 907, operations according to various embodiments described below may be performed.

C-3. Non-terrestrial networks (NTN)

An NTN may refer to a network or network segment that uses radio frequency (RF) resources mounted on a satellite (or an unmanned aerial system (UAS) platform). The use of NTN services has been considered to provide wireless communication services in areas where wider coverage is required or where the installation of terrestrial base stations is difficult. The NTN service may collectively refer to a wireless communication system that provides service to UEs by installing base stations on non-terrestrial platforms such as satellites (e.g., geostationary orbit, low Earth orbit, or medium Earth orbit satellites), airplanes, unmanned airships, or drones. The satellite described in the present disclosure may move at high speed relative to a specific location on Earth, and a satellite beam directed toward Earth may correspond to an area on Earth where the satellite can provide service to users.

In one example of the present disclosure, an NTN scenario may be classified into a geostationary cell scenario and a moving cell scenario on Earth, depending on the type of cell supported by the satellite. The geostationary cell scenario refers to a scenario in which a cell is permanently maintained or maintained for a specific service duration within a location on the specific surface based on the beam steering function of the satellite. The moving cell scenario refers to a scenario in which the beam steering function of the satellite is not used, and the service is provided through fixed beams, causing the cell on the surface to continuously move.

In another example of the present disclosure, an NTN scenario may be classified into a typical NTN scenario based on a transparent payload and a typical NTN scenario based on a regenerative payload, depending on the characteristics of the payload. FIG. 10a illustrates an example of a typical NTN scenario based on a transparent payload applicable to the present disclosure. FIG. 10b illustrates an example of a typical NTN scenario based on a regenerative payload applicable to the present disclosure. The embodiments of FIG. 10a or FIG. 10b may be combined with various embodiments of the present disclosure. Referring to FIG. 10a, a satellite (or a UAS platform) may establish a service link with a UE. The satellite (or UAS platform) may be connected to an NTN gateway through a feeder link. The satellite may be connected to a data network through the gateway. A beam footprint may refer to an area in which signals transmitted by a satellite can be received. Referring to FIG. 10b, a satellite (or a UAS platform) may establish a service link with a UE. The satellite (or UAS platform) connected to the UE may be connected to another satellite (or UAS platform) through inter-satellite links (ISLs). The other satellite (or UAS platform) may be connected to a gateway through a feeder link. Based on a regenerative payload, the satellite may be connected to a data network through another satellite and the gateway. When there is no inter-satellite link (ISL) between satellites, a feeder link between the satellite and the gateway may be required. FIG. 10a and FIG. 10b are merely examples of NTN scenarios, and the NTN may be implemented based on various types of scenarios. For example, a satellite (or a UAS platform) may implement a transparent payload or a regenerative (with on board processing) payload. For example, a satellite (or a UAS platform) may generate multiple beams over a designated service area according to the field of view of the satellite (or UAS platform). For example, the field of view of the satellite (or UAS platform) may vary depending on the onboard antenna diagram and the minimum elevation angle. For example, a transparent payload may include radio frequency filtering, frequency conversion, and amplification. Therefore, a waveform signal repeated by the payload may remain unchanged. For example, a regenerative payload may include radio frequency filtering, frequency conversion and amplification, demodulation/decoding, switching and/or routing, and coding/modulation. For example, the regenerative payload may be substantially equivalent to equipping the satellite (or UAS platform) with all or part of base station functionality.

Hereinafter, procedures for maintaining network service continuity and satellite coverage in a wireless communication system utilizing NTN elements (e.g., initial cell selection, mobility management in idle mode, and mobility management in connected mode) is described.

- Initial cell selection procedure

The UE may search for a first satellite-based NTN cell (or a satellite broadcasting the cell) when power is turned on. At this time, if the UE has satellite orbit information (i.e., ephemeris data) and/or RTT (round-trip time) information that can be used when performing a cell entry procedure (e.g., a random access procedure), the UE may use such information to shorten the cell search procedure and reduce the time required for cell search. To this end, the UE may require (initial) system information including satellite orbit (ephemeris) information for identifying the precise location of the cell, and the (initial) system information may be configured/determined/generated based on orbital plane information already held by the UE. For example, satellite-level orbit parameters for all satellites that can provide service to the UE through the UE uSIM, including satellite ID or index, may be provided in advance. Subsequently, since the system information includes and broadcasts the satellite ID of the serving satellite, the UE may use this to derive orbit data (ephemeris data) related to the serving satellite stored in the uSIM and/or the positional coordinates of the serving satellite. Additionally, to assist with mobility handling, the UE may obtain information related to neighboring satellites through system information and/or dedicated RRC signaling.

Here, the satellite orbit (ephemeris) information transmitted to the UE through system information and/or RRC signaling may be implemented/supported in i) a position and velocity state vector orbit format, and ii) an orbital parameter (ephemeris) format. For example, the position and velocity state vector orbit format may consist of 17 bytes or less (e.g., 132 bits). The field size for position (x, y, z) (in meters) may be 78 bits, and the field size for velocity (vx, vy, vz) (in meters per second) may be 54 bits.

The orbital parameter ephemeris format may consist of 21 bytes or less (e.g., 164 bits). FIG. 11a illustrates an example of components of the orbital parameter ephemeris format. The components of the orbital parameter ephemeris format illustrated in FIG. 11a are as follows.

- Semi-major axis (half of the major axis of the elliptical satellite orbit) "$\alpha$" [m] (e.g., 33 bits)
- Eccentricity "e" (in an elliptical satellite orbit, where $0 < e < 1$) (e.g., 20 bits)
- Argument of periapsis (the angle measured from the ascending node to the periapsis (the point closest to the central body), determining the orientation of the ellipse within the orbital plane) "$\omega$" [rad] (e.g., 28 bits)
- Longitude of ascending node (the angle measured counterclockwise from a reference point (e.g., the vernal equinox in the solar system) to the ascending node (the point where the orbit passes from below to above the reference plane)) "L2" [rad] (e.g., 28 bits)
- Inclination (the tilt of the ellipse relative to the reference plane, measured as the angle between the orbital plane and the reference plane at the ascending node) "i" [rad] (e.g., 27 bits)
- Mean anomaly (an angle that changes continuously over time, mathematically convenient but not corresponding to a geometric angle) "M" = M(t0) at the epoch t0 [JD] (e.g., 28 bits) [rad]

- Mobility management in idle mode

During the idle mode, the location of the UE may be identified at the tracking area level or unit. Here, a tracking area is defined as a set of cells, and each cell may belong to a tracking area identified by a tracking area code (TAC). The TAC may be transmitted through system information of a broadcast channel. Multiple cells may belong to the same tracking area, and the same TAC corresponding to the same tracking area may be broadcast. The location of the UE may be known to the network when the UE is first turned on (i.e., when performing a registration procedure). The registration request message transmitted by the UE for the registration procedure may include the TAC of the cell on which the UE is currently camped. When the UE moves and changes cells, it may determine the tracking area of the new cell by decoding the system information of the changed cell. The UE may move within the same tracking area without performing an update. When the UE enters a new cell using a different TAC, the UE may perform registration in the new cell and transmit the new TAC to update its location to the network. Accordingly, as the tracking area becomes larger, signaling from the UE to the network decreases, thereby minimizing UE power consumption. When the network needs to reach a UE in idle mode (e.g., for an incoming call), the network may page the UE in all cells belonging to the last tracking area where the UE performed registration. If the tracking area is very large and includes many cells, the number of paging messages may increase because the network pages the UE in all cells belonging to the TAC. When the same model is applied to a satellite system and each satellite broadcasts a TAC, the tracking area may sweep across the ground as the satellite orbits the Earth. In this case, even a stationary UE would need to perform registration updates frequently, which could affect the battery life of the UE and increase uplink signaling. To address this issue, the system may be designed so that the tracking area does not change its geographical position on Earth. Instead of the tracking area moving as the satellite moves, the satellite may change its tracking area when entering a new geographical region, and the TAC broadcast by the satellite may be updated to reflect the corresponding new geographical region. At the same time, when the UE detects a new TAC on the broadcast channel, it may perform a tracking area update procedure. Accordingly, if the UE does not change its physical location on Earth, its tracking area may remain fixed.

- Mobility management in connected mode

While the UE is in the connected mode, the mobility management procedure may be handled through a handover. In terrestrial networks or NTN networks, the handover may be triggered by the network (i.e., measurement-based handover triggering) based on measurement values reported by the UE for the signal quality of the current cell and neighboring cells. In the handover procedure, the service interruption time is defined as the time from when the UE stops transmission and reception with the source base station to when the UE resumes transmission and reception with the target base station. Meanwhile, the interruption time may differ between uplink and downlink. In the downlink, the interruption time may be defined as the time from when the network transmits a synchronized RRC reconfiguration message to when the target base station receives an RRC Reconfiguration Complete message. After transmitting the RRC reconfiguration message, the base station can no longer send data and may resume communication only after receiving the RRC Reconfiguration Complete message. In the uplink, the UE may potentially continue transmitting data to the source base station until the synchronized RRC reconfiguration message is received. Then, the interruption time may be defined as the time from when the UE receives the synchronized RRC reconfiguration message to when the target base station receives the RRC Reconfiguration Complete message.

Since the propagation delay value in a satellite-based NTN is much greater than that in a terrestrial system, additional waiting time may occur for mobility-related signals such as measurement reporting, reception of a handover (HO) command, and HO request/acknowledgment (when the target cell is served by another satellite). The geostationary Earth orbit (GEO) scenario is characterized by a much larger propagation delay compared to the low Earth orbit (LEO) scenario, but the latter requires consideration of satellite movement. To prevent extended service interruption, the waiting time related to mobility-related signaling needs to be addressed in both cases. In addition to the measurement-triggered handover described above, handover triggering based on the position of the UE and satellite (or the distance between the UE and the satellite), handover triggering based on the timing advance (TA) of the target cell, handover triggering based on deterministic satellite motion/local time, handover triggering based on the elevation angle of the source/target cell, etc. may be utilized. Additionally or alternatively, the UE may be pre-provided with handover configuration and handover triggering conditions (e.g., the position of the UE/satellite, or the strength of signals transmitted by the UE/satellite). For example, the UE may receive handover configuration and handover triggering conditions through information related to a new cell that will serve as a handover target. Accordingly, the UE may monitor the handover conditions and, when the conditions are satisfied, perform handover to the target cell.

Meanwhile, as described above, since a wireless communication system utilizing NTN elements has a much larger RTT value compared to a terrestrial communication system, various types of offsets and TA values may be configured/defined/indicated/signaled for efficient time and frequency synchronization. Hereinafter, offsets (e.g., K_offset and k mac), TA values, validity duration, and epoch time for time/frequency synchronization in an NTN-based wireless communication system will be described.

- K_offset and k_mac

FIG. 11b illustrates examples of offsets in a link related to a satellite. The K_offset illustrated in FIG. 11b represents an offset value corresponding to the RTT of the uplink time synchronization reference point (RP). Here, K_offset may correspond to the sum of the service link RTT and the common TA (if indicated). The k_mac illustrated in FIG. 11b represents an offset value corresponding to the RTT between the RP and the base station. For example, K offset may be applied to i) PUSCH transmission timing based on DCI and the DCI-scheduled PUSCH, ii) PUSCH transmission timing based on a random access response (RAR), iii) PUSCH transmission timing based on a configured grant, iv) PUCCH transmission timing according to MsgB, and v) transmission timing of non-periodic SRS/CSI resources. For example, k mac may be applied to UE actions and assumptions related to downlink configuration indicated by MAC-CE command on the PDSCH. In a beam failure recovery procedure, for PRACH transmission in uplink slot n, the UE may monitor the corresponding PDCCH starting from downlink slot "n + k_mac + 4" within the corresponding RAR window.

The cell-specific K offset may be signaled through system information related to NTN (e.g., an NTN-specific SIB). A range of cell-specific K_offset values (0 to 1023 ms) may be used to cover all scenarios. A differential UE-specific K_offset may be signaled through MAC CE, and the corresponding differential UE-specific value range may be 0 to 63 ms. The total UE-specific K offset value equals the cell-specific K offset value minus the differential UE-specific K_offset value. The k_mac may be provided by the network when the downlink and uplink frame timings are not aligned at the base station. Updating of k_mac is not supported, and its value range may be from 1 to 512 ms. When the UE does not receive a k_mac value from the network, the UE may assume k_mac = 0. In FR1, the reference SCS value for the unit of K_offset may be 15 kHz.

- UE-specific TA and common TA

In an NTN-based communication system, the UE may calculate a timing advance (TA) based on the UE's GNSS (global navigation satellite system) capability (e.g., UE location) and higher layer parameters related to satellite ephemeris transmitted from the base station, and this is referred to as a UE-specific TA ( $N_{TA,adj}^{UE}$ ). When the higher layer parameters related to satellite ephemeris are not received from the base station, the UE-specific TA may be set to 0. Then, the TA calculated based on the common TA parameters (e.g., TACommon, TACommonDrift, and/or TACommonDriftVariation) transmitted from the base station as higher layer parameters is referred to as the common TA ( $N_{TA,adj}^{common}$ ). When the common TA parameters are not transmitted from the base station, the common TA may be set to 0. Accordingly, in an NTN-based communication system, the total TA value (T_TA) may be calculated as $N_{TA} + N_{TA,offset} + N_{TA,adj}^{common} + N_{TA,adj}^{UE}$ . Here, N_TA,offset means a TA offset value provided to the UE for each serving cell, and N_TA means a value derived based on a timing advance command.

FIG. 11c illustrates examples of timing advance (TA) values in a link related to a satellite. As shown in FIG. 11c, the UE-specific TA is calculated to compensate for the transmission delay over the service link, while the common TA is calculated to compensate for the transmission delay between the RP and the satellite.

- Valid duration and epoch time

The validity duration refers to the (maximum) time interval during which the UE may apply previously obtained assistance information (e.g., serving and/or neighboring satellite ephemeris and common TA parameters, etc.) without obtaining new assistance information (from the epoch time). Configuration information related to the validity duration may be broadcast by the base station for each cell through system information related to NTN (e.g., SIB19). For example, the validity duration range may consist of {5s, 10s, 15s, 20s, 25s, 30s, 35s, 40s, 45s, 50s, 55s, 60s, 120s, 180s, 240s, 900s}, but is not limited thereto. A validity timer configured with the validity duration value may (re)start at the epoch time of the assistance information. If new or additional assistance information is unavailable within the validity duration, the UE may assume that uplink synchronization has been lost.

The serving satellite ephemeris and common TA parameters may be signaled in the same SIB message and may share the same epoch time. When the epoch time is explicitly provided through the SIB, the epoch time of the assistance information (i.e., satellite ephemeris and common TA parameters) corresponds to the start time of the DL subframe indicated by the SFN and the subframe number signaled together with the assistance information. When the epoch time is not explicitly indicated through the SIB, the epoch time of the assistance information may be implicitly known as the end of the SI window in which the NTN-specific system information (e.g., SIB19) is transmitted. When the epoch time is provided through dedicated signaling, the epoch time of the assistance information corresponds to the start time of the DL subframe and may be represented by the SFN and the subframe number.

In the case of a serving cell, when the epoch time is explicitly indicated by the SFN and subframe number, the UE may consider the corresponding frame as the next SFN following the frame in which the message indicating the current SFN or epoch time is received. In the case of a neighboring cell, when the epoch time is explicitly indicated by the SFN and subframe number, the UE may consider the corresponding frame as the frame closest to the frame in which the message indicating the epoch time is received.

C-4. Integrated sensing and communication (ISAC)

Radio sensing is a technology that can obtain information about the characteristics of an environment and/or objects within the environment by identifying instantaneous flux velocity, angle, and distance (range) of objects using radio frequencies. Because the radio frequency sensing function does not require connecting an object to a device through the network, it may provide object-positioning services without the need for dedicated devices. The ability to obtain range, velocity, and angle information from radio frequency signals may enable a wide range of new functions, such as object detection, object recognition (e.g., vehicles, humans, animals, UAVs), high-precision positioning, tracking, and activity recognition. Radio sensing services may provide information to various industries (e.g., unmanned aerial vehicles, smart homes, V2X, factories, railways, public safety, etc.) that enable applications such as intrusion detection, assisted driving and navigation, trajectory tracking, collision avoidance, traffic management, and health or transportation monitoring. In some cases, radio sensing may use non-3GPP-type sensors (e.g., radar, cameras) to additionally support 3GPP-based sensing. For example, the operation of a wireless sensing service, i.e., the sensing operation, may depend on the transmission, reflection, and scattering of wireless sensing signals. Therefore, radio sensing may provide an opportunity to enhance existing communication systems from communication networks into radio communication and sensing networks.

FIG. 12a and FIG. 12b illustrate examples of sensing operations applicable to the present disclosure. The embodiments shown in FIG. 12a and FIG. 12b may be combined with various embodiments of the present disclosure. Specifically, FIG. 12a illustrates an example of sensing (e.g., monostatic sensing) using a sensing receiver and a sensing transmitter located at the same position, and FIG. 12b illustrates an example of sensing (e.g., bistatic sensing) using a separated sensing receiver and sensing transmitter.

For example, in a wireless communication system based on a 6G network according to the present disclosure, referring to FIG. 12a, the sensing transmitter and sensing receiver may be configured to be included in a single base station (i.e., the same base station) or a single UE (i.e., the same UE). In contrast, referring to FIG. 12b, the sensing transmitter and sensing receiver may be configured to be included in different base stations, in different UEs, or respectively in a UE and a base station.

In this regard, based on whether the sensing transmitter and the sensing receiver are included in a base station or a UE, six types of sensing modes may be defined as follows:

- Mode 1: A mode in which the sensing transmitter and sensing receiver are included in a single base station (e.g., a base station-based sensing mode in a monostatic mode)
- Mode 2: A mode in which the sensing transmitter is included in a first base station and the sensing receiver is included in a second base station different from the first base station (e.g., a base station-based sensing mode in a bistatic mode)
- Mode 3: A mode in which the sensing transmitter is included in a base station and the sensing receiver is included in a UE (e.g., a base station-to-UE sensing mode)
- Mode 4: A mode in which the sensing transmitter is included in a UE and the sensing receiver is included in a base station (e.g., a UE-to-base station sensing mode)
- Mode 5: A mode in which the sensing transmitter and sensing receiver are included in a single UE (e.g., a UE-based sensing mode in a monostatic mode)
- Mode 6: A mode in which the sensing transmitter is included in a first UE and the sensing receiver is included in a second UE different from the first UE (e.g., a UE-based sensing mode in a bistatic mode)

In a wireless communication system based on a 6G network according to the present disclosure, one or more of the six types of sensing modes described above may be used independently or in combination.

In connection with the sensing operations illustrated in FIG. 12a and FIG. 12b, a sensing transmitter may transmit a sensing signal for sensing one or more objects (and/or the environment surrounding the objects). For example, the sensing signal may correspond to a radio (frequency) signal defined to be transmittable by a base station or a UE in a wireless communication system based on the 6G network of the present disclosure. A sensing receiver may receive a signal that has been scattered or reflected by one or more objects (and/or the environment surrounding the objects) from the sensing signal transmitted by the sensing transmitter. At the sensing receiver, sensing data may be derived from the scattered/reflected signal, and sensing results may be generated or obtained through processing of the sensing data. Here, the sensing results may include characteristic information (e.g., position, distance, velocity, angle, etc.) of one or more objects (and/or the environment surrounding the objects). The sensing results generated or obtained in this manner may be used for radio sensing services (e.g., detection or tracking of objects and/or environments) provided by the wireless communication system based on the 6G network of the present disclosure, or may be provided/disclosed to a trusted third party.

Additionally, although the sensing operations in FIG. 12a and FIG. 12b are described as representative examples of operations in a wireless communication system based on a 6G network, they may also be extended and applied to cases where UEs/base stations/signals based on previous generations (e.g., 4G, 5G, etc.) are utilized.

Furthermore, with respect to radio sensing described in the present disclosure, in a wireless communication system based on a 6G network according to the present disclosure, the time/frequency resources for sensing operations and the time/frequency resources for general communication (e.g., UL/DL/sidelink-based communication) may be separately scheduled/configured.

FIG. 13 illustrates an example of time/frequency resources for sensing operations applicable to the present disclosure. The embodiment of FIG. 13 may be combined with various embodiments of the present disclosure.

Referring to FIG. 13, time/frequency resources (hereinafter, sensing resources) for the above-sensing operation (e.g., sensing operation based on FIG. 12a and FIG. 12b) may be configured/allocated separately from time/frequency resources (hereinafter, communication resources) for general communication.

For example, as illustrated in FIG. 13, the sensing resources may be configured or allocated in units of symbols in the time domain and/or in units of resource blocks in the frequency domain. Resources other than those configured or allocated as sensing resources may be used as resources for general communication. That is, the sensing resources and communication resources may be configured or allocated based on a time-division multiplexing (TDM) scheme and/or a frequency-division multiplexing (FDM) scheme in terms of base station/UE operations. Additionally or alternatively, unlike the example shown in FIG. 13, the sensing resources may be configured or allocated based on other units in the time domain (e.g., slot, frame, or absolute time such as ms or $\mu$s) and/or other units in the frequency domain (e.g., subcarrier, carrier, or absolute frequency such as MHz or GHz).

Additionally or alternatively, with respect to the configuration/allocation/scheduling of resources for general communication described in the present disclosure, the relationship between such resources and the sensing resources described above may need to be considered. For example, when configuring or allocating resources for general communication according to embodiments of the present disclosure, such resources may be configured/allocated to perform rate matching or puncturing for the resource region corresponding to the sensing resources. For example, when scheduling resources for general communication according to embodiments of the present disclosure, such resources may be scheduled so as not to overlap with the resource region corresponding to the sensing resources. If, in embodiments of the present disclosure, the resources for general communication and the resource region corresponding to the sensing resources are configured/allocated/scheduled to overlap, either or both operations may be dropped, skipped, or postponed based on priority or predefined rules. That is, in embodiments of the present disclosure, it may be preferable that the resources related to general communication (e.g., resources for signals/channels related to UL/DL/sidelink-based data/control) be configured/allocated/scheduled so as not to overlap with the sensing resources described above.

Additionally, with respect to the radio sensing described in the present disclosure, various channel modeling methods may be applied. Channel modeling related to sensing may refer to constructing a path for transmitting and/or receiving sensing signals and/or scattered/reflected signals, considering the object to be sensed and/or the environment to which the object belongs. Since channel modeling may be related to the performance and requirements of sensing in a wireless communication system, it may be an important aspect for verifying the feasibility of the sensing function.

The channel related to sensing may be classified into a channel between an object (e.g., a target of interest) and the sensing transmitter/receiver, and a channel between the environment to which the object belongs and the sensing transmitter/receiver. In this regard, channel modeling related to sensing may be classified based on the sensing mode (e.g., the six types of modes described above), whether the focus is on an object or an environment, and/or the sensing scenarios. For example, channel modeling for a target in a base station/UE-based monostatic sensing mode, channel modeling for a target in a base station/UE-based bistatic sensing mode, channel modeling for an environment in a base station/UE-based monostatic sensing mode, and channel modeling for an environment in a base station/UE-based bistatic sensing mode may each be differently optimized and configured. For example, when various sensing scenarios are classified, channel modeling may be categorized into channel modeling for detection, location, and tracking scenarios, channel modeling for motion recognition, and channel modeling for imaging or environmental reconstruction scenarios. Additionally, channel modeling related to sensing may be based on a statistical channel modeling technique and/or a deterministic channel modeling technique. For example, modeling for sensing in a wireless communication system based on the 6G network of the present disclosure may be based on a stochastic geometry channel modeling technique and/or a hybrid channel modeling technique including ray tracing channel modeling. Here, the stochastic geometry channel model may be based on various statistical characteristics of channel conditions. In addition, the hybrid channel model may be based on both the ray tracing technique and the stochastic technique. In the case of the hybrid approach, channel modeling for objects (e.g., targets of interest) that require high accuracy and consistency may be performed using the ray tracing technique, while channel modeling for the environment may be performed using the stochastic technique.

FIG. 14 illustrates an example of a procedure related to sensing operations applicable to the present disclosure. The embodiment of FIG. 14 may be combined with various embodiments of the present disclosure.

For example, in a wireless communication system based on the 6G network of the present disclosure, in the case of a sensing operation in which a UE participates, the base station may need to identify the capability of the UE related to the sensing operation. In this regard, the UE may be configured to report capability information to the base station indicating whether it supports the sensing operation. Additionally or alternatively, if the UE is predefined by specification to support sensing operations, such a procedure may be omitted. Furthermore, in the case of a sensing operation in which only the base station participates, the base station may be configured to report capability information indicating whether it supports the sensing operation to the entity (e.g., a higher-layer network entity above the base station) that configures or controls its sensing operation.

For example, the base station may perform signaling with the UE to exchange configuration information related to the sensing operation. For example, the base station may configure or indicate to the UE information related to the sensing operation mode (e.g., based on the six types of modes described above), the entity of the sensing operation (e.g., sensing transmitter, sensing receiver), the resources for the sensing operation (e.g., sensing resources as shown in FIG. 13), the utilization target of sensing results (e.g., the type of radio sensing service based on the 6G network, or a trusted third party), and the channel modeling for sensing (e.g., the channel between the base station/UE and the object/environment). For example, the base station may be configured/instructed with such information from network entity at a higher level/layer of the base station.

For example, the base station and/or the UE may perform a sensing operation based on the configured/indicated information. For example, the base station and/or the UE, in the role of a sensing transmitter and/or sensing receiver, may perform procedures such as transmission of a sensing signal, reception of a scattered/reflected signal, derivation of sensing data, acquisition of sensing results through processing of the sensing data, and provision of the sensing results, as illustrated in FIG. 12a and FIG. 12b described above. In one example, in the operation of the base station/UE described in the present disclosure, the sensing results provided through the sensing operation may also be utilized.

## D. Network Energy Saving (NES)

Energy saving of a base station is being importantly considered in wireless communication systems, including 3GPP, because it may contribute to building an eco-friendly network by reducing carbon emissions and to reducing the operational expenditure (OPEX) of operators in the telecommunications industry. In particular, due to the introduction of 5G communication, higher transmission rates are required, and therefore, base stations need to be equipped with a greater number of antennas and provide services through wider bandwidths and frequency bands. As a result, according to recent studies, the energy cost of base stations has reached a level of about 20% of the total OPEX. Accordingly, the 5G system has adopted various technologies for reducing energy consumption under the name of network energy savings (NES), and the standardization of related technologies is expected to continue. Specifically, Rel-18, which has been recently conducted, discussed techniques such as the following.

--------------------------------------------------------------------------------

1. When it is determined to be possible in the RAN4 study, specify SSB-less SCell operation for Inter-band CA for FR1 and co-located cells, where the UE measures the SSB transmitted from a PCell or another SCell for time/frequency synchronization (including downlink AGC) and L1/L3 measurement of the SCell, and includes potential enhancements for the SCell activation procedure if necessary. [RAN4, RAN2]
2. Specify enhancements to the Cell DTX/DRX mechanism, including inter-node information exchange for Cell DTX/DRX and alignment of Cell DTX/DRX with UE DRX in RRC_CONNECTED mode. [RAN2, RAN1, RAN3]

    Note: No change to SSB transmission due to Cell DTX/DRX.
    Note: Any impact on IDLE/INACTIVE UEs due to the above enhancement should be avoided.

3. Specify techniques in the spatial and power domains as follows:

    Specify necessary enhancements to CSI and beam management related procedures, including measurement and reporting, and signaling, to enable efficient adaptation of spatial elements (e.g., antenna ports, active transceiver chains). [RAN1, RAN2]
    Specify necessary enhancements to CSI related procedures, including measurement and reporting, and signaling, to enable efficient adaptation of the power offset value between PDSCH and CSI-RS. [RAN1, RAN2]
    Note: The above goals are only for UE-specific channels/signals.
    Note: Considering the total number and requirements of total CSI reports, conventional UE CSI/CSI-RS capabilities apply.

4. Specify a mechanism to prevent conventional UEs from camping on cells adopting Rel-18 NES technology, if necessary. [RAN2]
5. Specify CHO (Conditional Handover) procedure enhancements when the source/target cell is in NES mode. [RAN2]
6. Specify enhancements for limiting paging in restricted areas and inter-node beam activation. [RAN3].
7. Specify corresponding RRM/RF core requirements for the above features, if necessary. [RAN4]

--------------------------------------------------------------------------------

According to the application of the NES technology, a base station may perform operations such as controlling on/off in a time axis for a certain time duration, adjusting transmission/reception resources for UE-common or UE-specific signals/channels, changing an amount of frequency-domain resources, adjusting transmission power, or turning on/off antenna ports, transmission-reception points (TRPs), etc. in a spatial domain. FIG. 15 illustrates an example of an operation procedure of a base station supporting an NES technology applicable to the present disclosure. Referring to FIG. 15, the base station identifies NES solution(s) to be applied. The NES solution(s) may be related to control of signal transmission/reception (e.g., on/off), beam operation, handover procedure, channel measurement and reporting, and the like. Which NES solution(s) to apply may be adaptively selected according to a current situation (e.g., cell load level, characteristics of connected UEs, etc.) or may be predefined. The base station having identified the NES solution(s) performs signaling for NES. The specific signaling procedure may vary depending on the identified NES solution(s). For example, the base station may transmit common information regarding the NES solution(s), may transmit configuration information necessary for NES operation to at least one UE. In addition, the base station may receive capability information related to NES from at least one UE. Thereafter, the base station performs operations for NES. In this case, the base station may perform the operations for NES based on the signaling performed earlier. That is, according to system information, configuration information, and control information transferred through the signaling, the base station may turn on/off transmission/reception of a specific signal, turn on/off elements of a spatial domain, or adjust resources for transmission/reception of a measurement signal.
Through a procedure such as that of FIG. 12, the NES technology may be performed. Examples of NES solutions that may be performed through a procedure such as that of FIG. 12 are as follows.

- Intra-system energy saving solution: the RAN node may request a neighboring RAN node to switch at least one SSB beam into its deactivated cell, or may perform paging to a UE in an inactive state (e.g., a stationary UE) using a limited beam set.
- Inter-system energy saving solution: the NG-RAN node having a capacity booster cell may autonomously switch the cell to an inactive state.
- SSB-less SCell solution: when an SSB or an SSB-based RRM measurement timing configuration (SMTC) configuration for an SCell is not provided, the UE may obtain a timing reference and an AGC source from another serving cell. In FR1 or FR2, the base station may configure intra-band CA or inter-band CA including an SCell without SSB transmission, and in this case, SSB/SIB transmission may be triggered by a wake up signal (WUS) of the UE. Accordingly, since the period of a common channel/signal such as an SSB is increased, the base station may remain in a sleep state for a longer time.
- Cell DTX/DRX solution: To reduce downlink transmission/uplink reception activity time of a base station, a periodic cell DTX/DRX pattern (e.g., active and inactive periods) may be commonly configured for UEs in a cell having such a feature. Here, the cell DTX pattern and the cell DRX pattern may be separately configured and activated, and up to two cell DTX/DRX patterns may be configured per MAC entity. When cell DTX is configured and activated, at least one of monitoring for SPS opportunities or monitoring a PDCCH may be suspended during a cell DTX inactive period. When cell DRX is configured and activated, at least one of transmission on a CG resource or SR transmission may be suspended during a cell DRX inactive period. The cell DTX/DRX may be activated/deactivated through RRC signaling or L1 group common signaling.
- For cell DTX/DRX, parameters such as an active duration and a cycle may be configured. The active duration is a period in which the UE waits to receive a PDCCH or an SPS opportunity and to transmit an SR or a CG, and the cycle specifies periodic repetition of the active duration and an inactive duration. When both cell DTX and cell DRX are configured, parameters such as the active duration and the cycle are common. If the base station recognizes an emergency call or a public safety-related service (e.g., MPS or MCS), the network may release or deactivate the cell DTX/DRX configuration so as not to affect the corresponding service. In addition, at least partial overlap is required between the active duration of connected mode DRX of the UE and the active duration of cell DTX/DRX. For example, the connected mode DRX cycle of the UE may be a multiple of the cell DTX/DRX cycle or vice versa.
- Conditional handover (CHO) solution: the CHO procedure, in which execution of handover is determined by the UE, is used while an NES technology is applied (e.g., when a cell activates or deactivates cell DTX/DRX). In this case, the UE may use an NES-specific CHO event to execute CHO to a candidate cell, and as an additional triggering condition for this, reception of DCI that activates CHO condition(s) set as an NES event indication may be applied.
- Spatial and power domain adaptation solution: to support a gNB in transceiver muting and/or transmission power adaptation, a UE may be configured to report multiple CSI entries in CSI reporting based on a plurality of sub-configurations. Each sub-configuration corresponds to a spatial domain adaptation pattern (e.g., a subset of available spatial elements) and/or a power offset between a data channel (e.g., PDSCH) and CSI-RS. With the application of the spatial and power domain adaptation solution, CSI configuration, measurement, and/or reporting operations may be affected.

**SSB-less SCell**

FIG. 16 illustrates an example procedure for CA operation using an SSB-less SCell applicable to the present disclosure. Referring to FIG. 16, a base station transmits configuration information for the SCell to the UE. That is, the base station transmits configuration information for CA to provide service through CA operation to the UE. Here, the CA operation may be intra-band CA or inter-band CA. For example, the configuration information for the SCell may include information containing information for adding the SCell (e.g., sCellToAddModList), and specifically, may include a cell index, a physical cell identifier, information related to DL-UL configuration, information related to BWP, information related to Cell DTX/DRX, information related to downlink frequency (e.g., FrequencyInfoDL), and so on. Subsequently, the UE determines the configuration for CA operation and may perform communication using the PCell and SCell of the base station. In this case, the UE can confirm that the SCell is an SSB-less SCell based on the information related to the downlink frequency included in the configuration information, and can confirm related parameters. For example, the UE determines that the SCell is an SSB-less SCell by confirming the existence of a parameter (e.g., SSBlessSCell) indicating the SSB-less SCell, and can confirm the timing reference and AGC source for the SCell based on information about the reference cell (e.g., referenceCell). In the case of FIG. D03, the reference cell may be the PCell. Therefore, the UE may use the PCell as the timing reference and AGC source for communication in the SCell.

[Blank]

In 3GPP NR Release 19, a work item called "Enhancements of network energy savings for NR" has been additionally approved. Specifically, the following enhancement techniques are being considered in 3GPP NR Release 19, as shown below.

--------------------------------------------------------------------------------

Objectives of SI (Study Item) or Core Part WI (Work Item) or Test Part WI

The objectives of the WI are as follows:

1. Specify procedures and signaling methods to support on-demand SSB SCell operation for both intra-band and inter-band CA for UEs in connected mode configured with CA. [RAN1/2/3/4]

- Specify triggering method(s). (Select among: UE uplink wake-up signal using existing signals/channels, cell on/off indication via backhaul, and SCell activation/deactivation signaling)
- Note 1: On-demand SSB transmission can be used by the UE for at least SCell time/frequency synchronization, L1/L3 measurements, and SCell activation, and is supported for FR1 and FR2 in non-shared spectrum.

2. Study procedures and signaling method(s) to support on-demand SIB1 for UEs in Idle/Inactive mode as follows: [RAN1/2/3]

- Triggering method by an uplink wake-up signal using existing signals/channels.
- Providing wake-up signal configuration to the UE.
    - Note: Modification of SSB is not discussed in this objective.
- Inter-gNB information exchange for at least the configuration of the wake-up signal, if necessary.
- Checkpoint for normative work at RAN#105.

3. Specify adaptation of common signal/channel transmissions. [RAN1/2/3/4]

- Adaptation of SSB in the time domain, e.g., periodicity adaptation.
- Adaptation of PRACH in the time domain.
- Adaptation of PRACH in the spatial domain, e.g., study non-uniform PRACH resources per SSB, and specify if identified as beneficial.
    - This study will be conducted only during Q2 2024.
- Adjustment of paging occasions, including limiting paging occasions in the time domain.
    - Note: Paging latency shall not increase.

- Note: There should be no negative impact on legacy UEs unless a significant benefit is demonstrated.

4. Specify the corresponding core requirements for the above features. [RAN4]

------------------------------------------------------------------------

**<u>On-demand SSB</u>**

Based on the aforementioned Objective 1, a method to reduce energy consumption can be discussed, wherein a base station transmits an SSB on a specific cell through an on-demand SSB procedure and does not transmit the SSB on the corresponding cell if the on-demand SSB procedure is not present. In the legacy NR system, since the SSB had to be transmitted periodically at all times for purposes such as time/frequency synchronization or RRM measurement, it was difficult to reduce energy consumption even when the base station had no data to receive or transmit. Considering this, the base station can reduce its energy consumption by not performing SSB transmission and instead performing SSB transmission only when an on-demand SSB procedure is involved. The corresponding on-demand SSB procedure can be triggered through one of the following methods:

1) A UE transmits an uplink signal/channel (e.g., PRACH, PUCCH, PUSCH, SRS, etc., in the NR system) to request the base station to transmit the SSB.

2) A request for SSB transmission is made from Base Station (or TRP) #1 to Base Station (or TRP) #2 through an interbase station interface (e.g., Xn interface in the NR system) or backhaul signaling.

3) Signaling whether to transmit the SSB for a corresponding SCell through SCell activation/deactivation signaling.

Considering coexistence with legacy NR UEs, the operation in Release 19 is limited to on-demand SSB operation for UEs in connected mode and SCells. However, in future releases or next-generation communication systems, on-demand SSB operation (for SSB transmission on a PCell) considering UEs in inactive or idle mode, or UEs for initial access, may be defined. Additionally, carrier aggregation (CA) including the corresponding SCell can be applied to both intra-band CA and inter-band CA. The SSB on the corresponding SCell transmitted through the on-demand SSB procedure can be utilized for functionalities such as at least time/frequency synchronization, L1/L3 measurement, and SCell activation.

<u>On-demand SIB1 transmission</u>

Through Objective 2 in Table E-1, a method for reducing energy consumption can be discussed, wherein a base station transmits SIB1 for a specific cell through an on-demand SIB1 procedure and does not transmit SIB1 for the corresponding cell when the on-demand SIB1 procedure is not present. In the legacy NR system, since the base station had to periodically provide SIB1, which includes system information and random access information for initial access or for UEs in idle mode to access a cell, it was difficult to reduce energy consumption even when there was no data to receive or transmit. Considering this, the base station can reduce its energy consumption by not performing SIB1 transmission and only performing SIB1 transmission when an on-demand SIB1 procedure is involved. The corresponding on-demand SIB1 procedure can be triggered by a UE transmitting an uplink signal/channel (e.g., PRACH in the NR system), and specifically, the following scenarios may be considered, but it may not be limited thereto:

1) Scenario 1: As shown in Figure 17a, a UE that recognizes that SIB1 is not transmitted on cell #1 by receiving an SSB (and/or other DL signals/channels) from the cell #1 can trigger SIB1 transmission by transmitting a signal requesting SIB1 (referred to as a WUS, wake-up signal, for convenience in the present disclosure) based on information provided in the SSB (and/or other DL signals/channels) and/or pre-established information. Upon receiving the WUS, the base station may transmit a specific DL signal/channel on cell #1 as a response thereto, and (with or without transmitting the DL signal/channel) may transmit SIB1 on cell #1.

2) Scenario 2: As shown in Figure 17b, a UE that recognizes that SIB1 is not transmitted on cell #2 by receiving an SSB (and/or other DL signals/channels such as SIB1) from cell #1 may attempt to camp-on via cell #2. The UE may trigger SIB1 transmission for cell #2 by transmitting a signal requesting SIB1 (i.e., WUS) on cell #1 based on information provided in the received SSB (and/or other DL signals/channels such as SIB1) and/or pre-established information. Upon receiving the WUS, the base station may transmit a specific DL signal/channel (on cell #1 or cell #2) as a response thereto, and (with or without transmitting the DL signal/channel) may transmit SIB1 for cell #2 on cell #1 or cell #2.

3) Scenario 3: As shown in Figure 17c, a UE that recognizes that SIB1 is not transmitted on cell #2 by receiving an SSB (and/or other DL signals/channels such as SIB1) from cell #1 may attempt to camp-on via cell #2. The UE may trigger SIB1 transmission for cell #2 by transmitting a signal requesting SIB1 (i.e., WUS) on cell #2 based on information provided in the received SSB (and/or other DL signals/channels such as SIB1) and/or pre-established information. Upon receiving the WUS, the base station may transmit a specific DL signal/channel (on cell #1 or cell #2) as a response thereto, and (with or without transmitting said DL signal/channel) may transmit SIB1 for cell #2 on cell #1 or cell #2.

[Blank]

<u>Specific Embodiments of the Present Disclosure</u>

The present disclosure relates to a technology for operating a synchronization signal/physical broadcast channel block (SSB) and system information in an on-demand manner in a wireless communication system. Specifically, the present disclosure proposes a technology for providing the SSB and/or the system information based on a request in a cell or a frequency band in which transmission of the SSB (e.g., synchronization signal, MIB) and/or the system information (e.g., MIB, SIB) has been temporarily suspended for a network energy saving (NES) operation. Hereinafter, in the present disclosure, '/' means 'and', 'or', or 'and/or' depending on the context.

[Blank]

The base station may operate technologies such as controlling on/off of a UE for a certain duration on a time axis for NES purposes, adjusting transmission and reception resources for UE-common or UE-specific signals/channels, changing an amount of frequency domain resources, adjusting transmission power, or turning on/off antenna ports (APs), transmission reception points (TRPs), etc., in a spatial domain. In the present disclosure, the listed technologies are referred to as 'NES technology' or 'NES_tech', and a state in which at least one of the NES_techs is applied is referred to as an 'NES mode' or 'NES state'. The base station may indicate to the UE which NES_tech(s) are applied for each NES_tech or NES_tech group [Approach 1], or may pre-configure NES_tech or NES_tech group(s) corresponding to each code point of a specific indicator [Approach 2]. Here, the specific indicator may be indicated through DCI or MAC CE, or may be configured through higher layer signaling.

In the case of Approach 1, when at least one NES_tech is applied to the UE, the corresponding state may be defined as an NES mode or an NES state, and furthermore, may be treated as different NES modes or different NES states depending on which NES_tech is applied. The NES mode or NES state may be used as a concept indicating whether at least one NES technology is applied, or in addition, indicating which NES technology(ies) are applied. When the NES mode or NES state further indicates which NES technology(ies) are applied, different NES modes or different NES states may include different combinations of NES_techs. In the case of Approach 2, for example, when a 1-bit indicator is used, '0' may indicate that the corresponding NES_tech is not applied, and '1' may indicate that at least one NES_tech is applied. In this case, when '1' is indicated through the indicator, the corresponding state may be defined as an NES mode or an NES state. In another example, when a 2-bit indicator is used, '00' may indicate that there is no corresponding NES_tech, '01' may indicate that at least one NES_tech_A is applied, '10' may indicate that at least one NES_tech_B is applied, and '11' may indicate that at least one NES_tech _C is applied. In this case, when a code point other than '00' is indicated through the indicator, the corresponding state may be defined as an NES mode or an NES state. Furthermore, the UE may determine NES state #1 when '01' is detected, NES state #2 when '10' is detected, and NES state #3 when '11' is detected. Accordingly, it may be distinguished, for each code point, whether the state is an NES state and/or which NES state it is.

For NES purposes, the base station may turn on/off certain spatial elements (e.g., APs, active transmit/receive chains, panels, or TRPs) or adjust power values for downlink signals/channels. To dynamically apply various NES technologies in the spatial domain and power domain, the base station may associate, for one CSI report configuration (e.g., CSI-ReportConfig), CSI-RS resources or resource sets having different antenna ports, or may associate a plurality of power offsets (e.g., a powerControlOffset parameter representing a power offset value between PDSCH and CSI-RS, a powerControlOffsetSS parameter representing a power offset value between SSS and CSI-RS, etc.).

Specifically, at least one of the following CSI frameworks may be introduced.

- Framework#1: A plurality of CSI-RS resource sets are associated with one channel measurement resource (CMR) or one interference measurement resource (IMR) in CSI-ReportConfig. Here, the CMR may be configured by a resourcesForChannelMeasurement parameter, and the IMR may be configured by a csi-IM-ResourcesForInterference parameter or an nzp-CSI-RS-ResourcesForInterference parameter. For example, for the CMR, CSI-RS resource set #1 and CSI-RS resource set #2 are associated, CSI-RS resources belonging to CSI-RS resource set #1 may be configured with 16 antenna ports (APs), and CSI-RS resources belonging to CSI-RS resource set #2 may be configured with 8 APs.
- Framework#2: When one CSI-RS resource set associated with one CMR or one IMR is configured in CSI-ReportConfig, at least one CSI-RS resource having different properties such as the number of APs and/or power offset may be configured within the CSI-RS resource set. For example, for CSI-RS resource set #1 configured as a CMR, CSI-RS resource #1 belonging to CSI-RS resource set #1 is configured with 16 APs, and CSI-RS resource #2 belonging to the same set may be configured with 8 APs. For example, for CSI-RS resource set #1 configured as a CMR, CSI-RS resource #1 belonging to CSI-RS resource set #1 is configured with power offset #1, and CSI-RS resource #2 belonging to the same set may be configured with power offset #2.
- Framework#3: When one CSI-RS resource set associated with one CMR or one IMR is configured in CSI-ReportConfig, some or all CSI-RS resources in the set may be configured with a plurality of numbers of APs and/or power offset values. For example, for CSI-RS resource set #1 configured as a CMR, CSI-RS resource #1 belonging to CSI-RS resource set #1 is configured with up to 16 APs, and CSI reporting using at least one AP among them may be configured. Alternatively, CSI-RS resource #2 belonging to the same CSI-RS resource set #1 is configured with a plurality of power offset values, and CSI reporting using all or part of the power offsets may be configured.

For the CSI frameworks described above, a CSI reporting method may be defined through at least one of the following options.

- Option #1: CSIs considering a plurality of numbers of APs values and/or a plurality of power offset values configured in one CSI reporting may all be included in one CSI reporting. Alternatively, CSIs considering a plurality of numbers of APs values and/or a plurality of power offset values determined through configuration/indication of the base station may be included in one CSI reporting. In this case, the number of APs values and/or power offset values configured/indicated through the base station may be a part of the number of APs values and/or power offset values configured in the CSI reporting.

- Option #2: Even if a plurality of numbers of APs values and/or a plurality of power offset values are configured in one CSI reporting, CSIs considering the number of single AP value and/or a single power offset value through configuration/indication of the base station may be included in one CSI reporting.
- Option #3: Even if a plurality of numbers of APs values and/or a plurality of power offset values are configured in one CSI reporting, CSIs considering a part of the number of APs values and/or a part of power offset values through judgment/decision/selection of the UE based on a criterion pre-configured by the base station or predefined may be included in one CSI reporting.

In configuration for CSI reporting (e.g., CSI-ReportConfig), L sub-configurations greater than 1 may be configured, and each sub-configuration may correspond to one of a spatial domain adaptation pattern or a power domain adaptation pattern.

Here, the spatial domain adaptation pattern may correspond to a specific number of APs or an AP on/off pattern, or may correspond to a specific CSI-RS power value (e.g., a CSI-RS power value determined by a powerControlOffsetSS parameter which is a power offset value between SSS and CSI-RS, since turning off a part of antenna elements corresponding to one AP may affect the CSI-RS power value). For example, when applying Framework #2, for CSI-RS index #n1 belonging to a resource set, the number of A1 APs or a P1 power value is configured, and for CSI-RS index #n2 belonging to the same resource set, the number of A2 APs or a P2 power value may be configured. In this case, sub-configuration index #s1 is associated with CSI-RS index #n1, and sub-configuration index #s2 is associated with CSI-RS index #n2, thereby allowing spatial domain adaptation patterns to be configured differently for each sub-configuration. When applying Framework #3, when CSI-RS index #n1 belonging to a resource set is configured with the number of A1 APs (or a P1/P2 power value), sub-configuration index #s1 is associated with the number of A1 APs (or the P1 power value or a delta value from the P1 power value), and sub-configuration index #s2 is associated with the number of A2 APs less than the number of A1 APs (or the P2 power value or a delta value from the P1 power value) configuring CSI-RS index #n1, thereby allowing spatial domain adaptation patterns to be configured differently for each sub-configuration.

In addition, the power domain adaptation pattern may mean that a power offset value (e.g., a power offset value determined by a powerControlOffset parameter which is a power offset value between PDSCH and CSI-RS, or a powerControlOffsetSS parameter which is a power offset value between SSS and CSI-RS) is varied. For example, when applying Framework #2, for CSI-RS index #n1 belonging to a resource set, a P1 power value is configured, and for CSI-RS index #n2 belonging to the same resource set, a P2 power value may be configured. In this case, sub-configuration index #s1 is associated with CSI-RS index #n1, and sub-configuration index #s2 is associated with CSI-RS index #n2, thereby allowing power domain adaptation patterns to be configured differently for each sub-configuration.

In addition, when applying Framework #3, for CSI-RS index #n1 belonging to a resource set, a P1 power value and a P2 power value may be configured. In this case, sub-configuration index #s1 is associated with the P1 power value, and sub-configuration index #s2 is associated with the P2 power value or a delta value from the P1 power value, thereby allowing power domain adaptation patterns to be configured differently for each sub-configuration.

By utilizing one of the options #1/2/3 described above, the UE may feedback to the base station a CSI reporting including CSI(s) corresponding to N sub-configurations, where N is between 1 and L among the L sub-configurations.

[Blank]

From the perspective of a base station operating a plurality of frequency bands, when the number of serving UEs is small or the traffic load is relatively low, periodically transmitting the SSB and/or system information may cause unnecessary energy consumption. In the present disclosure, the frequency band may be replaced with a band, a carrier, a serving cell, or a BWP (bandwidth part), and the like.

For example, three frequency bands may be operated as shown in FIG. 18. FIG. 18 illustrates an example of frequency bands operated by a base station according to an embodiment of the present disclosure. Referring to FIG. 18, when the base station operates three frequency bands, the base station may periodically transmit the SSB (e.g., legacy SSB) in some frequency bands (e.g., F1), transmit a simplified or modified S-SSB (simplified-SSB) in other frequency bands (e.g., F2), or not transmit both the SSB and the S-SSB in another frequency band (e.g., F3). That is, F2 and F3 may be understood as SSB-less frequency bands. Through this, the base station can achieve energy saving. In the present disclosure, the S-SSB may have a structure in which, compared to signals/channels included in the legacy SSB (e.g., PSS, SSS, PBCH DM-RS, PBCH, etc.), some signals/channels are omitted, the structure of signals/channels is modified, or different information from the legacy is transmitted through a PBCH payload. In addition, in the present disclosure, as the S-SSB has a structure different from that of the legacy SSB, it may be understood that the version/mode of the SSB is different and may be referred to by other terms.

[Blank]

The present disclosure considers a scenario in which the UE receives information on F2 and/or F3 through the SSB and/or SIB1 transmitted in F1. According to an embodiment, the UE, having received signaling for another frequency band, receives the SSB (e.g., one of the SSB and S-SSB) and/or SIB1 in the F2 or F3 frequency band by performing an on-demand SSB/SIB1 procedure in F2 or F3. Then, the UE can perform a RACH procedure (e.g., random access procedure), enter a connected mode, and receive and transmit downlink and/or uplink data through F2 or F3. Specifically, for the UE operating according to such a scenario, the present disclosure proposes various embodiments for information configured for the UE, a method for selecting F2 or F3, an on-demand SSB/SIB1 procedure, and the like; however, the technology proposed in the present disclosure is not limited to this scenario. For example, the UE may first receive the S-SSB transmitted in the F2 frequency band from an initial access stage and identify the existence of the F1 frequency band through information in the S-SSB of the F2 frequency band, in which case the embodiments described below may be applied in the F1 frequency band.

In addition, for convenience of description, the present disclosure collectively refers to a frequency band in which the S-SSB can be transmitted, such as F2, and a frequency band in which the SSB may not be transmitted, such as F3, as the 'F2 frequency band'. However, it is obvious that the embodiments described below can also be applied to frequency bands of other names. For example, a frequency band in which the SSB can be transmitted, such as F1, may be referred to as a 'first type frequency band' or a 'non-NES frequency band'; a frequency band in which the S-SSB can be transmitted, such as F2, may be referred to as a 'second type frequency band' or a 'first type NES frequency band'; and a frequency band in which the SSB and S-SSB may not be transmitted, such as F3, may be referred to as a 'third type frequency band' or a 'second type NES frequency band'.

[Blank]

FIG. 19 illustrates an example of a procedure for providing a communication service based on a plurality of frequency bands according to an embodiment of the present disclosure. FIG. 19 exemplifies a method performed by a base station.

Referring to FIG. 19, in step S1901, the base station configures a first frequency band and a second frequency band. Here, the base station may configure the first frequency band as a first-type frequency band capable of providing a Synchronization Signal Block (SSB), and configure the second frequency band as a second-type frequency band providing a Secondary Synchronization Signal Block (S-SSB) or a third-type frequency band that does not provide either an SSB or an S-SSB. Furthermore, the base station may configure an SSB and/or system information on the first frequency band to signal information related to the second frequency band in the first frequency band. Alternatively, the base station may configure an S-SSB and/or system information on the second frequency band to signal information related to the first frequency band in the second frequency band.

In step S1903, the base station transmits configuration information in the first frequency band or the second frequency band. The configuration information may include information required for communication services using the first frequency band and the second frequency band. For example, the configuration information transmitted in the first frequency band may include information necessary for performing communication in the second frequency band or for proceeding with an on-demand SSB/System Information Block (SIB) procedure. Here, the configuration information may include at least one of: information related to the association of channels between the first frequency band and the second frequency band; information related to a signal/channel for requesting the on-demand SSB/SIB procedure; information related to a signal/channel provided in response to the on-demand SSB/SIB procedure; information related to the structure of the frequency bands; and information related to a Random Access Channel (RACH) procedure or a paging procedure in the second frequency band.

In step S1905, the base station controls the state of the second frequency band based on the configuration information. Here, the state relates to whether the SSB, S-SSB, and/or SIB are transmitted. That is, the base station may operate the second frequency band in a first state in which the SSB, S-SSB, and/or SIB are not transmitted in the second frequency band, or in a second state in which the SSB, S-SSB, and/or SIB are transmitted in the second frequency band. According to various embodiments, the state may be changed based on a signal received from the UE. That is, the base station receives a signal (e.g., UE Wake-up Signal (WUS)) transmitted from the UE based on the configuration information transmitted in step S1903, and may transmit the SSB, S-SSB, and/or SIB based on the reception of the signal. At this time, specific configurations for the transmission of the SSB, S-SSB, and/or SIB may be determined based on attributes (e.g., resources, sequences, etc.) of the received signal.

[Blank]

FIG. 20 illustrates an example of a procedure for performing communication based on a plurality of frequency bands according to an embodiment of the present disclosure. FIG. 20 exemplifies a method performed by a UE.

Referring to FIG. 20, in step S2001, the UE receives a signal in a first frequency band or a second frequency band. Here, the signal is a broadcast signal (e.g., SSB, S-SSB, synchronization signal, system information, etc.) and may include at least one signal receivable even before connection establishment with a base station. That is, the UE may receive a synchronization signal, acquire synchronization based on the synchronization signal, and receive system information. Here, the first frequency band may include a first-type frequency band capable of providing an SSB, and the second frequency band may include a second-type frequency band providing an S-SSB or a third-type frequency band that does not provide an SSB/S-SSB.

In step S2003, the UE obtains configuration information for the frequency bands based on the received signals. That is, the UE may obtain the configuration information by decoding the received signal or by decoding another signal indicated by the received signal. At this time, the UE may obtain information required for performing communication or proceeding with a procedure in the second frequency band based on a signal received in the first frequency band. Alternatively, the UE may obtain information required for performing communication or proceeding with a procedure in the second frequency band based on a combination of a signal received in the first frequency band and a signal received in the second frequency band. Here, the configuration information may include at least one of: information related to the association of channels between the first frequency band and the second frequency band; information related to a signal/channel for requesting an on-demand SSB/SIB procedure; information related to a signal/channel provided in response to the on-demand SSB/SIB procedure; information related to the structure of the frequency bands; and information related to a RACH procedure or a paging procedure in the second frequency band.

In step S2005, the UE receives an SSB/SIB in the second frequency band based on the configuration information. Here, the SSB/SIB includes an SSB, an S-SSB, and/or an SIB. Specifically, the UE transmits a signal (e.g., UE WUS) for requesting transmission of the SSB/SIB in the first frequency band or the second frequency band based on the configuration information transmitted in step S2003. At this time, according to specific configurations for transmission of the SSB, S-SSB, and/or SIB to be requested, the UE may determine attributes (e.g., resources, sequences, etc.) of the signal and transmit the signal having the determined attributes to the base station. Furthermore, although not shown in FIG. 20, the UE may perform a RACH procedure or a paging procedure in the second frequency band based on the SSB/SIB.

[Blank]

According to various embodiments, the UE may transmit a UE wake-up signal (WUS) to request transmission of an SSB and/or a SIB1 in an F2 frequency resource. Here, the 'UE WUS' functionally refers to a signal that triggers (or causes) the transmission of the SSB/SIB1 in the corresponding frequency resource. Accordingly, the UE WUS may be implemented by using another signal/message (e.g., measurement report, CSI report, PRACH preamble, reference signal (e.g., SRS), etc.) defined in the current technical specifications, or may be implemented by using a newly defined signal/message. In addition, the UE WUS may be referred to as a request signal, an initiation signal, a trigger signal, a state change signal, or other terms having equivalent technical meanings.

[Blank]

As in the embodiments described with reference to FIGS. 19 and 20, the base station and the UE may perform communication by using a frequency band capable of providing an SSB and a frequency band that does not provide an SSB. Hereinafter, the present disclosure describes in more detail embodiments in various aspects necessary for performing communication by using a plurality of different types of frequency bands.

[Blank]

[Embodiment #1] Information that can be configured to a UE through an SSB and/or a SIB transmitted in an F1 frequency band or an S-SSB transmitted in an F2 frequency band, and operations of the UE based on the information
The UE may receive at least a portion of the following information through an SSB (e.g., a synchronization signal, a Master Information Block (MIB)) and/or system information (e.g., MIB, SIB) transmitted in the F1 frequency band. Alternatively, the UE may receive at least a portion of the following information through an S-SSB transmitted in the F2 frequency band.

[Table 1]

| Information | Explanation |
|---|---|
| A list of frequency bands (e.g., F2 and/or F3) having an association or a QCL relationship with the F1 frequency band | The existence of an association or a QCL relationship between two frequency bands (e.g., F1 and F2) means that the F1 frequency band can be a timing, power control, path-loss estimation, and/or synchronization reference for the F2 frequency band. That is, this may mean that the F1 frequency band can be a timing reference for the F2 frequency band, the F1 frequency band can be a reference for power control or path-loss estimation for the F2 frequency band, or the F1 frequency band can be a time/frequency synchronization reference for the F2 frequency band. |
| Information related to time and frequency resources for transmitting the UE WUS | Time and frequency resource information in which a UE WUS can be transmitted may be configured. The UE WUS resources may be configured within an F2 frequency band or within an F1 frequency band. In particular, the UE WUS resources may be configured within the F1 frequency band in a case of a cell DRX inactive period of a base station, or in a case corresponding to a situation where the F1 frequency band is not a synchronization reference for the F2 frequency band and S-SSB/SIB transmission is off in the F2 frequency band.<br>Frequency, time, and/or sequence-related information of the UE WUS (e.g., PRACH preamble index, cyclic shift (CS), sequence index, root sequence index, phase offset, orthogonal cover code (OCC), etc.) may vary according to a frequency band (e.g., F2 or F3) in which a requested SSB and/or SIB1 is to be transmitted. For example, even for a UE WUS transmitted in a resource allocated to the F1 frequency band, the frequency, time, and/or sequence-related information of the UE WUS may be differently configured depending on whether the UE requests an SSB transmitted on the F2 frequency band or an SSB transmitted on the F3 frequency band. Alternatively, the frequency, time, and/or sequence-related information of the UE WUS may vary according to a requested SSB index and/or a requested signal (e.g., SSB or SIB1). For example, even for an SSB to be transmitted in an F2 frequency resource, the frequency, time, and/or sequence-related information of the UE WUS may be differently configured for each SSB index or for each SSB index group.<br>Alternatively, the frequency, time, and/or sequence-related information of the UE WUS may be differently configured depending on whether transmission for an SSB or an SSB group of a specific index is requested or beam sweeping for all SSBs is requested. As another example, the frequency, time, and/or sequence-related information of the UE WUS may be differently configured according to whether a signal requested to be transmitted to the base station through the UE WUS is an SSB or a SIB1. As yet another example, even for a SIB1 requested to be transmitted to the base station through the UE WUS, the frequency, time, and/or sequence-related information of the UE WUS may be differently configured according to which SSB index the SIB1 transmission corresponds to from a Quasi Co-Location (QCL) perspective.<br>Here, the fact that the frequency, time, and/or sequence-related information is differently configured means that at least one of a plurality of candidates, which are configured to be selectable according to a given criterion (e.g., frequency band, requested signal, attribute of the requested signal, etc.), is included. |
| Information related to signals and/or channels corresponding to the UE WUS | After a UE performs a request for a specific signal/channel through transmission of a UE WUS, the UE can determine whether the corresponding request was properly transmitted only after receiving the corresponding signal/channel. Therefore, it may be necessary for the base station to configure information about the signal/channel corresponding to the UE WUS. As an |

(continued)

| Information | Explanation |
| --- | --- |
| | example, when requesting transmission of an SSB and/or a SIB1 of a base station through a UE WUS, information on an initial reception timing of the SSB and/or SIB1 expected by the UE may be configured. The initial reception timing may be configured as a relative timing from the UE WUS transmission timing (e.g., X ms or Y slots after the UE WUS transmission timing, or after the nearest sub-frame boundary or half-frame boundary after X ms or Y slots from the UE WUS transmission timing, etc.), or may be determined according to a predefined rule. Alternatively, the initial reception timing may be configured as an absolute timing (e.g., the first SFN#Z after the UE WUS transmission timing) or may be determined according to a predefined rule.<br>In the case of SIB1, by configuring information of a type similar to existing system information (SI)-window information, the SIB1 may be periodically transmitted according to a specific period after the base station receives the UE WUS. Alternatively, the SIB1 may be periodically received according to a specific period after the UE transmits the UE WUS. For example, for reception of SIB1, such as reception of a SIB1 PDCCH (e.g., a PDCCH scheduling a SIB1 PDSCH) through an F2 frequency band, a configuration for a CORESET transmitted in the F2 frequency band, which is separate from CORESET#0 on an F1 frequency band, may be provided. Additionally, a configuration for a search space set for SIB1 reception associated with the corresponding CORESET may also be provided. Alternatively, information on PDSCH resources for PDCCH-less SIB1 PDSCH reception may be configured. As another example, after the UE transmits the UE WUS, if the UE expects Msg2 (e.g., a random access response (RAR) for a RACH procedure) or HARQ feedback as a response from the base station, a configuration for a CORESET transmitted in the F2 frequency band, separate from CORESET#0 on the F1 frequency band, may be provided for the purpose of receiving Msg2 and/or HARQ feedback, and furthermore, a configuration for a search space set associated with the corresponding CORESET may be provided. |
| Structures of F1 and F2 frequency bands | In configuring F1 and F2 frequency bands to a UE, one of the following options may be applied:<br>Opt 1) Two frequency bands may be configured as a single Bandwidth Part (BWP). The BWP may be configured to include a set of Physical Resource Blocks (PRBs) that are non-contiguous on a frequency axis.<br>Opt 2) Each frequency band may be configured as separate BWPs. In this case, an F1 BWP and an F2 BWP may be configured separately.<br>Opt 3) F1 and F2 frequency bands may be configured as different DL carriers belonging to a single serving cell.<br>Opt 4) F1 and F2 frequency bands may be configured as separate serving cells. |
| Information related to a Random Access Channel (RACH) in the F2 frequency band | A mapping relationship between an SSB index and/or an S-SSB index transmitted in an F1 and/or F2 frequency band and a RACH occasion (RO) of the F2 frequency band, and a RACH configuration in the F2 frequency band may be provided through a SIB1 transmitted in the F2 frequency band. |
| Information related to a CORESET for a RACH procedure and/or a paging procedure | A UE may perform a series of processes such as a RACH procedure and paging reception in an F2 frequency band. A configuration for a CORESET transmitted in the F2 frequency band for the RACH procedure, paging reception, and the like may be provided through a SIB1 transmitted in the F2 frequency band, and additionally, a configuration for a search space set associated with the corresponding CORESET may be provided through the SIB1 transmitted in the F2 frequency band. |

When information related to an association or a QCL relationship between frequency bands is provided, a UE may perform timing, power control or path-loss estimation, and synchronization for an F2 frequency band based on an F1 frequency band. That is, in performing synchronization or the like in the F2 frequency band, the UE may use the F1 frequency band as a synchronization reference, a timing reference, or the like.

When information related to time/frequency resources for transmitting a UE WUS is provided, the UE identifies resources (e.g., time, frequency, or sequence) for transmitting the UE WUS, and may transmit the UE WUS using the identified resources. At this time, based on the provided information, the UE may select one of a plurality of resource candidates based on at least one of a target signal to be requested, an attribute of the target signal, and a frequency band for transmitting the UE WUS, and may transmit the UE WUS using the selected resource.

When information related to a signal/channel corresponding to the UE WUS is provided, the UE transmits the UE WUS and may receive the signal/channel requested by the UE WUS based on the provided information. Specifically, the UE may attempt to receive the requested signal/channel using a timing, a resource, and the like determined based on the provided information.

When information related to a RACH in the F2 frequency band is provided, the UE may perform a random access procedure in the F2 frequency band based on an SSB detected in the F1 frequency band or an S-SSB detected in the F2 frequency band. Specifically, the UE selects an RO associated with the SSB detected in the F1 frequency band or the S-SSB detected in the F2 frequency band, in the F2 frequency band, and may transmit a RACH preamble through the selected RO.

When information related to structures of the F1 and F2 frequency bands is provided, the UE may identify the structures of the F1 frequency band and/or the F2 frequency band. Accordingly, the UE can identify functional/hardware requirements for using the F1 frequency band and/or the F2 frequency band, and determine operations required for switching between the F1 frequency band and/or the F2 frequency band. Through this, the UE can determine whether the F2 frequency band is valid for the UE.

When information related to a CORESET for a RACH procedure and/or a paging procedure in the F2 frequency band is provided, the UE can determine a resource location configured for monitoring a PDCCH for the RACH procedure and/or the paging procedure in the F2 frequency band. That is, to receive the PDCCH in the F2 frequency band while performing a given procedure, the UE may decode signals received through the indicated CORESET.

[Blank]

[Embodiment #2] Procedure for selecting an F2 frequency band as a frequency band for performing an on-demand SSB/SIB1 procedure

FIG. 21 illustrates an example of a procedure for performing an on-demand SSB/SIB1 procedure according to an embodiment of the present disclosure. FIG. 21 exemplifies a method performed by a UE.

Referring to FIG. 21, in step S2101, the UE receives configuration information related to the selection of a frequency band. The configuration information may include information related to conditions for selecting a frequency band for a RACH procedure or a paging procedure. The configuration information may be received through a first frequency band or a second frequency band. For example, the configuration information may include at least one of information indicating a condition and information indicating a parameter used for determining the condition. For example, the configuration information may be received according to Embodiment #1.

In step S2103, the UE obtains information for selecting the frequency band. The UE obtains information for determining whether a condition indicated by the configuration information is satisfied. For example, the information may be obtained through measurement, by identifying information stored in the UE, or through computation. For example, the information may include at least one of channel quality measured in the first frequency band, the capability of the UE, or random variables for each frequency band to which weights are applied.

In step S2105, the UE selects a frequency band. The UE may determine whether the condition configured by the configuration information is satisfied based on the obtained information. For example, the UE may compare a value included in the obtained information with a threshold included in the configured condition. Alternatively, the UE may determine whether a value included in the obtained information matches a value included in the configured condition. Alternatively, the UE may process a value included in the obtained information based on information included in the configured condition and identify a processing result.

In step S2107, the UE performs the on-demand SSB/SIB1 procedure. The UE, having selected the frequency band according to whether the condition is satisfied, may perform the on-demand SSB/SIB1 procedure in the selected frequency band. That is, the UE transmits a signal for requesting transmission of the SSB/SIB1 in the selected frequency band and may receive the SSB/SIB1 in the second frequency band. At this time, the frequency band used to perform the on-demand SSB/SIB1 procedure may include one of the first frequency band or the second frequency band, or may include both the first frequency band and the second frequency band.

As in the embodiment described with reference to FIG. 21, the frequency band for the RACH procedure or the paging procedure may be selected by evaluating the configured condition. More specific embodiments for the condition for selecting the frequency band, applicable to the procedure exemplified in FIG. 21, are as follows.

Based on the information/configuration provided according to the aforementioned Embodiment #1, the UE may select the F2 frequency band, instead of the F1 frequency band, as the frequency band for performing the on-demand SSB/SIB1 procedure. At this time, a method for selecting the F2 frequency band may follow one of the following embodiments or a combination thereof. In this embodiment, selecting the F2 frequency band as the frequency band for performing the on-demand SSB/SIB1 procedure means performing a procedure for the purpose of requesting transmission of an SSB and/or a SIB1 of a base station in the corresponding frequency band. At this time, a UE WUS for requesting the SSB and/or SIB1 transmission may be transmitted in the F1 frequency band or the F2 frequency band.

[Embodiment #2-1] RSRP, measured through reception of SSB (e.g., PSS, SSS and/or PBCH DM-RS) transmitted in the F1 frequency band,-based method: Based on a predefined Reference Signal Received Power (RSRP) threshold or an RSRP threshold configured through an SSB and/or a SIB transmitted in the F1 frequency band or an S-SSB transmitted in the F2 frequency band, the UE may select one of the F1 and F2 frequency bands. For example, based on an RSRP measured using an SSB (e.g., Secondary Synchronization Signal (SSS) and/or Physical Broadcast Channel (PBCH) De-Modulation Reference Signal (DM-RS)) transmitted in the F1 frequency band, the UE may select F1 or F2. Specifically, the UE may select the F1 frequency band if the measured RSRP is greater than or equal to a threshold, and select the F2 frequency band if the RSRP is less than the threshold. Alternatively, the UE may select the F1 frequency band if the measured RSRP is less than the threshold, and select the F2 frequency band if the RSRP is greater than or equal to the threshold.

[Embodiment #2-2] UE capability-based method: Through base station signaling (e.g., information configured/provided through an SSB and/or a SIB transmitted in the F1 frequency band, or an S-SSB transmitted in the F2 frequency band), a UE having a specific capability (e.g., a Network Energy Saving (NES)-capable UE or a UE WUS-capable UE) may be configured to use the F2 frequency band instead of the F1 frequency band. On the other hand, a UE not having the corresponding capability remains in the F1 frequency band and may perform a RACH procedure or the like.

[Embodiment #2-3] Random selection-based method: The UE may randomly select one of the F1 frequency band or the F2 frequency band. Alternatively, for a specific frequency band, a weighting factor may be configured through an SSB and/or a SIB transmitted in the F1 frequency band or an S-SSB transmitted in the F2 frequency band. Based on the configured weighting factor (e.g., to increase a selection probability of a frequency band to which a higher weight is applied), the UE selects one frequency band and, through the corresponding frequency band, may perform a RACH procedure, an on-demand SSB/SIB1 procedure, or the like according to the selected frequency band.

[Embodiment #2-4] Combined method of RSRP threshold-based and random selection-based methods: For example, if an RSRP measured through reception of an SSB (e.g., SSS and/or PBCH DM-RS) transmitted in the F1 frequency band is greater than or equal to or less than a threshold, a specific F1 or F2 frequency band may be selected. On the other hand, if the RSRP is less than or greater than or equal to the threshold, a weighting factor may be configured such that a specific F1 or F2 frequency band is prioritized during random selection.

[Blank]

[Embodiment #3] Method for performing an on-demand SSB/SIB1 procedure after changing an operating frequency to an F2 frequency band

According to the aforementioned embodiments, a UE may change an operating frequency to an F2 frequency band and then perform an on-demand SSB/SIB1 procedure in the F2 frequency band. Embodiments of the on-demand SSB/SIB1 procedure are as follows.

[Blank]

FIG. 22 illustrates an example of a procedure for receiving an SSB or an SIB based on an on-demand scheme according to an embodiment of the present disclosure. FIG. 22 exemplifies a method performed by a UE.

Referring to FIG. 22, in step S2201, the UE can identify a structure of a request procedure. Here, the request procedure includes an on-demand SSB/SIB1 procedure including an operation of transmitting a request signal for requesting transmission of an SSB, an S-SSB, and/or a SIB1 in a second frequency band. The structure of the request procedure relates to whether the content of the request is delivered through a single signaling or through multi-stage signalings. In other words, the UE may determine whether to perform single signaling or a plurality of signalings to request the transmission of the SSB/SIB1. According to an embodiment, the UE may determine the structure of the request signal based on configuration information provided from a base station or a predefined rule. When a plurality of signalings are used, the request signal may be understood as a set of a series of signals or as a first signal among a series of signals. However, if the structure of the request procedure is not configurable or selectable and is fixed to one method, this step may be understood as an operation of identifying a predefined structure.

In step S2203, the UE can determine resources for the request signal. For example, the UE may determine resources (e.g., at least one of time resources, frequency resources, and a sequence) used for transmitting the request signal based on configuration information received from the base station in a first frequency band or the second frequency band. At this time, according to an embodiment, the resource may be selected as one corresponding to a type of signal to be requested and/or a transmission scheme among a plurality of candidate resource regions.

In step S2205, the UE transmits the request signal. That is, the UE may transmit the request signal for requesting the transmission of the SSB, the S-SSB, and/or the SIB1 in the second frequency band by using the structure and resources identified in the previous steps. At this time, the UE may transmit the request signal in the first frequency band or the second frequency band. If the structure of the request procedure is identified as a method of delivering the content of the request through a plurality of signalings in step S2201, the UE may transmit at least one additional signal to the base station after transmitting the request signal. In this case, the request signal and the at least one additional signal may be transmitted in the same frequency band or may be transmitted in different frequency bands.

In step S2207, the UE receives a signal corresponding to the request signal. That is, the UE may receive the SSB, the S-SSB, and/or the SIB1 as the signal corresponding to the request signal. At this time, according to various embodiments, the UE may determine a time window and receive the SSB, the S-SSB, and/or the SIB1 within the time window. According to an embodiment, the time window may start after a first time interval from a timing at which the request signal is transmitted. A starting point and a length of the time window may be determined based on configuration information received from the base station or may be determined based on a predefined rule.

[Blank]

FIG. 23 illustrates an example of a procedure for transmitting an SSB or an SIB based on an on-demand scheme according to an embodiment of the present disclosure. FIG. 23 exemplifies a method performed by a base station.

Referring to FIG. 23, in step S2301, the base station receives a request signal. The request signal is a signal for requesting transmission of an SSB, an S-SSB, and/or a SIB1 in a second frequency band, and includes a signal transmitted for an on-demand SSB/SIB1 procedure. The request signal may be received by using resources (e.g., at least one of time resources, frequency resources, and a sequence) determined based on configuration information provided by the base station. At this time, the request signal may be a signal for a request procedure based on a single signaling, or a signal for a request procedure based on multi-stage signalings. If the request signal is for a request procedure based on multi-stage signalings, although not shown in FIG. 23, the base station may receive at least one additional signal.

In step S2303, the base station can determine a requested target and a transmission scheme. According to the resources used for the request signal, it may be indicated which type of signal among the SSB, the S-SSB, and/or the SIB1 is requested, and what the request is for attributes (e.g., beam direction, index, the number of times, etc.) of the requested type of signal. Accordingly, the base station may determine the type and attributes of the requested signal based on the request signal. In addition, based on the resources used for the request signal, a capability of a UE, a capability of the base station, or the configuration information, the base station may determine at which timing to transmit the requested signal, whether to transmit it in a single occasion or repeatedly, and the like.

In step S2305, the base station transmits the requested signal. For example, the base station may transmit at least one of the SSB, the S-SSB, or the SIB1 in the second frequency band. At this time, the base station may transmit at least one of the SSB, the S-SSB, or the SIB1 based on the target and the transmission scheme determined in step S2303. That is, the base station may change a state of the second frequency band and transmit at least one of the SSB, the S-SSB, or the SIB I.

[Blank]

According to a defined procedure (e.g., a procedure using the configuration information according to the aforementioned Embodiment #1), a UE may transmit a UE WUS signal/channel on an F2 frequency band. At this time, in determining timing and power control for the UE WUS transmission, it may be performed based on an SSB received through an F1 frequency band. For example, in transmitting the UE WUS in the F2 frequency band, if an association or a QCL relationship between the F1 frequency band and the F2 frequency band is configured, it is possible to determine timing and power values of the UE WUS transmitted in the F2 frequency band based on a specific SSB index received in the F1 frequency band.

Like the configuration information proposed in the aforementioned Embodiment #1, information related to a frequency and/or time and/or sequence of the UE WUS may be differently configured according to a frequency band where a requested SSB/SIB1 is transmitted, an index of a requested SSB/SSB group, a type of a requested signal (e.g., SSB or SIB1), an SSB index corresponding to a requested SIB1, and the like. Accordingly, the UE selects an appropriate resource according to the SSB/SIB1 to be requested and may attempt to transmit the UE WUS. If appropriate UE WUS resources are configured in a granular state according to the requested SSB/SIB1, the UE, after transmitting the UE WUS, may receive only a response of a base station corresponding to the UE WUS (e.g., a random access response (RAR) in a RACH procedure or a response having a structure similar to Msg2) and complete the corresponding SSB/SIB1 procedure.

Meanwhile, even after receiving the response of the base station to the UE WUS transmission, the UE may need to transmit additional request information (hereinafter referred to as 'Msg3') including information that was not transmitted through the UE WUS. For example, when a common UE WUS for an SSB and a SIB1 is defined, the UE receives the response of the base station according to the UE WUS transmission and may indicate whether an actually requested signal/channel is an SSB or a SIB1 through Msg3. As another example, when the common UE WUS for the SSB or the SIB1 is defined, the UE receives the response of the base station according to the UE WUS transmission and may indicate, through Msg3, whether the actually requested signal/channel is an SSB or an SSB group corresponding to a certain SSB or SSB group index, or a SIB1 of a certain QCL relationship. Here, information related to resources allocated/configured to transmit Msg3 may be included in the response of the base station.

After the UE transmits the UE WUS, the UE may expect that the base station will transmit a signal corresponding to the UE WUS after a certain time interval has elapsed and/or during a certain time window, in consideration of a processing time of the base station and/or the UE. At this time, the signal corresponding to the UE WUS may include a specific SSB and/or SIB1 requested through the UE WUS, or may include Msg2 and/or HARQ feedback, like the configuration information proposed in Embodiment #1. Here, the certain time interval may be expressed as X msec or Y slots, and X or Y values may be pre-configured or predefined in technical specifications. In addition, the UE may expect to receive the signal corresponding to the UE WUS during a certain time window, that is, before the time window expires, and a duration value (e.g., 20 msec) of the corresponding time window may be pre-configured or predefined in the technical specifications. For example, the value of the time window may be received from the base station through a procedure such as Embodiment #1 or may be received through separate signaling.

If the UE expects to receive the signal corresponding to the UE WUS but determines that there is no signal corresponding to the UE WUS, a penalty may be applied. Here, the case where it is determined that there is no signal corresponding to the UE WUS may mean, for example, that the corresponding signal is not detected during a certain timer or a duration of a time window, or that a received signal strength of the corresponding signal is determined to be less than or equal to a given threshold (e.g., a threshold having a separately pre-configured value or a predefined value). In addition, applying the penalty may mean ramping up a power value and/or a count value in an on-demand procedure. If the corresponding power value and/or count value reach a pre-configured maximum value, the UE may proceed with a RACH procedure in the F1 frequency band, or may select another frequency band (e.g., F3) and start a new on-demand SSB/SIB1 procedure.

[Blank]

FIG. 24 illustrates an example of a procedure for performing an on-demand SSB/SIB1 procedure using a plurality of frequency bands according to an embodiment of the present disclosure. FIG. 24 exemplifies signal exchange between a UE 2410 and a base station 2420.

Referring to FIG. 24, in step S2401, the base station 2420 transmits an SSB in an F1 frequency band. Accordingly, the UE 2410 may receive the SSB in the F1 frequency band. Here, the SSB includes information related to an F2 frequency band. That is, the base station 2420 may signal the existence of the F2 frequency band through the SSB transmitted in the F1 frequency band (e.g., signaling including the information proposed in Embodiment #1).

In step S2403, the UE 2410 detects the SSB and changes an operating frequency from the F1 frequency band to the F2 frequency band to proceed with the on-demand SSB/SIB1 procedure. In step S2405, the UE 2410 transmits a UE WUS to the base station 2420 in the F2 frequency band. That is, the UE 2410 performs the on-demand SSB/SIB1 procedure. In step S2407, the base station 2420 transmits a downlink signal corresponding to the UE WUS to the UE 2410. That is, the UE 2410, having received the SSB in the F1 frequency band, may change the operating frequency to the F2 frequency band according to the criteria proposed in Embodiment #2, and perform the on-demand SSB/SIB1 procedure as proposed in Embodiment #3.

[Blank]

In a case where a base station operates a plurality of frequency bands, the base station may periodically transmit an SSB and/or system information only in a specific frequency band for Network Energy Saving (NES) purposes, while not periodically transmitting corresponding signals/channels in the remaining frequency bands. In this situation, the present disclosure has proposed a technology for a specific UE to camp on by successfully performing initial access in a frequency band periodically providing the SSB and the like and in other frequency bands.

[Blank]

The proposed methods described above may be implemented independently, but may also be implemented in a form of combination (or merging) of some proposed methods. Information on whether the proposed methods are applied (or information on rules of the proposed methods) may be defined by a rule such that the base station informs the UE through a predefined signal (e.g., a physical layer signal or a higher layer signal).

The present disclosure may be embodied in other specific forms without departing from the technical idea and essential features described herein. Therefore, the above detailed description should not be interpreted in a limiting sense in all aspects and should be considered as illustrative. The scope of the present disclosure should be determined by a reasonable interpretation of the appended claims, and all modifications within the equivalent scope of the present disclosure are included in the scope of the present disclosure. In addition, claims having no explicit reference relationship in the claims may be combined to constitute an embodiment, or may be included as new claims through amendment after filing.

## INDUSTRIAL APPLICABILITY

The embodiments of the present disclosure may be applied to various wireless access systems. Examples of various wireless access systems include 3GPP (3rd Generation Partnership Project) systems or 3GPP2 systems.
The embodiments of the present disclosure may be applied not only to the above various wireless access systems but also to all technical fields to which the above various wireless access systems are applied. Furthermore, the proposed method may be applied to mmWave and THz communication systems using an ultra-high frequency band.
Additionally, the embodiments of the present disclosure may be applied to various applications such as autonomous vehicles and drones.

## Claims

**1.** A method performed by a user equipment (UE) in a wireless communication system, the method comprising:

receiving a first synchronization signal in a first frequency band;
receiving second system information in the first frequency band;
receiving configuration information related to a second frequency band based on the first synchronization signal and the first system information;
transmitting a first signal requesting a second synchronization signal or second system information in the second frequency band; and
receiving a second signal comprising the second synchronization signal or the second system information in the second frequency band,
wherein the configuration information comprises at least one of information related to a resource for transmitting the first signal or information related to the second signal.

**2.** The method of claim 1, wherein the information related to the resource for transmitting the first signal comprises information related to at least one of frequency, time, or a sequence, and wherein at least one of the frequency, the time, or the sequence comprises at least one among a plurality of candidates selectable based on at least one of a frequency band for transmitting the first signal, a requested signal, or an attribute of a requested signal.

**3.** The method of claim 1, wherein the information related to the second signal comprises at least one of information related to a reception time point of the second signal, information related to a window for receiving the second signal, or information related to a control resource set (CORESET) used for receiving the second signal.

**4.** The method of claim 1, wherein the transmitting the first signal comprises determining to transmit the first signal in the second frequency band, based on the first synchronization signal and the first system information, and wherein the first signal is determined to be transmitted in the second frequency band based on at least one of channel quality measured in the first frequency band, a capability of the UE, or weights per frequency band.

**5.** The method of claim 1, further comprising: transmitting a third signal that indicates an object included in the second signal, wherein the requested object comprises at least one of a type of the signal or an attribute of the signal.

**6.** The method of claim 1, further comprising: transmitting a third signal that indicates a transmission scheme of the second signal, wherein the transmission scheme comprises at least one of a time point of the second signal or whether transmission is repetitive.

**7.** The method of claim 6, wherein the third signal is transmitted in response to receiving a fourth signal which is received in response to the first signal.

**8.** The method of claim 1, wherein the second signal is received during a time window configured for the second signal, after a first time interval elapses following the transmission of the first signal.

**9.** The method of claim 8, wherein the configuration information comprises information related to a duration of the time window.

**10.** A method performed by a base station in a wireless communication system, the method comprising:

transmitting a first synchronization signal in a first frequency band;
transmitting second system information in the first frequency band;
transmitting configuration information related to a second frequency band based on the first synchronization signal and the first system information;
receiving a first signal requesting a second synchronization signal or second system information in the second frequency band; and
transmitting a second signal comprising the second synchronization signal or the second system information in the second frequency band,
wherein the configuration information comprises at least one of information related to a resource for transmitting the first signal or information related to the second signal.

**11.** The method of claim 10, wherein the information related to the resource for transmitting the first signal comprises information related to at least one of frequency, time, or a sequence, and wherein at least one of the frequency, the time, or the sequence comprises at least one among a plurality of candidates selectable based on at least one of a frequency band for transmitting the first signal, a requested signal, or an attribute of a requested signal.

**12.** The method of claim 10, wherein the information related to the second signal comprises at least one of information related to a reception time point of the second signal, information related to a window for receiving the second signal, or information related to a control resource set (CORESET) used for receiving the second signal.

**13.** The method of claim 10, further comprising: receiving a third signal that indicates an object included in the second signal, wherein the requested object comprises at least one of a type of the signal or an attribute of the signal.

**14.** The method of claim 10, further comprising: receiving a third signal that indicates a transmission scheme of the second signal, wherein the transmission scheme comprises at least one of a time point of the second signal or whether transmission is repetitive.

**15.** The method of claim 10, wherein the second signal is transmitted during a time window configured for the second signal, after a first time interval elapses following the reception of the first signal.

**16.** The method of claim 15, wherein the configuration information comprises information related to a duration of the time window.

**17.** A user equipment (UE) in a wireless communication system, the UE comprising:

a transceiver; and
a processor connected to the transceiver,
wherein the processor is configured to:

receive a first synchronization signal in a first frequency band;
receive second system information in the first frequency band;
receive configuration information related to a second frequency band based on the first synchronization signal and the first system information;
transmit a first signal requesting a second synchronization signal or second system information in the second frequency band; and
receive a second signal comprising the second synchronization signal or the second system information in the second frequency band,
wherein the configuration information comprises at least one of information related to a resource for transmitting the first signal or information related to the second signal.

**18.** A base station in a wireless communication system, the base station comprising:

a transceiver; and
a processor connected to the transceiver,
wherein the processor is configured to:

transmit a first synchronization signal in a first frequency band;
transmit second system information in the first frequency band;
transmit configuration information related to a second frequency band based on the first synchronization signal and the first system information;
receive a first signal requesting a second synchronization signal or second system information in the second frequency band; and
transmit a second signal comprising the second synchronization signal or the second system information in the second frequency band,
wherein the configuration information comprises at least one of information related to a resource for transmitting the first signal or information related to the second signal.

**19.** A communication device comprising:

at least one processor; and
at least one computer memory connected to the at least one processor and storing instructions that, based on being executed by the at least one processor, cause the at least one processor to perform operations comprising:

receiving a first synchronization signal in a first frequency band;
receiving second system information in the first frequency band;
receiving configuration information related to a second frequency band based on the first synchronization signal and the first system information;
transmitting a first signal requesting a second synchronization signal or second system information in the second frequency band; and
receiving a second signal comprising the second synchronization signal or the second system information in the second frequency band,
wherein the configuration information comprises at least one of information related to a resource for transmitting the first signal or information related to the second signal.

**20.** A non-transitory computer-readable medium storing at least one instruction, the at least one instruction being executable by a processor, the at least one instruction causing a device to:

receive a first synchronization signal in a first frequency band;
receive second system information in the first frequency band;
receive configuration information related to a second frequency band based on the first synchronization signal and the first system information;
transmit a first signal requesting a second synchronization signal or second system information in the second frequency band; and
receive a second signal comprising the second synchronization signal or the second system information in the second frequency band,
wherein the configuration information comprises at least one of information related to a resource for transmitting the first signal or information related to the second signal.

FIG. 1

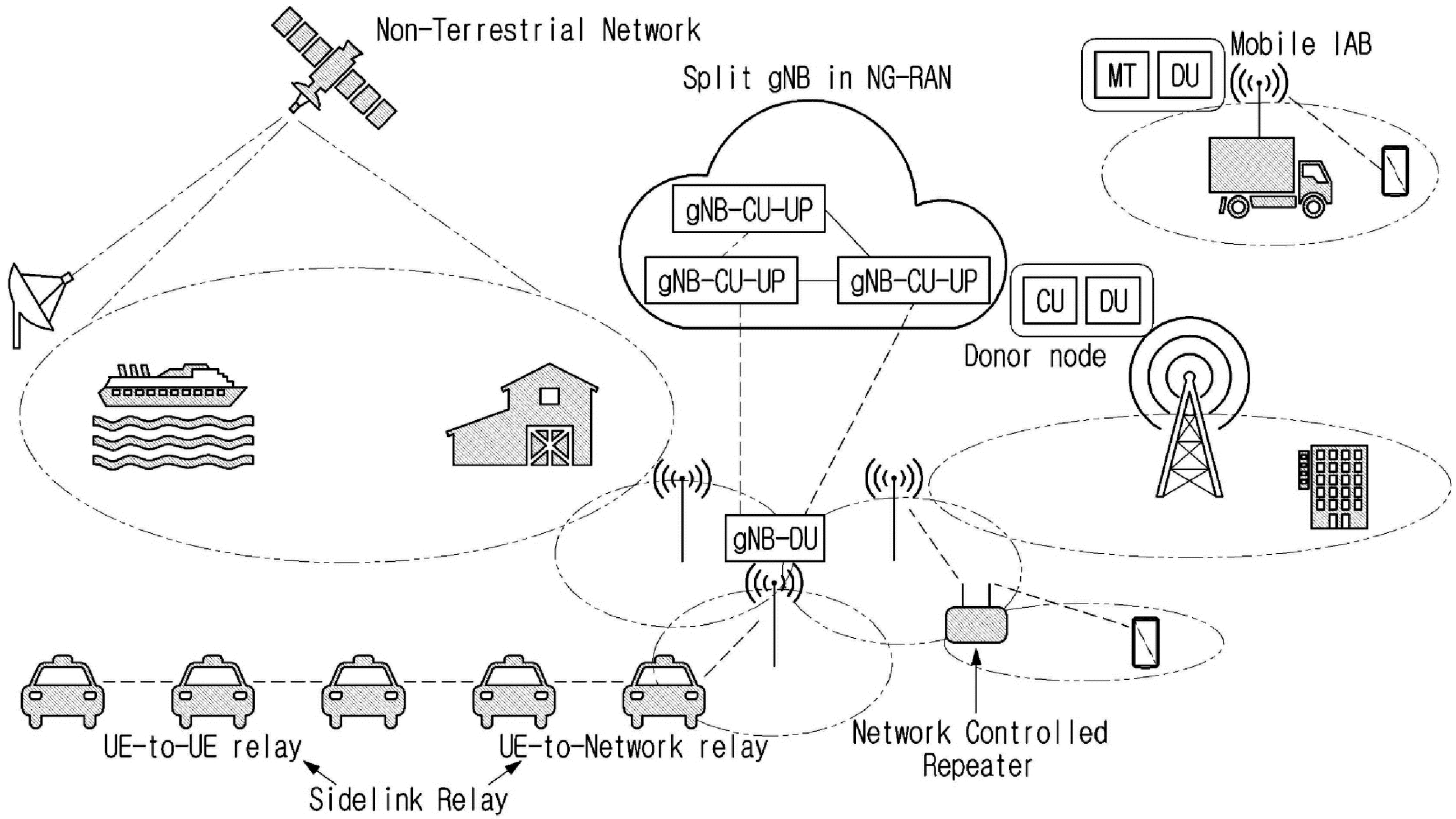
Non-Terrestrial Network
Split gNB in NG-RAN
gNB-CU-UP
gNB-CU-UP
gNB-CU-UP
Mobile IAB
MT
DU
CU
DU
Donor node
gNB-DU
UE-to-UE relay
UE-to-Network relay
Sidelink Relay
Network Controlled
Repeater

FIG. 2

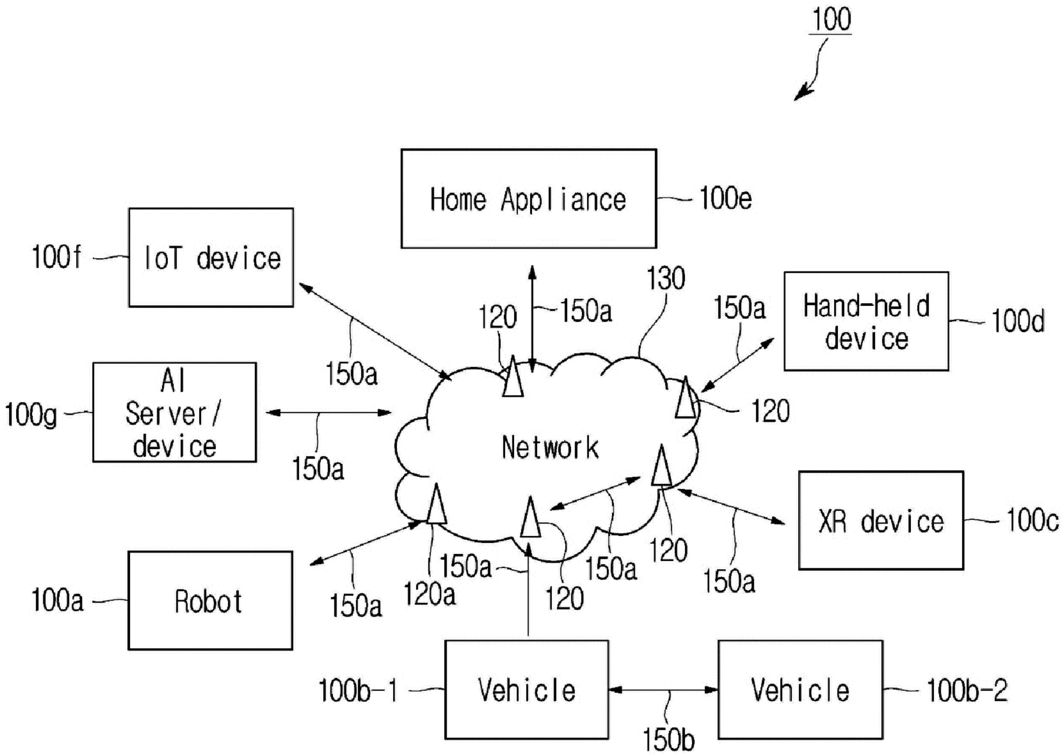
100
Home Appliance
100e
100f
IoT device
130
120
150a
150a
Hand-held device
100d
AI Server/ device
100g
150a
120
150a
Network
XR device
100c
Robot
100a
150a
120a
150a
120
150a
120
150a
Vehicle
100b-1
Vehicle
100b-2
150b

FIG. 3

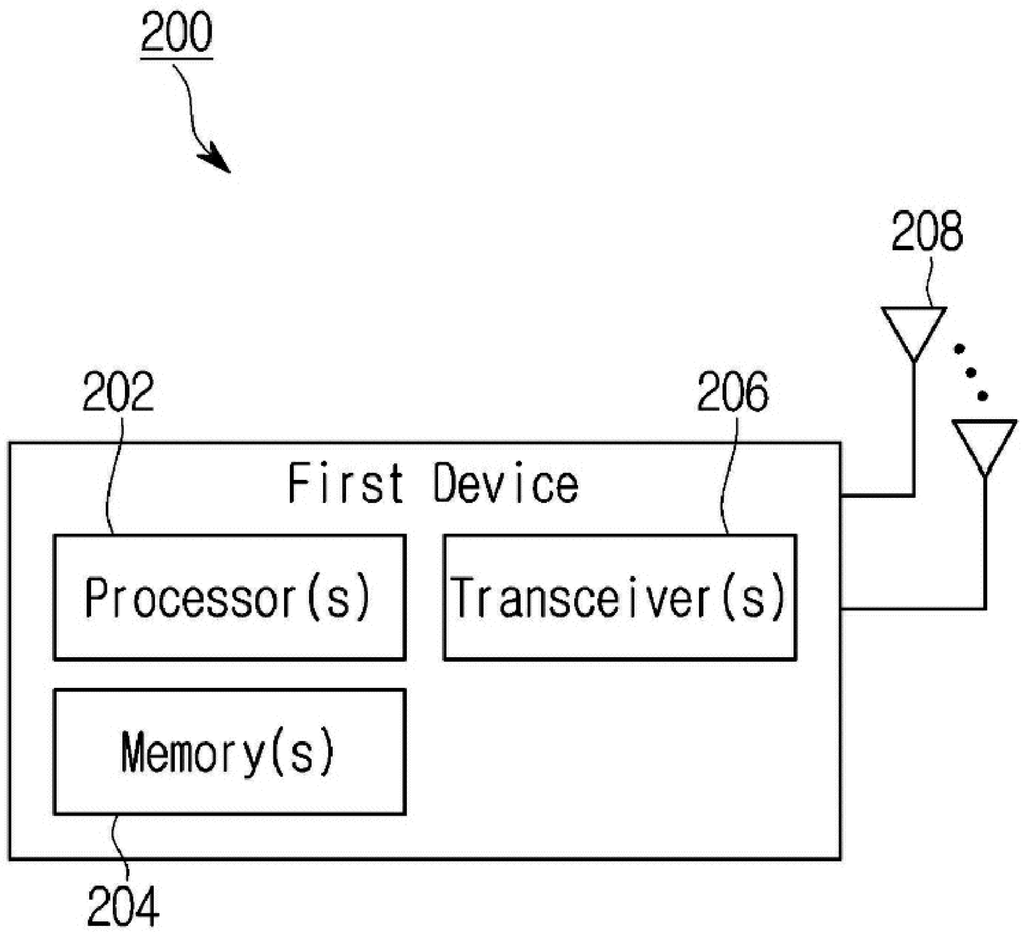
200
208
202
206
First Device
Processor(s)
Transceiver(s)
Memory(s)
204

FIG. 4

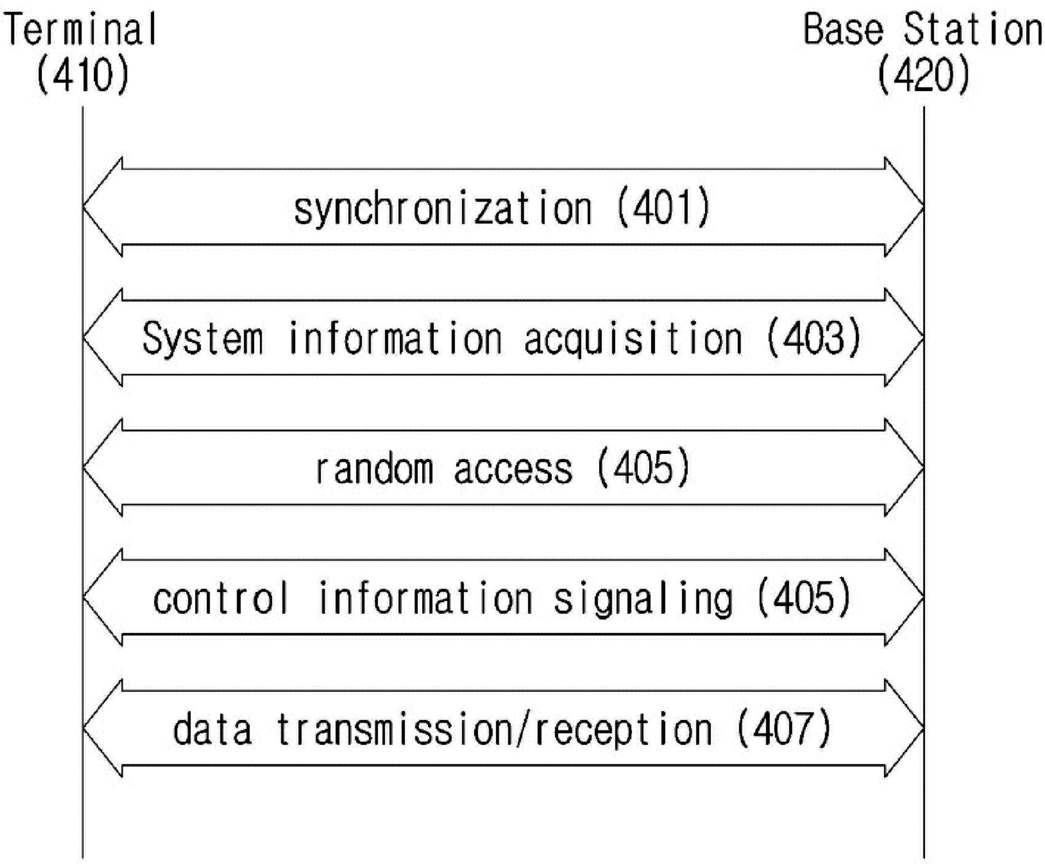
Terminal
(410)
Base Station
(420)
synchronization (401)
System information acquisition (403)
random access (405)
control information signaling (405)
data transmission/reception (407)

FIG. 5

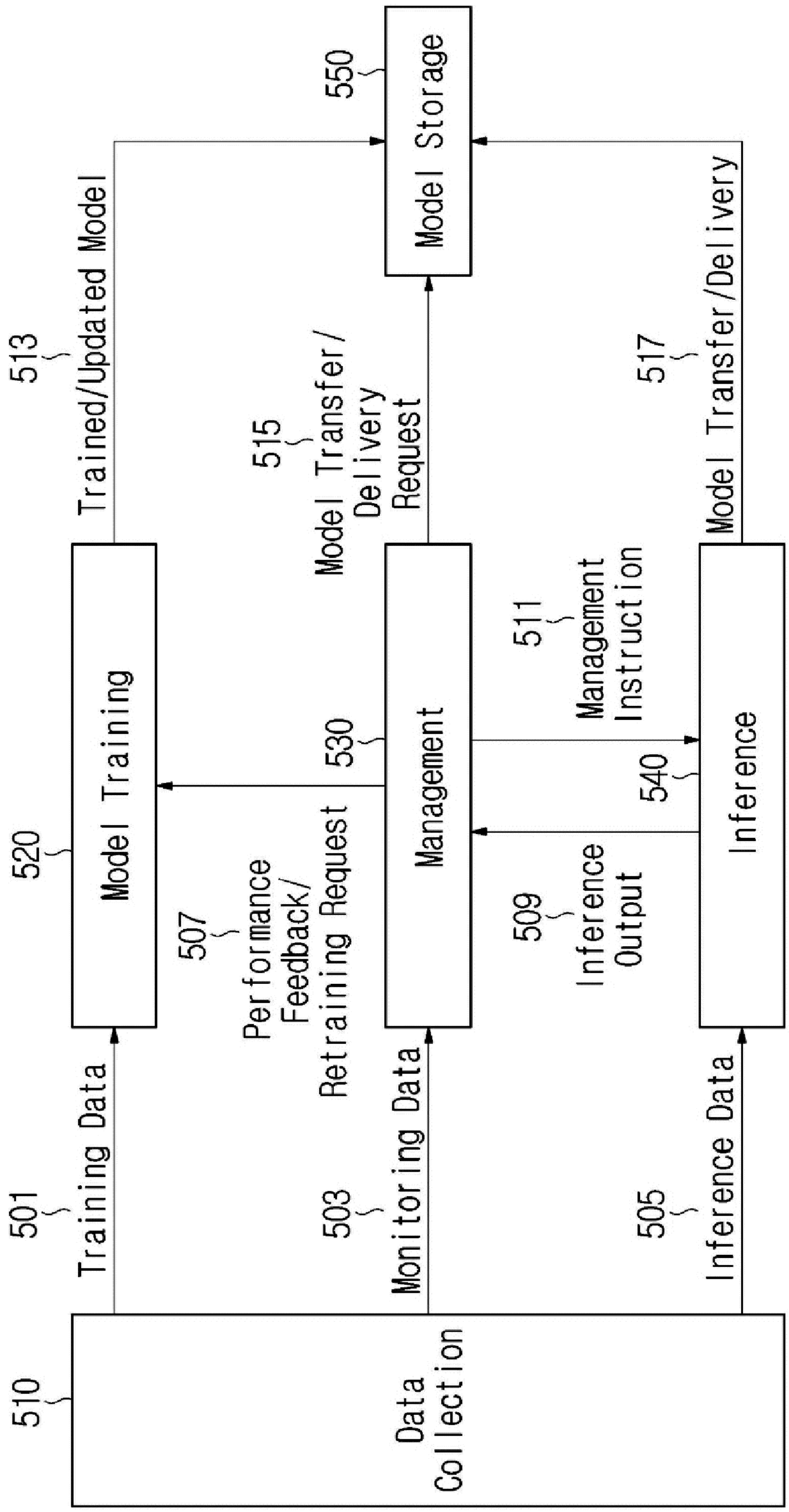
510
Data Collection
501
Training Data
503
Monitoring Data
505
Inference Data
520
Model Training
507
Performance Feedback/ Retraining Request
530
Management
509
Inference Output
511
Management Instruction
540
Inference
513
Trained/Updated Model
515
Model Transfer/ Delivery Request
517
Model Transfer/Delivery
550
Model Storage

FIG. 6

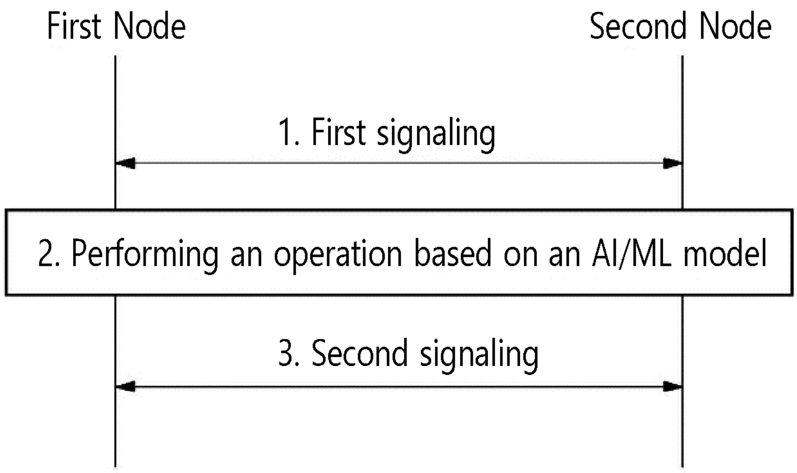
First Node
Second Node
1. First signaling
2. Performing an operation based on an AI/ML model
3. Second signaling

FIG. 7

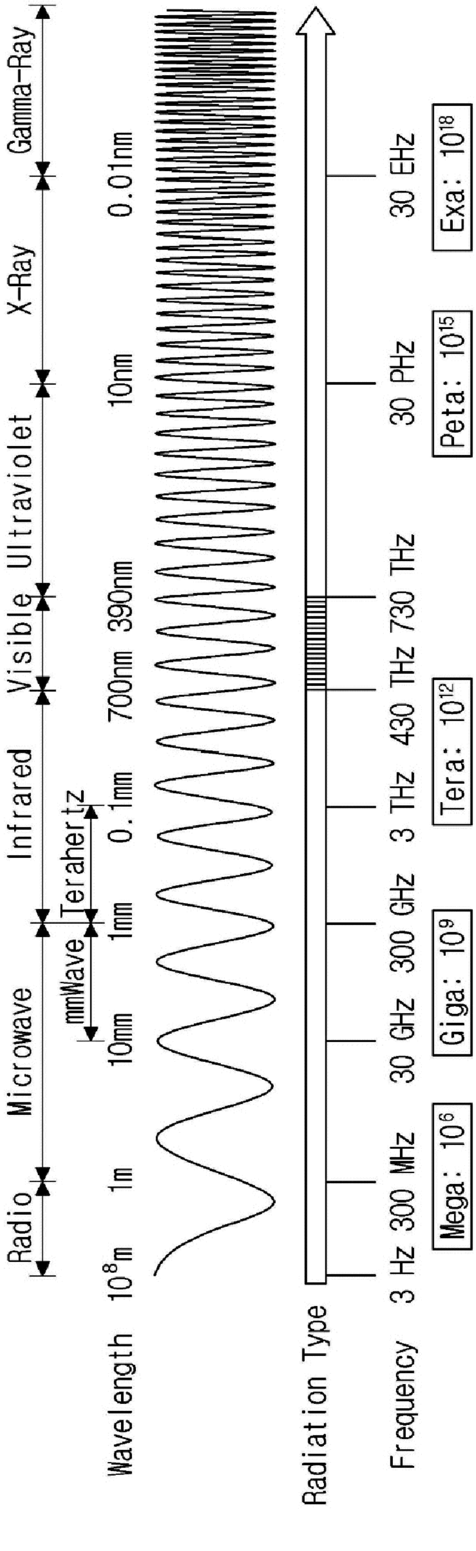
Wavelength
Radio
Microwave
Infrared
Visible
Ultraviolet
X-Ray
Gamma-Ray
mmWave
Terahertz
$10^8$m
1m
10mm
1mm
0.1mm
700nm
390nm
10nm
0.01nm
Radiation Type
Frequency
3 Hz
300 MHz
30 GHz
300 GHz
3 THz
430 THz
730 THz
30 PHz
30 EHz
Mega: $10^6$
Giga: $10^9$
Tera: $10^{12}$
Peta: $10^{15}$
Exa: $10^{18}$

FIG. 8

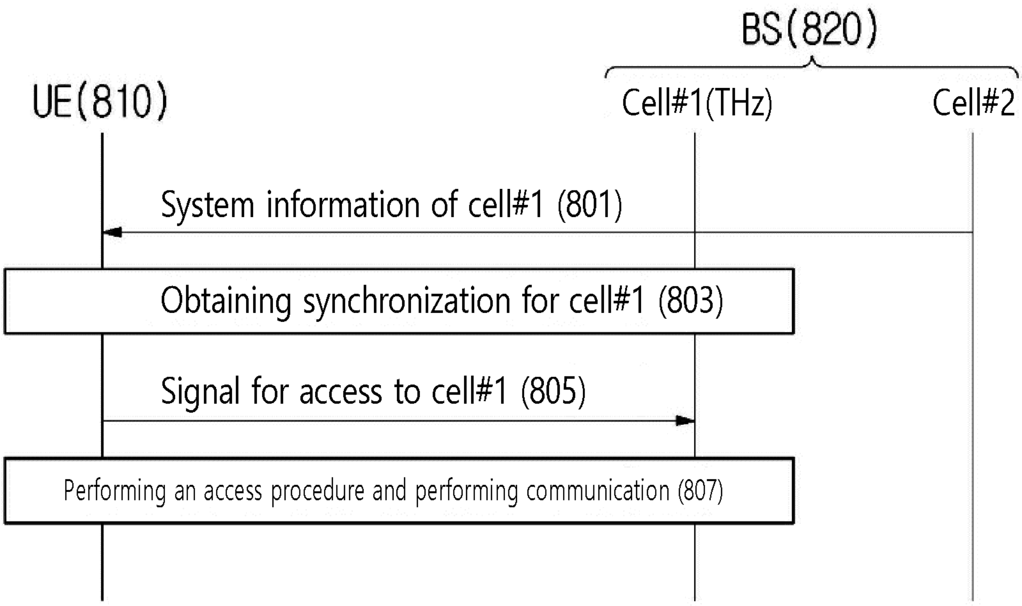
BS(820)
UE(810)
Cell#1(THz)
Cell#2
System information of cell#1 (801)
Obtaining synchronization for cell#1 (803)
Signal for access to cell#1 (805)
Performing an access procedure and performing communication (807)

FIG. 9

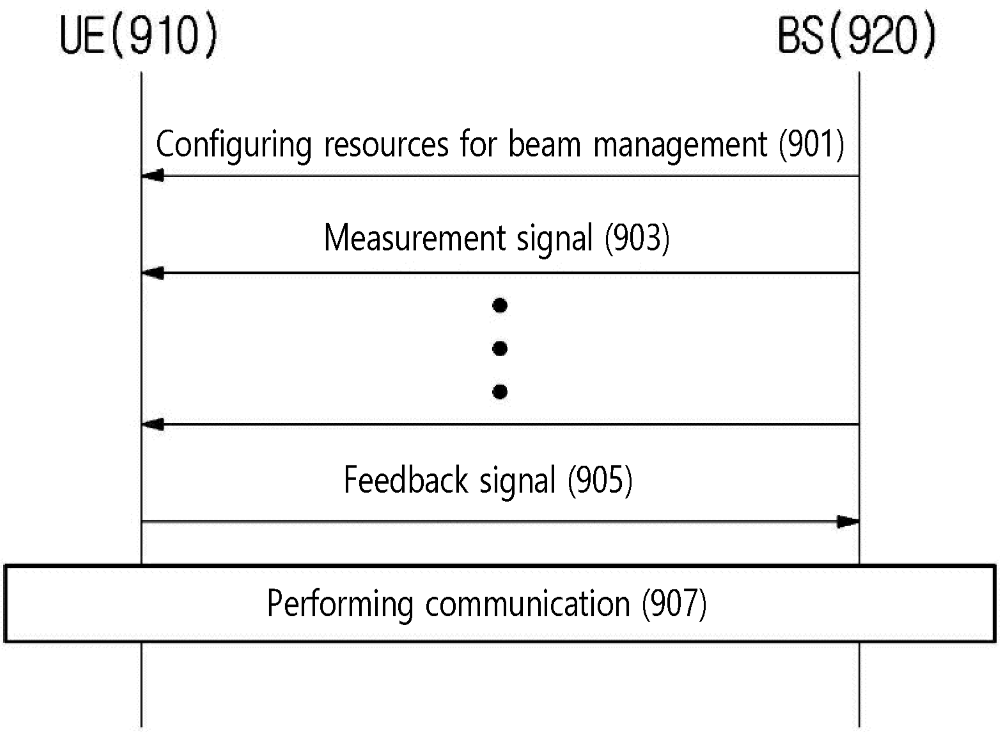
UE(910)
BS(920)
Configuring resources for beam management (901)
Measurement signal (903)
Feedback signal (905)
Performing communication (907)

FIG. 10a

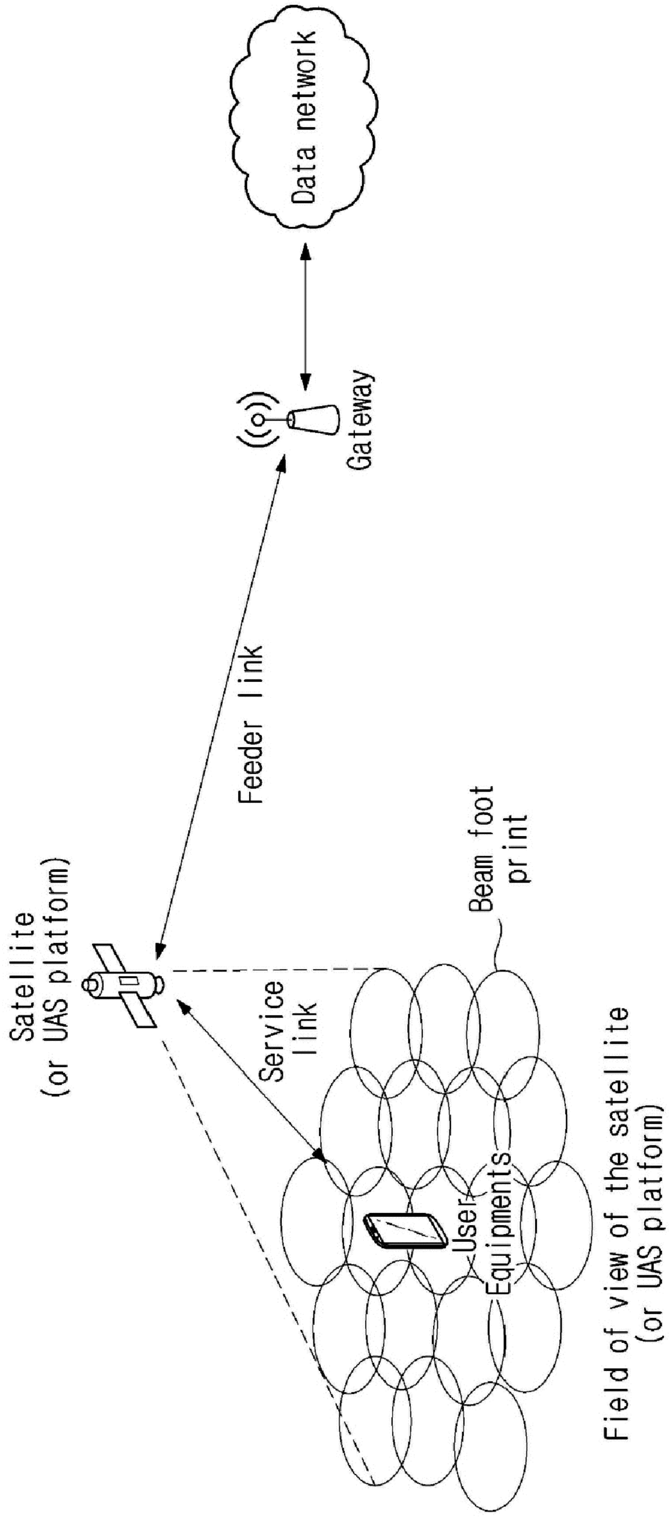
Data network
Gateway
Feeder link
Satellite
(or UAS platform)
Service
link
Beam foot
print
User
Equipments
Field of view of the satellite
(or UAS platform)

FIG. 10b

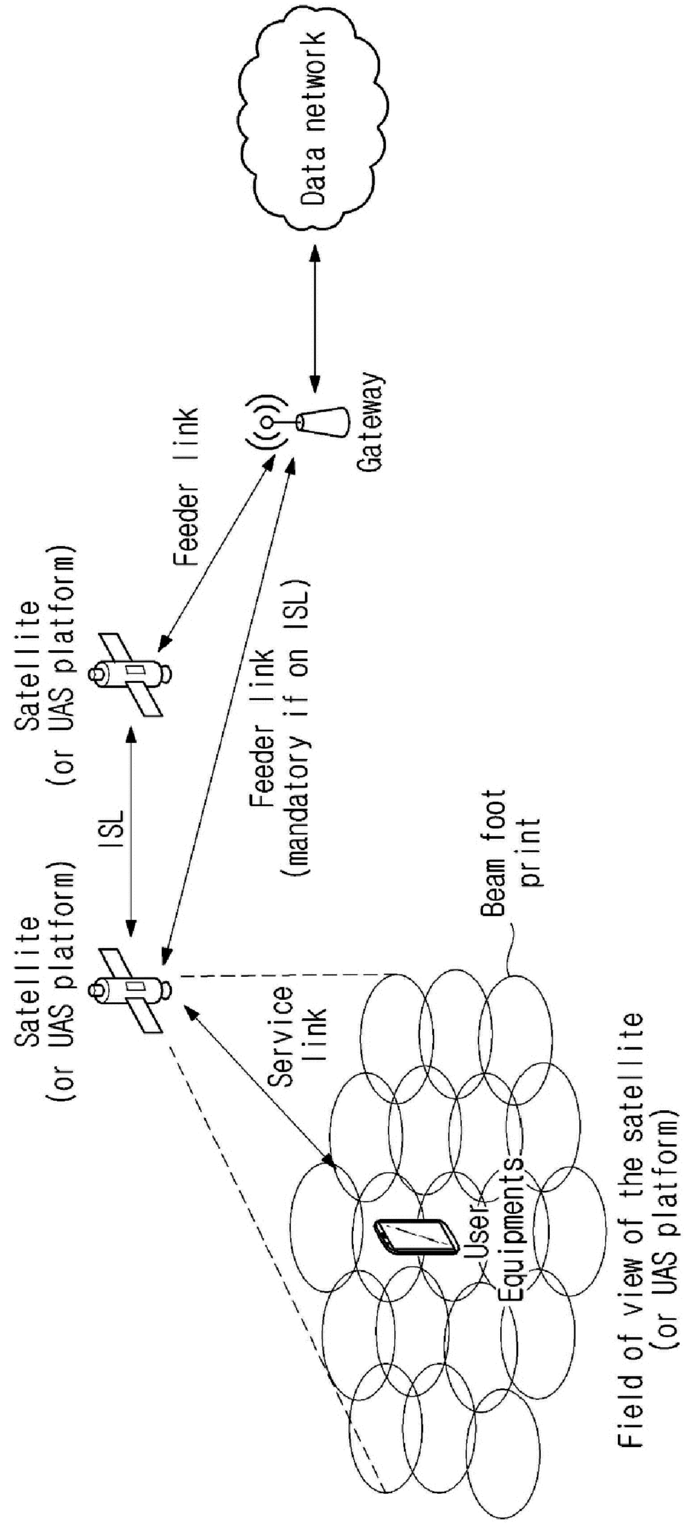
Satellite
(or UAS platform)
ISL
Satellite
(or UAS platform)
Feeder link
Feeder link
(mandatory if on ISL)
Gateway
Data network
Service
link
Beam foot
print
User
Equipments
Field of view of the satellite
(or UAS platform)

# FIG. 11a

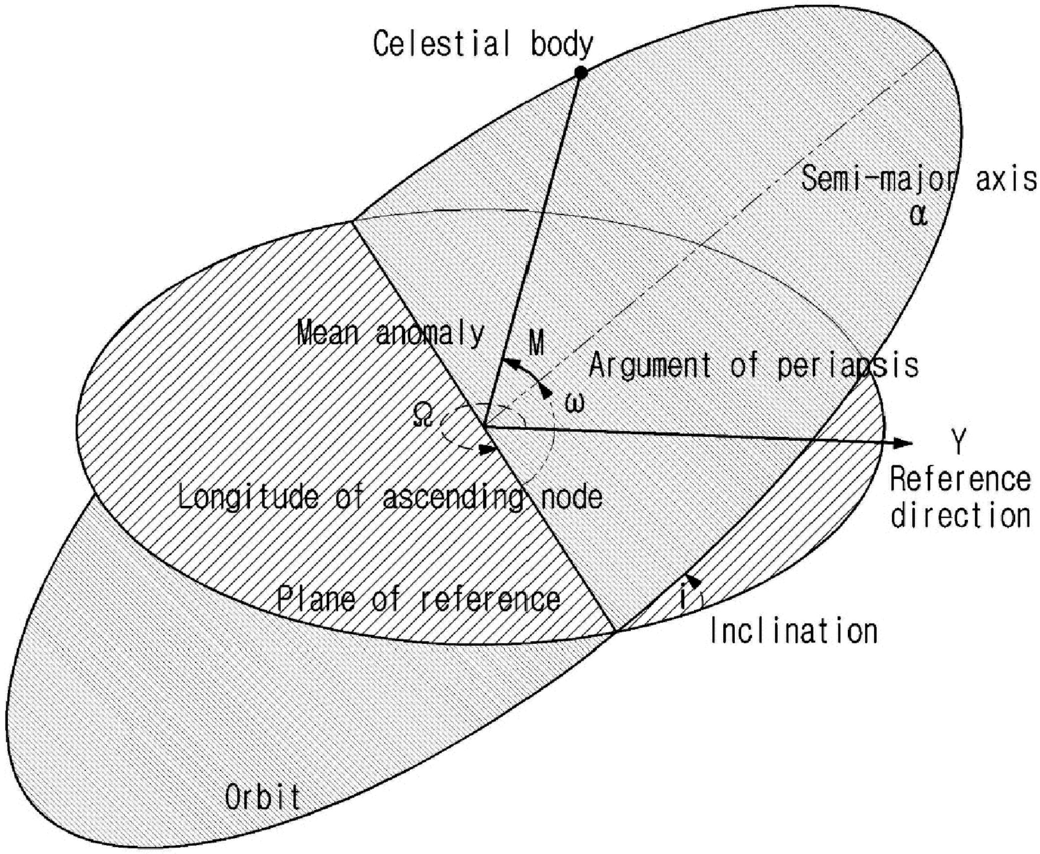
Celestial body
Semi-major axis
α
Mean anomaly
M
Argument of periapsis
Ω
ω
Y
Reference direction
Longitude of ascending node
Plane of reference
i
Inclination
Orbit

# FIG. 11b

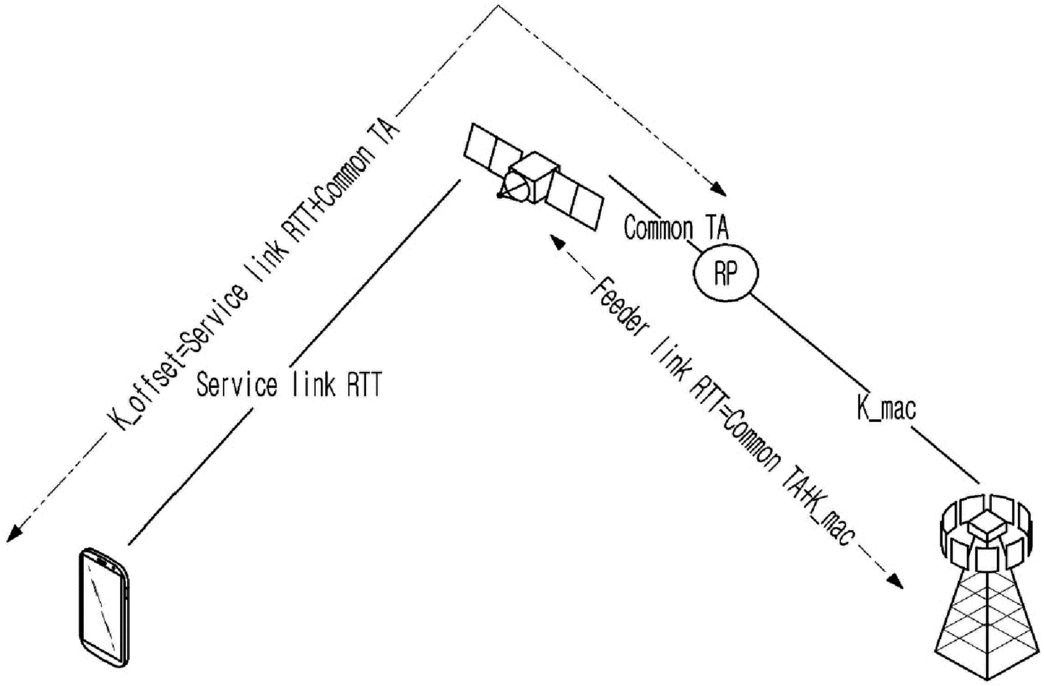


# FIG. 11c

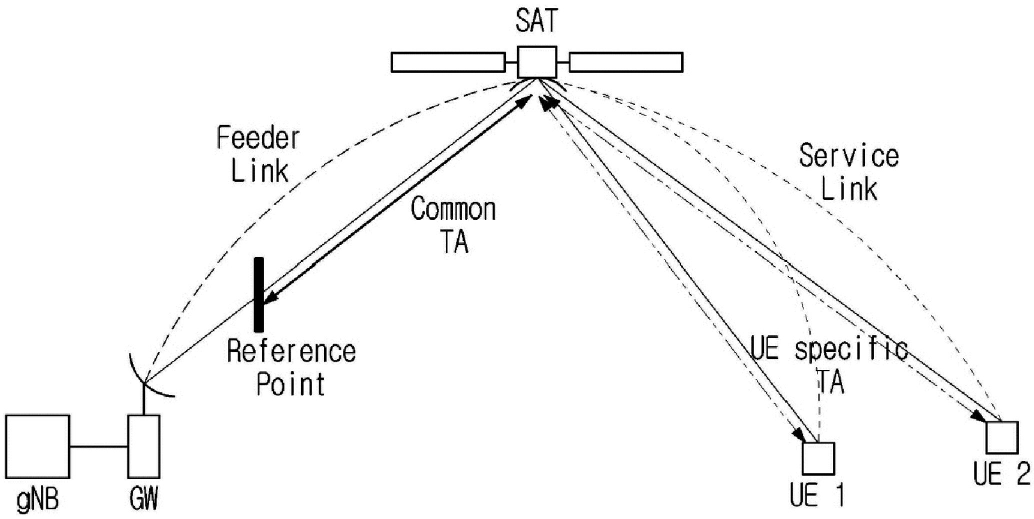

FIG. 12a

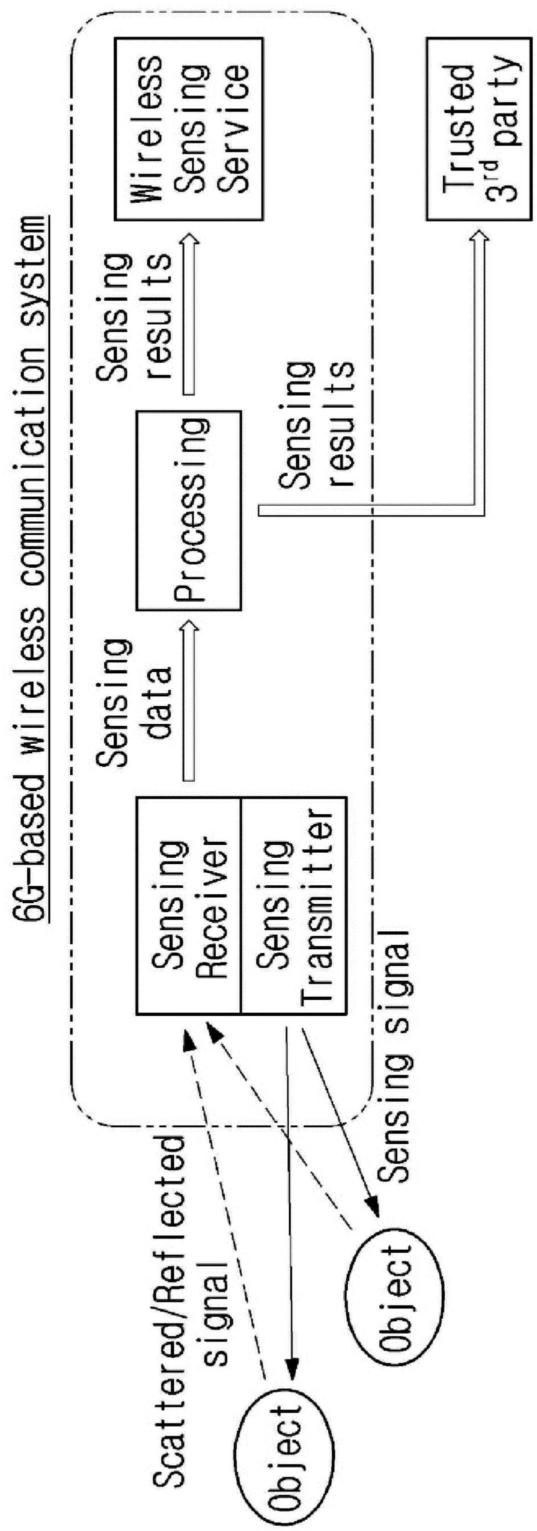
6G-based wireless communication system
Wireless Sensing Service
Trusted 3rd party
Sensing results
Processing
Sensing results
Sensing data
Sensing Receiver
Sensing Transmitter
Sensing signal
Sensing signal
Scattered/Reflected signal
Object
Object

FIG. 12b

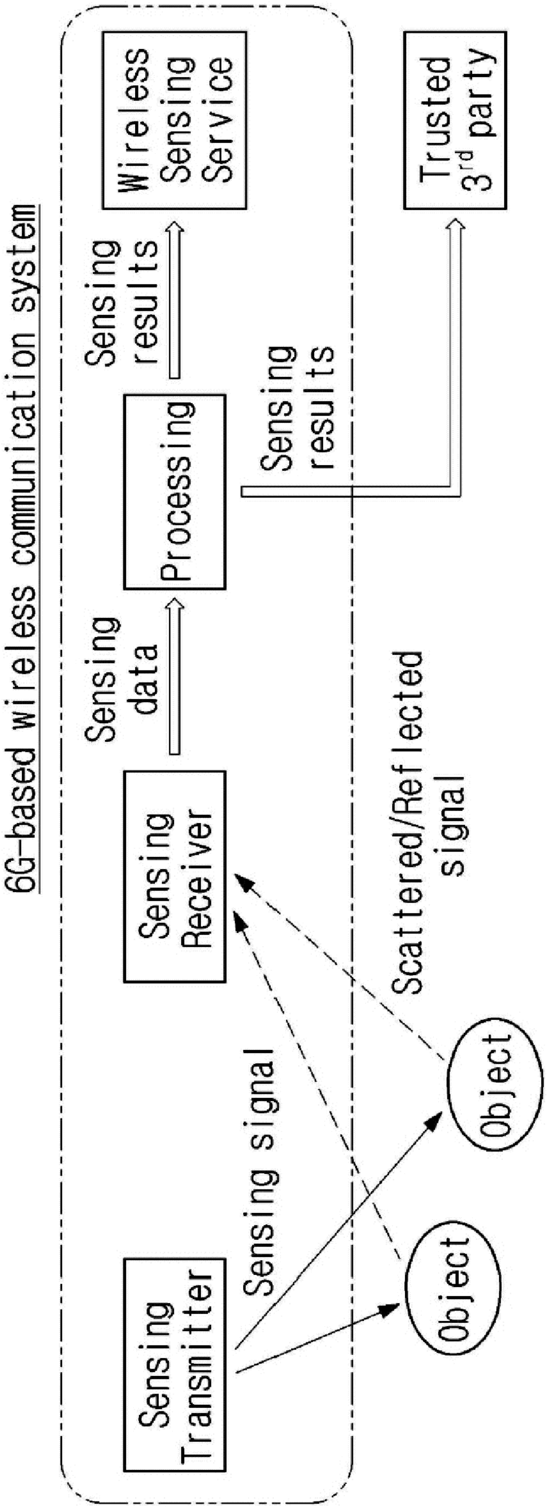
6G-based wireless communication system
Sensing Transmitter
Sensing signal
Object
Object
Scattered/Reflected signal
Sensing Receiver
Sensing data
Processing
Sensing results
Wireless Sensing Service
Sensing results
Trusted 3rd party

FIG. 13

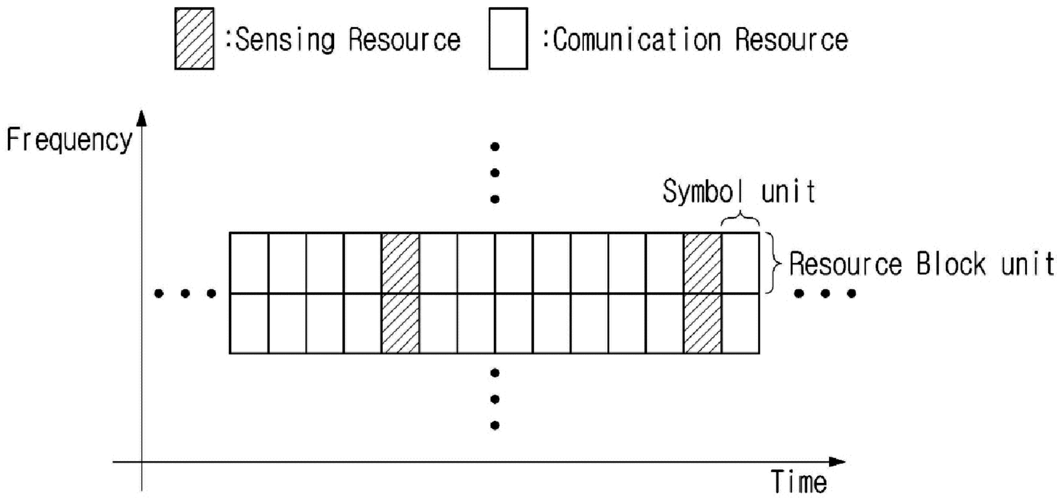
:Sensing Resource
:Comunication Resource
Frequency
Symbol unit
Resource Block unit
Time

FIG. 14

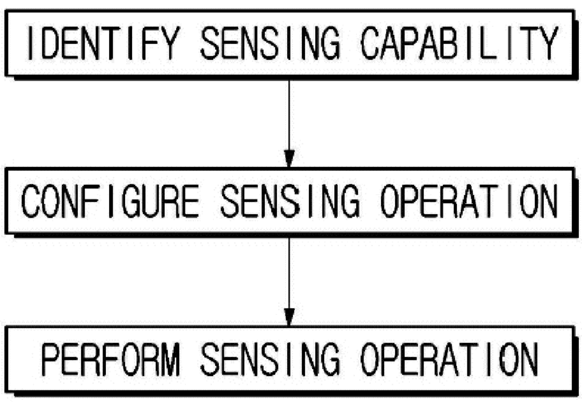
IDENTIFY SENSING CAPABILITY
CONFIGURE SENSING OPERATION
PERFORM SENSING OPERATION

FIG. 15

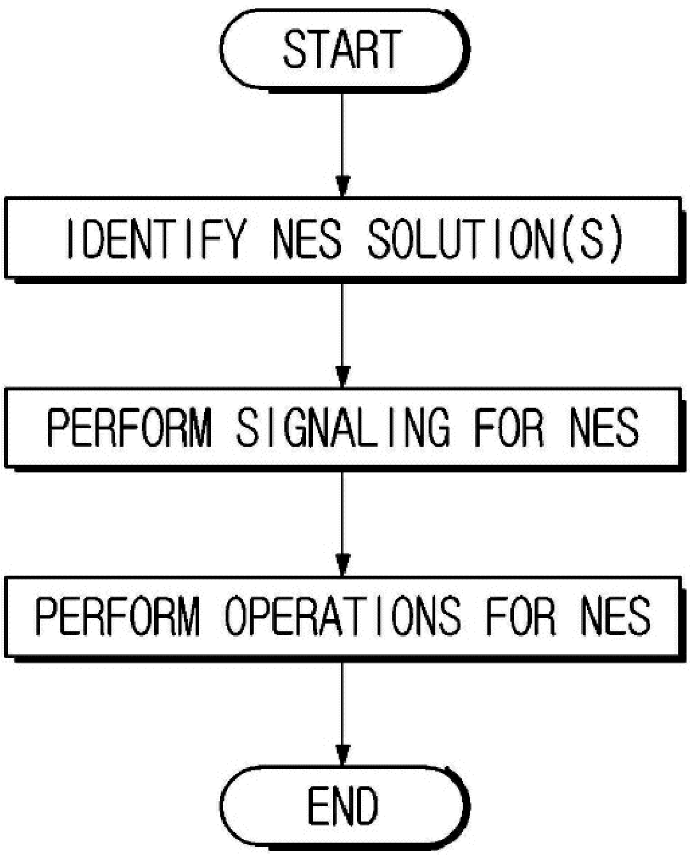
START
IDENTIFY NES SOLUTION(S)
PERFORM SIGNALING FOR NES
PERFORM OPERATIONS FOR NES
END

FIG. 16

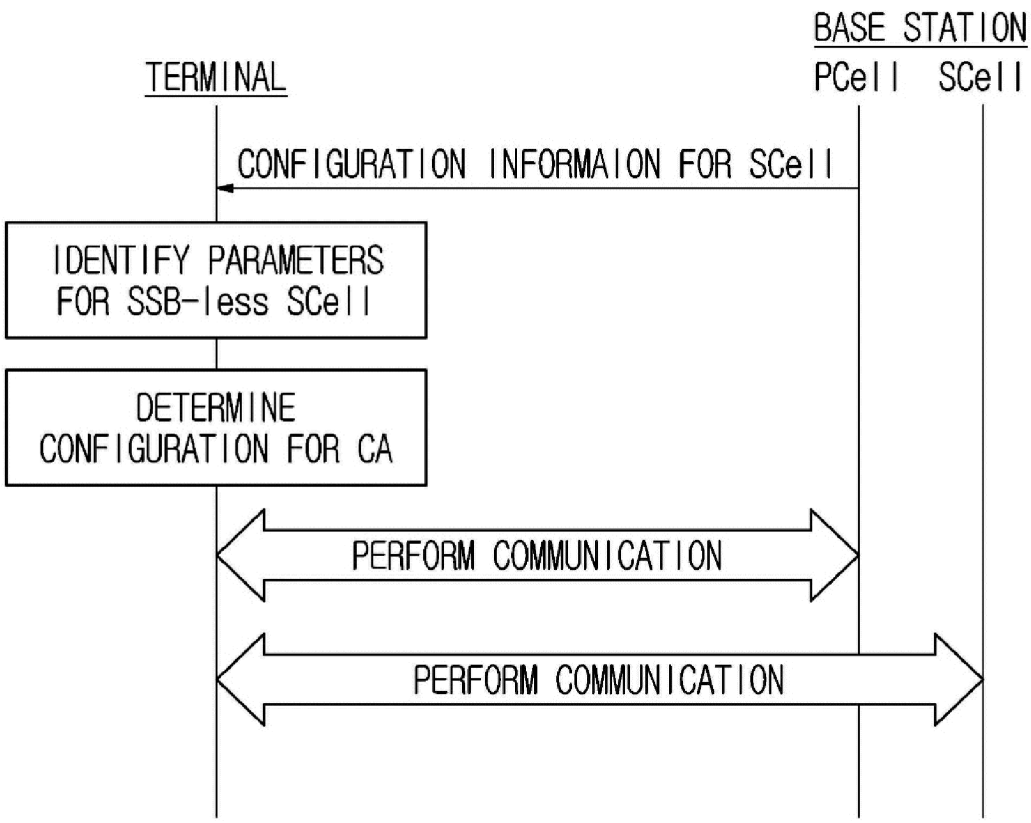
BASE STATION
TERMINAL
PCell
SCell
CONFIGURATION INFORMAION FOR SCell
IDENTIFY PARAMETERS FOR SSB-less SCell
DETERMINE CONFIGURATION FOR CA
PERFORM COMMUNICATION
PERFORM COMMUNICATION

FIG. 17a

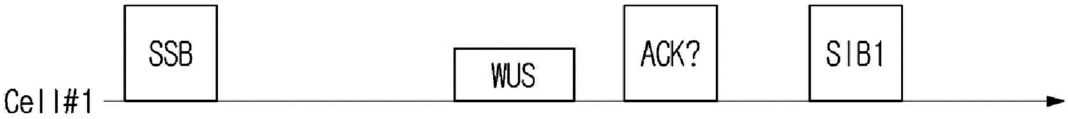


FIG. 17b

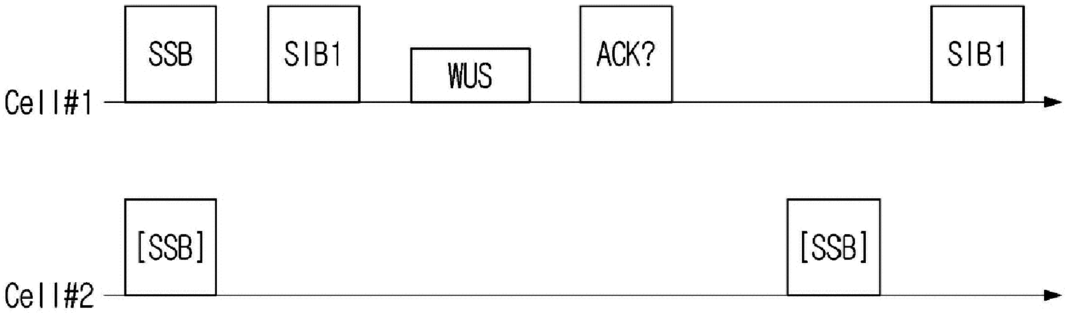

FIG. 17c

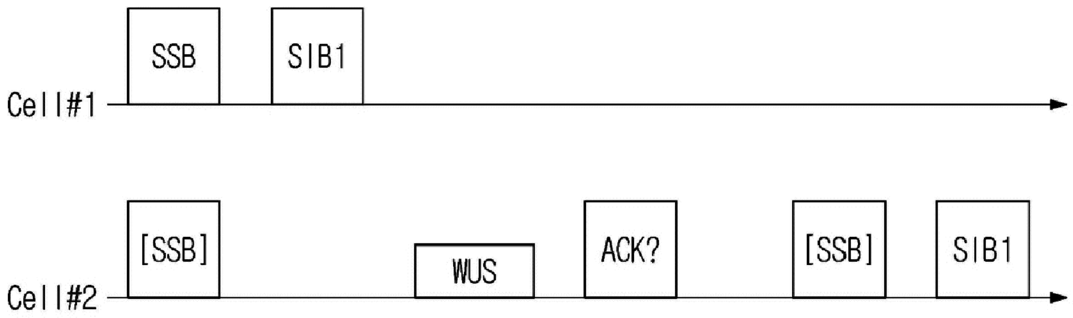


FIG. 18

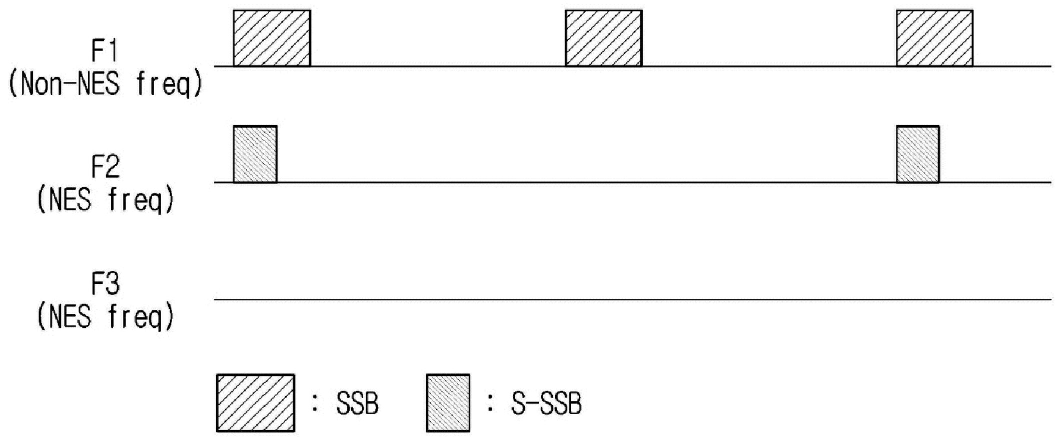

FIG. 19

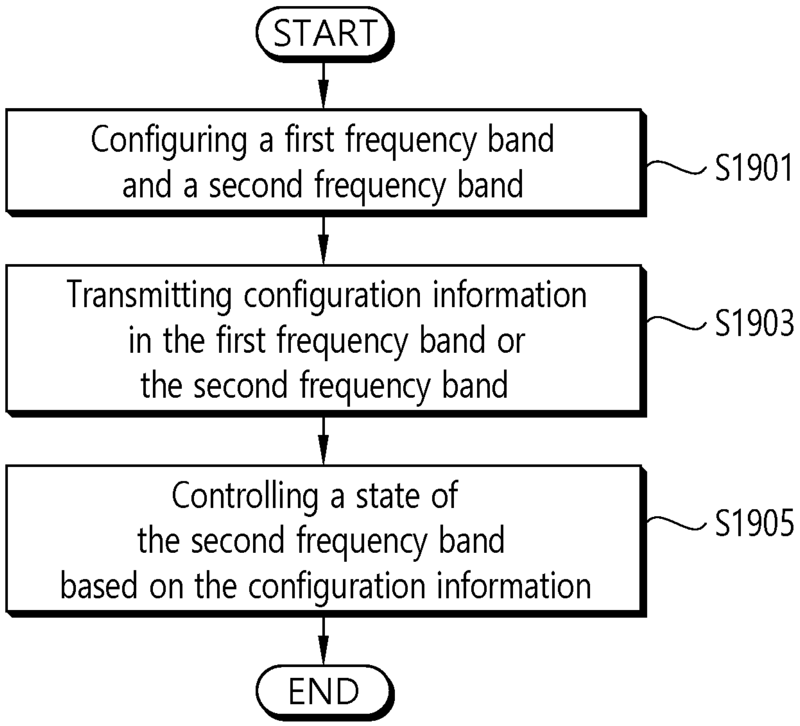
START
Configuring a first frequency band and a second frequency band
S1901
Transmitting configuration information in the first frequency band or the second frequency band
S1903
Controlling a state of the second frequency band based on the configuration information
S1905
END

FIG. 20

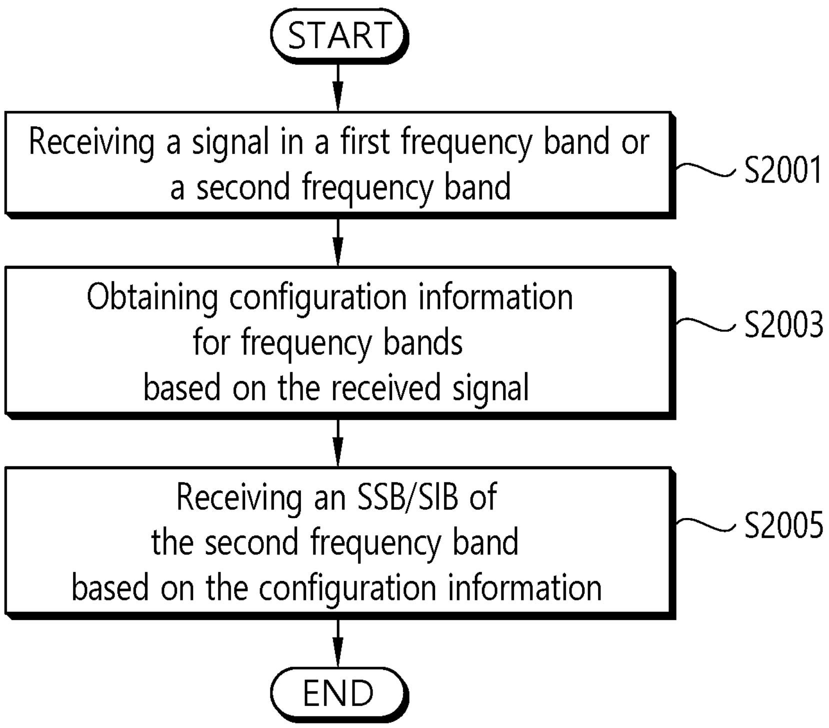
START
Receiving a signal in a first frequency band or a second frequency band
S2001
Obtaining configuration information for frequency bands based on the received signal
S2003
Receiving an SSB/SIB of the second frequency band based on the configuration information
S2005
END

FIG. 21

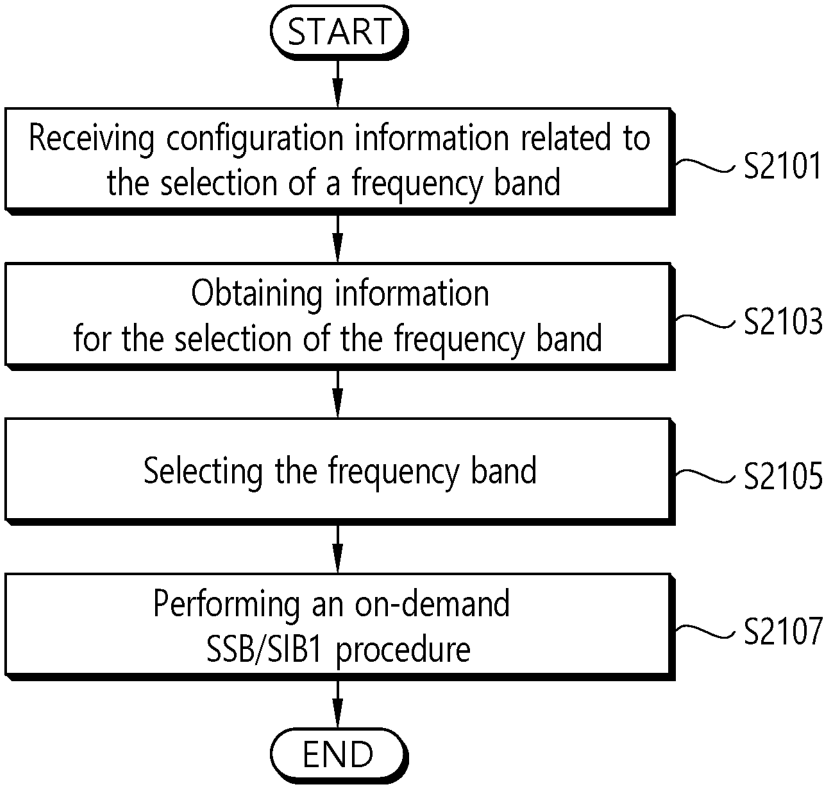
START
Receiving configuration information related to the selection of a frequency band
S2101
Obtaining information for the selection of the frequency band
S2103
Selecting the frequency band
S2105
Performing an on-demand SSB/SIB1 procedure
S2107
END

FIG. 22

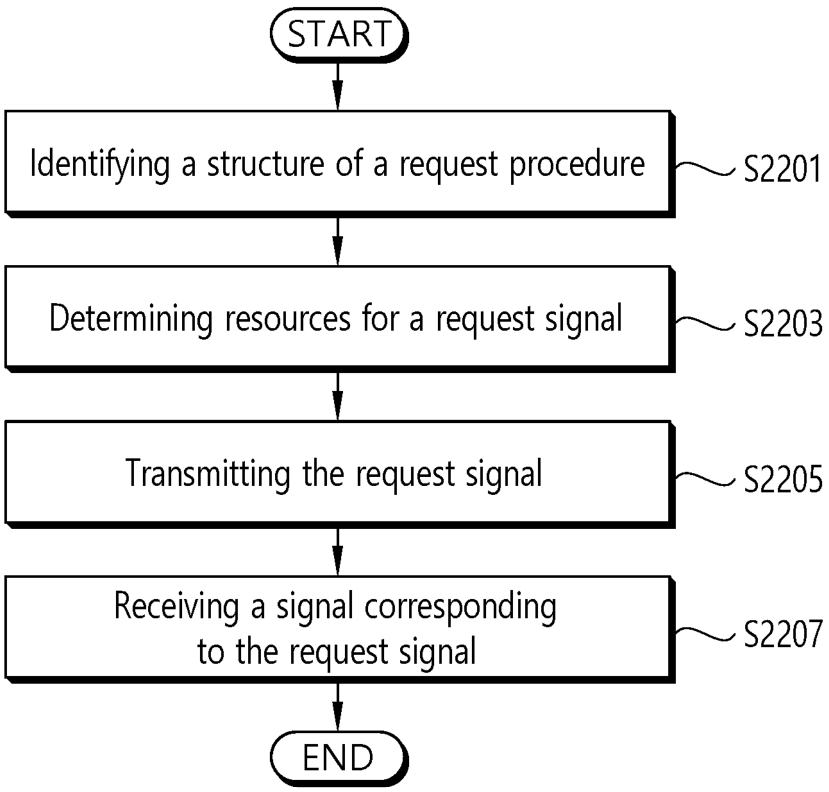
START
Identifying a structure of a request procedure
S2201
Determining resources for a request signal
S2203
Transmitting the request signal
S2205
Receiving a signal corresponding to the request signal
S2207
END

FIG. 23

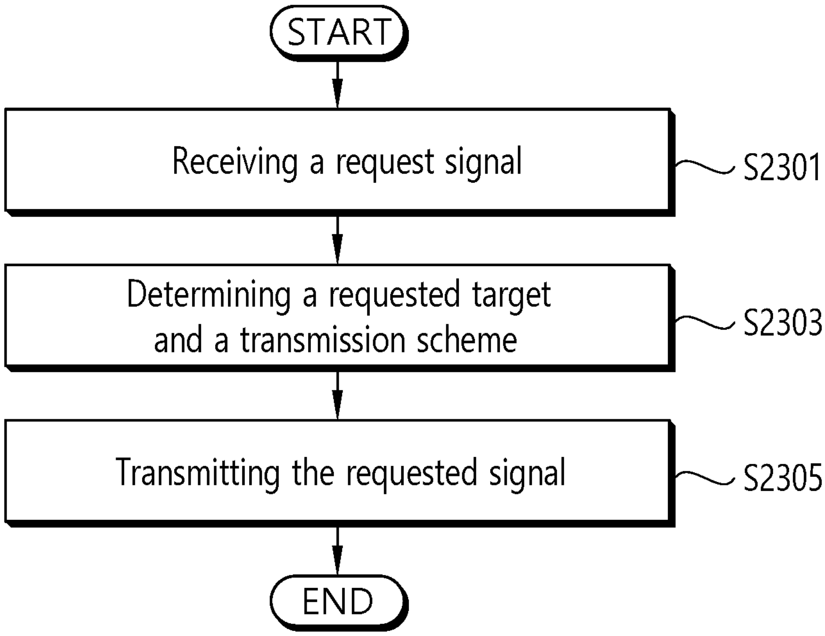
START
Receiving a request signal
S2301
Determining a requested target and a transmission scheme
S2303
Transmitting the requested signal
S2305
END

FIG. 24

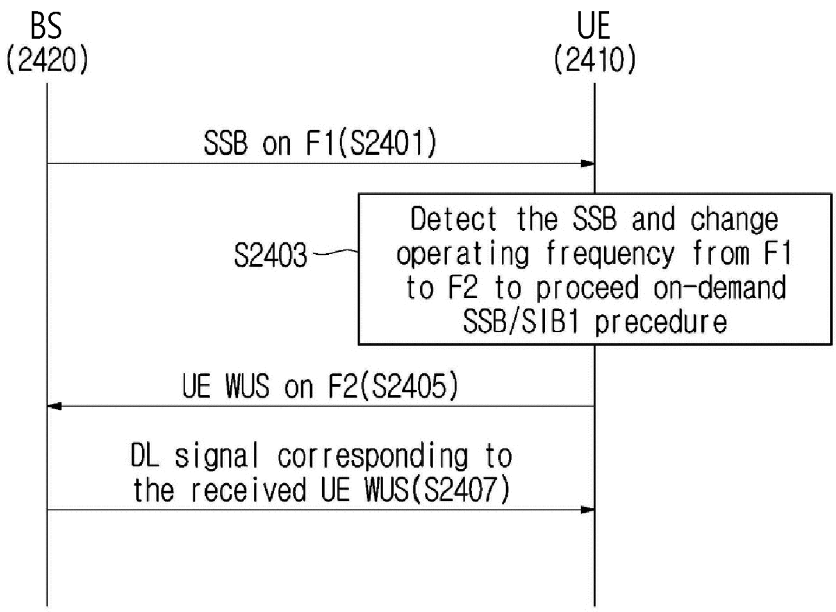
BS (2420)
UE (2410)
SSB on F1(S2401)
S2403
Detect the SSB and change operating frequency from F1 to F2 to proceed on-demand SSB/SIB1 precedure
UE WUS on F2(S2405)
DL signal corresponding to the received UE WUS(S2407)

**INTERNATIONAL SEARCH REPORT**

International application No.
**PCT/KR2024/011666**

**A. CLASSIFICATION OF SUBJECT MATTER**

**H04W 48/14**(2009.01)i; **H04W 48/10**(2009.01)i; **H04W 72/0453**(2023.01)i; **H04W 52/02**(2009.01)i; **H04W 24/08**(2009.01)i; **H04B 17/318**(2015.01)i; **H04W 8/22**(2009.01)i; **H04W 72/02**(2009.01)i; **H04B 17/373**(2015.01)i

According to International Patent Classification (IPC) or to both national classification and IPC

**B. FIELDS SEARCHED**

Minimum documentation searched (classification system followed by classification symbols)

H04W 48/14(2009.01); H04W 16/28(2009.01); H04W 48/10(2009.01); H04W 56/00(2009.01); H04W 72/04(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: NES(network energy saving), 온-디맨드(on-demand), 캠프 온(camp on), 시스템 정보(system information), 동기 신호 블록(synchronization signal block, SSB), 주파수(frequency)

**C. DOCUMENTS CONSIDERED TO BE RELEVANT**

| Category* | Citation of document, with indication, where appropriate, of the relevant passages | Relevant to claim No. |
|---|---|---|
| Y | US 2022-0104109 A1 (QUALCOMM INCORPORATED) 31 March 2022 (2022-03-31) See paragraphs [0138], [0145] and [0151]-[0152]; and claims 1-2, 8-9, 11-13, 15 and 17-18. | 1-20 |
| Y | US 2022-0394638 A1 (VIVO MOBILE COMMUNICATION CO., LTD.) 08 December 2022 (2022-12-08) See paragraphs [0045], [0055], [0060] and [0093]-[0095]; and claims 1 and 4. | 1-20 |
| Y | US 2021-0345230 A1 (SONY GROUP CORPORATION) 04 November 2021 (2021-11-04) See paragraphs [0052]-[0054]. | 7-9,15-16 |
| A | WO 2023-277775 A1 (TELEFONAKTIEBOLAGET LM ERICSSON (PUBL)) 05 January 2023 (2023-01-05) See claims 1-9. | 1-20 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 November 2024** | **08 November 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

INTERNATIONAL SEARCH REPORT

International application No.
PCT/KR2024/011666

C. DOCUMENTS CONSIDERED TO BE RELEVANT

| Category* | Citation of document, with indication, where appropriate, of the relevant passages | Relevant to claim No. |
|---|---|---|
| A | US 2021-0329472 A1 (CHINA MOBILE COMMUNICATION LTD., RESEARCH INSTITUTE et al.) 21 October 2021 (2021-10-21) See claims 1-9. | 1-20 |

Form PCT/ISA/210 (second sheet) (July 2022)

**INTERNATIONAL SEARCH REPORT**
**Information on patent family members**

International application No.
**PCT/KR2024/011666**

| Patent document cited in search report | Publication date (day/month/year) | Patent family member(s) | Publication date (day/month/year) |
|---|---|---|---|
| US 2022-0104109 A1 | 31 March 2022 | CN 116210281 A | 02 June 2023 |
| | | EP 4218303 A1 | 02 August 2023 |
| | | US 12089139 B2 | 10 September 2024 |
| | | WO 2022-066405 A1 | 31 March 2022 |
| US 2022-0394638 A1 | 08 December 2022 | CN 113225801 A | 06 August 2021 |
| | | CN 113225801 B | 21 July 2023 |
| | | EP 4102898 A1 | 14 December 2022 |
| | | EP 4102898 A4 | 12 July 2023 |
| | | WO 2021-155809 A1 | 12 August 2021 |
| US 2021-0345230 A1 | 04 November 2021 | EP 3692760 A1 | 12 August 2020 |
| | | US 11102710 B2 | 24 August 2021 |
| | | US 11659477 B2 | 23 May 2023 |
| | | US 12075340 B2 | 27 August 2024 |
| | | US 2020-0245231 A1 | 30 July 2020 |
| | | US 2024-0089834 A1 | 14 March 2024 |
| | | WO 2019-068795 A1 | 11 April 2019 |
| WO 2023-277775 A1 | 05 January 2023 | EP 4364468 A1 | 08 May 2024 |
| | | JP 2024-528546 A | 30 July 2024 |
| | | KR 10-2024-0023648 A | 22 February 2024 |
| | | US 2024-0306079 A1 | 12 September 2024 |
| US 2021-0329472 A1 | 21 October 2021 | CN 110798844 A | 14 February 2020 |
| | | CN 110798844 B | 08 April 2022 |
| | | EP 3833132 A1 | 09 June 2021 |
| | | EP 3833132 B1 | 09 October 2024 |
| | | US 11895509 B2 | 06 February 2024 |
| | | WO 2020-024875 A1 | 06 February 2020 |

Form PCT/ISA/210 (patent family annex) (July 2022)